# EUROPÄISCHE PATENTANMELDUNG

(11) **EP 4 378 624 A1**
(43) Veröffentlichungstag der Anmeldung: **05.06.2024**
(21) Anmeldenummer: 24166768.2
(22) Anmeldetag: 14.08.2019
(51) Int. Cl.: B24B 13/00, B24B 27/00, B24B 41/00, B23Q 7/14, B23Q 41/02, B24B 49/00, B29D 11/00

(54) **BEARBEITUNGSSYSTEM ZUR BEARBEITUNG VON BRILLENGLÄSERN**

(30) Priorität: 04.09.2018 DE 102018006983; 14.09.2018 DE 102018007254; 24.09.2018 DE 102018007494
(62) Teilanmeldung aus: 19758881.7
(71) Anmelder: Schneider GmbH & Co. KG, 35112 Fronhausen (DE)
(72) Erfinder: SCHNEIDER, Gunter, 35037 Marburg (DE)
(74) Vertreter: Von Rohr Patentanwälte Partnerschaft mbB

(57) **Zusammenfassung**

Es werden ein Bearbeitungssystem zur Bearbeitung von Brillengläsern sowie ein Verfahren zum Bearbeiten von Brillengläsern vorgeschlagen. Das Bearbeitungssystem weist mehrere Bearbeitungsstationen, insbesondere eine Frässtation, eine Drehstation, eine Polierstation, eine Reinigungsstation und/oder eine Signierstation, auf. Des Weiteren weist das Bearbeitungssystem ein Transportsystem zum Transport der Brillengläser bzw. von Transportbehältern für die Brillengläser auf. Das Bearbeitungssystem weist vorzugsweise auch ein gemeinsames Grundgestell und/oder eine gemeinsame Verkleidung für die Bearbeitungsstationen auf. In dem Bearbeitungssystem bzw. mit dem Verfahren können mehrere Brillengläser gleichzeitig in verschiedenen Bearbeitungsstationen bearbeitet werden.

## Beschreibung

Die vorliegende Erfindung betrifft ein Bearbeitungssystem zur Bearbeitung von Brillengläsern gemäß dem Oberbegriff des Anspruchs 1 sowie ein Verfahren zum Bearbeiten von Brillengläsern gemäß dem Oberbegriff des Anspruchs 13.

Aus dem Stand der Technik sind zahlreiche Lösungen zur Bearbeitung optischer Linsen bzw. zur Bearbeitung von Brillengläsern bekannt.

Aus der WO 2013/131656 A2 sind eine Anlage und ein Verfahren zur Bearbeitung optischer Linsen bekannt. Die Bearbeitung erfolgt mittels verschiedener separater Bearbeitungseinrichtungen zur unabhängigen Bearbeitung der Linsen. Jede Bearbeitungseinrichtung weist eine eigene Fördereinrichtung auf, die von der Bearbeitungseinrichtung selbst gesteuert wird. Zwischen den Bearbeitungseinrichtungen ist jeweils eine Transfereinrichtung angeordnet. Ein Transfer von Linsen zwischen den Bearbeitungseinrichtungen erfolgt bevorzugt durch Förderbänder. Die Anlage ermöglicht eine sehr flexible und auf verschiedene Bedürfnisse anpassbare Bearbeitung von Linsen. In bestimmen Anwendungsbereichen ist jedoch ein Bearbeitungssystem mit geringerem Platzbedarf wünschenswert.

Aus der DE 10 2005 057 725 A1 ist eine Vorrichtung zum Fräsen, Drehen und Polieren von Linsen bekannt. Die Vorrichtung weist eine bewegbar gelagerte Werkstückspindel auf, sodass eine von der Werkstückspindel gehaltene Linse nacheinander mit einem Fräswerkzeug und einem Drehwerkzeug bearbeitet und anschließend poliert werden kann. In der Vorrichtung können daher nicht mehrere Linsen gleichzeitig bearbeitet werden.

Aus der EP 1 554 082 B1 ist ein Verfahren zum Polieren und Signieren von optischen Gläsern bekannt, wobei die Schritte des Polierens und Signierens in einer gemeinsamen Fertigungszelle ausgeführt werden und die Gläser beim Polieren und Signieren von demselben Roboter gehandhabt werden. Die Fertigungszelle weist eine Polierstation, eine Waschstation und eine Signierstation auf. Insbesondere betrifft diese Schrift einen Fertigungsprozess, der nach einer formgebenden Bearbeitung durch Schleifen oder Drehen stattfindet. Sämtliche Handhabungsvorgänge zwischen einzelnen Stationen wie auch teilweise die Bearbeitungsschritte selbst werden von demselben Roboter ausgeführt. Hierdurch wird für alle Vorgänge innerhalb der Fertigungszelle nur ein einziges Handhabungselement benötigt. Nachteilig ist der geringe Durchsatz.

Die US 2014/228995 A1 offenbart ein Bearbeitungssystem zur Bearbeitung von Brillengläsern mit mehreren Bearbeitungsstationen und einem Transportsystem für die Brillengläser. Mehrere Bearbeitungsstationen können auf einem gemeinsamen Grundgestell angeordnet sein.

Die DE 298 23 464 U1 betrifft eine Anlage zum Formbearbeiten der Ränder von Brillengläsern. Die Anlage weist mehrere Bearbeitungsmaschinen und ein durch Förderbänder gebildetes Transportsystem auf.

Es ist eine Aufgabe der vorliegenden Erfindung, eine Vorrichtung und ein Verfahren anzugeben, wobei ein geringer Platzbedarf besteht, eine möglichst vollständige bzw. umfangreiche Bearbeitung bzw. Oberflächenbearbeitung von Brillengläsern realisierbar ist und/oder ein hoher Durchsatz von bearbeiteten Brillengläsern pro Zeiteinheit erreichbar ist.

Die obige Aufgabe wird durch ein Bearbeitungssystem gemäß Anspruch 1 oder durch ein Verfahren gemäß Anspruch 13 gelöst. Vorteilhafte Weiterbildungen sind Gegenstand der Unteransprüche.

Ein vorschlagsgemäßes Bearbeitungssystem weist mehrere Bearbeitungsstationen auf, die insbesondere gleichzeitig bzw. unabhängig voneinander arbeiten (können). Bevorzugte Beispiele von Bearbeitungsstationen sind eine Frässtation, eine Drehstation, eine Reinigungsstation, eine Polierstation und/oder eine Signierstation. Das Bearbeitungssystem kann eine beliebige Kombination der genannten Bearbeitungsstationen aufweisen, insbesondere auch mehrere gleichartige Stationen, beispielsweise zwei Polierstationen. Durch die mehreren Bearbeitungsstationen wird eine umfangreiche bzw. möglichst vollständige Bearbeitung bzw. Oberflächenbearbeitung (Surfacing) von Brillengläsern in dem Bearbeitungssystem ermöglicht.

Des Weiteren weist das Bearbeitungssystem vorzugsweise ein gemeinsames Grundgestell und/oder ein gemeinsames Gehäuse bzw. eine gemeinsame Verkleidung für die Bearbeitungsstationen auf.

Ein gemeinsames Grundgestell, auf dem eine oder mehrere Bearbeitungsstationen angeordnet sind bzw. welches die Bearbeitungsstation(en) trägt, ermöglicht einen kompakten und einfachen Aufbau des Bearbeitungssystems. Insbesondere werden hierdurch auch ein Transport des Bearbeitungssystems vom Hersteller zum Aufbauort sowie eine Installation und Inbetriebnahme des Bearbeitungssystems am Aufbauort erleichtert.

Die Verkleidung bzw. das Gehäuse ist insbesondere derart ausgebildet, dass die Bearbeitungsstationen hiervon umgeben sind bzw. innerhalb davon angeordnet sind. Hierdurch wird die gewünschte Betriebssicherheit des Bearbeitungssystems erreicht.

Vorzugsweise weist das Bearbeitungssystem ein Transportsystem zum Transport der Brillengläser bzw. von Transportbehältern für die Brillengläser innerhalb des Bearbeitungssystems auf. Hierdurch wird eine vollautomatisierte Förderung und Bearbeitung der Brillengläser in dem Bearbeitungssystem ermöglicht.

Gemäß einem ersten Aspekt der vorliegenden Erfindung ist das Bearbeitungssystem vorzugsweise dazu ausgebildet, verschiedene Brillengläser gleichzeitig in verschiedenen Bearbeitungsstationen zu bearbeiten. Die Bearbeitungsstationen sind dabei ausgewählt aus der Gruppe bestehend aus der Frässtation, der Drehstation und der Polierstation. Mit anderen Worten ist das Bearbeitungssystem vorzugsweise dazu ausgebildet, gleichzeitig verschiedene Brillengläser zu fräsen und drehend zu bearbeiten, gleichzeitig verschiedene Brillengläser zu fräsen und zu polieren, und/oder gleichzeitig verschiedene Brillengläser drehend zu bearbeiten und zu polieren. Dies ist einem hohen Durchsatz zuträglich.

Gemäß einem weiteren, auch unabhängig realisierbaren Aspekt weist das Transportsystem vorzugsweise parallel zueinander verlaufende und vorzugsweise unmittelbar benachbarte bzw. nebeneinander angeordnete Transportabschnitte bzw. Transportvorrichtungen auf. Die Transportvorrichtungen sind vorzugsweise als Förderbänder ausgebildet. Durch die Anordnung der Transportvorrichtungen zueinander werden der "Footprint" bzw. die Aufstellfläche des Bearbeitungssystems minimiert und ein kostengünstiger und kompakter Aufbau des Bearbeitungssystems ermöglicht. Zudem wird der Zugang zu verschiedenen Bearbeitungsstationen, beispielsweise zur Reinigung, Inspektion, Wartung, Instandhaltung, Reparatur oder zum Austausch von Teilen, erleichtert.

Vorzugsweise weisen die Transportvorrichtungen des Transportsystems entgegengesetzte Transportrichtungen auf bzw. werden die Brillengläser bzw. Transportbehälter mit den Brillengläsern in entgegengesetzte Richtungen transportiert. Dies ist einem kompakten Aufbau des Bearbeitungssystems zuträglich.

Alternativ oder zusätzlich sind ein Eingang und ein Ausgang bzw. eine Aufnahme und Abgabe des Transportsystems vorzugsweise unmittelbar zueinander benachbart bzw. nebeneinander und/oder auf der gleichen Seite des Bearbeitungssystems angeordnet. Dies ist einem kompakten Aufbau des Bearbeitungssystems zuträglich.

Die Bearbeitungsstationen sind vorzugsweise zumindest teilweise unterhalb und/oder seitlich, insbesondere auf voneinander abgewandten Seiten, des Transportsystems angeordnet. Dies ist einem kompakten Aufbau und einem leichten Zugang zu den Bearbeitungsstationen, beispielsweise zur Inspektion, Wartung, Instandhaltung oder Reparatur, zuträglich.

Gemäß einem weiteren, auch unabhängig realisierbaren Aspekt der vorliegenden Erfindung weist das Grundgestell vorzugsweise mehrere, insbesondere zwei, miteinander verbindbare Teilgestelle auf, die jeweils ein Grundgestell für eine oder mehrere Bearbeitungsstationen bilden. Insbesondere sind die Teilgestelle vor Ort, also an einem Ort, an dem das Bearbeitungssystem aufgebaut wird bzw. in Betrieb genommen wird, miteinander verbindbar. Hierdurch wird bzw. werden ein Transport bzw. eine Anlieferung des Bearbeitungssystems erleichtert und/oder die diesbezüglichen Kosten reduziert. Außerdem kann so der Aufbau bzw. die Inbetriebnahme des Bearbeitungssystems beschleunigt und/oder erleichtert werden.

Gemäß einem weiteren, auch unabhängig realisierbaren Aspekt weist das Bearbeitungssystem vorzugsweise mindestens eine Handhabungsvorrichtung für die Brillengläser und/oder für Werkzeuge zur Bearbeitung der Brillengläser auf. Die Handhabungsvorrichtung ist vorzugsweise parallel zu dem Transportsystem verfahrbar und/oder mehreren Bearbeitungsstationen zugeordnet. Dies ist einem kompakten Aufbau bzw. geringen Platzbedarf des Bearbeitungssystems zuträglich. Darüber hinaus werden hierdurch die Kosten für das Bearbeitungssystem gesenkt und ein optimaler Verfahrensablauf bzw. ein hoher Durchsatz ermöglicht.

Das Bearbeitungssystem weist vorzugsweise mehrere gemäß dem obigen Aspekt ausgebildete Handhabungsvorrichtungen auf, insbesondere eine oder mehrere (unabhängige) Handhabungsvorrichtungen für die Brillengläser und mindestens eine Handhabungsvorrichtung für Werkzeuge zur Bearbeitung der Brillengläser, insbesondere Polierwerkzeuge. Hierdurch werden eine effiziente Bearbeitung und hoher Durchsatz ermöglicht.

Nachfolgend werden einige bevorzugte Aspekte der Handhabungsvorrichtungen erläutert, wobei die nachfolgend erläuterten Merkmale auch gemeinsam in einer oder mehreren Handhabungsvorrichtungen realisiert sein können. Dies wird insbesondere in der späteren Beschreibung mit Bezug auf die Zeichnungen deutlich.

Das Bearbeitungssystem weist vorzugsweise eine Handhabungsvorrichtung auf, die dem Halten von Brillengläsern dient und eine zumindest teilweise oberhalb des Transportsystems und/oder schräg zur Vertikalen verlaufende lineare Bewegungsachse aufweist. Besonders bevorzugt weist die Handhabungsvorrichtung eine Führung bzw. Linearführung auf, die zumindest teilweise oberhalb des Transportsystems und/oder schräg zur Horizontalen angeordnet ist und die Bewegungsachse bildet oder aufweist. Dies ist einem kompakten Aufbau des Bearbeitungssystems zuträglich.

Das Bearbeitungssystem weist vorzugsweise mehrere unabhängige Handhabungsvorrichtungen auf, die insbesondere zumindest im Wesentlichen oberhalb des Transportsystems angeordnet sind. Dies ist einem kompakten Aufbau des Bearbeitungssystems zuträglich.

Vorzugsweise weist das Bearbeitungssystem eine Handhabungsvorrichtung auf, die zur Übergabe von Brillengläsern zwischen dem Transportsystem und zwei Bearbeitungsstationen ausgebildet ist. Insbesondere ist die Handhabungsvorrichtung mehreren Bearbeitungsstationen zugeordnet und bevorzugt zur Übergabe von Brillengläsern zwischen dem Transportsystem und jeder der zwei Bearbeitungsstationen und/oder zur Übergabe von Brillengläsern zwischen den zwei Bearbeitungsstationen ausgebildet. Dies ist einem kompakten und kostengünstigen Aufbau des Bearbeitungssystems und einem hohen Durchsatz von Brillengläsern zuträglich.

Insbesondere weist das Bearbeitungssystem eine Handhabungsvorrichtung mit zwei Halteeinrichtungen an einem Schwenkkopf zum Austausch eines Brillenglases an einer Bearbeitungsstation, insbesondere einer Fräs- und/oder Drehstation, auf. Dies ist einem kompakten und kostengünstigen Aufbau des Bearbeitungssystems und einem hohen Durchsatz von Brillengläsern zuträglich.

Es ist bevorzugt, dass das Bearbeitungssystem eine Handhabungsvorrichtung aufweist, die zum gleichzeitigen Austausch von Brillengläsern an zwei Brillenglashalterungen bzw. Spannfuttern - vorzugsweise von Werkstückspindeln - einer Bearbeitungsstation, insbesondere einer Polierstation, ausgebildet ist. Die Handhabungsvorrichtung ist insbesondere dazu ausgebildet, zwei fertig bearbeitete, insbesondere polierte, Brillengläser aus der Bearbeitungsstation bzw. Polierstation gleichzeitig bzw. paarweise zu entnehmen und/oder zwei zu bearbeitende bzw. zu polierende Brillengläser gleichzeitig bzw. paarweise in die Brillenglashalterungen bzw. Spannfutter in die Bearbeitungsstation bzw. Polierstation einzusetzen. Dies ist einem kompakten und kostengünstigen Aufbau des Bearbeitungssystems und einem hohen Durchsatz von Brillengläsern zuträglich.

Das Bearbeitungssystem weist vorzugweise eine Handhabungsvorrichtung mit mehreren Halteeinrichtungen zum Halten von Brillengläsern auf, wobei die Halteeinrichtungen an verschiedenen Armen angeordnet und/oder unabhängig voneinander bewegbar sind. Die Arme sind vorzugsweise parallel zueinander angeordnet und/oder bewegbar, insbesondere linear. Insbesondere ist hierdurch ein schnelles Wechseln von Brillengläsern möglich. Dies ist einem kompakten und kostengünstigen Aufbau des Bearbeitungssystems und einem hohen Durchsatz von Brillengläsern zuträglich.

Das Bearbeitungssystem weist vorzugsweise eine Handhabungsvorrichtung mit zwei Saugern und zwei Greifern - insbesondere Fingergreifern - zum Halten von Brillengläsern auf. Vorzugsweise dienen die Sauger zum Halten von noch zu bearbeitenden, insbesondere noch zu polierenden, Brillengläsern und die Greifer zum Halten von bereits bearbeiteten, insbesondere bereits polierten, Brillengläsern, vorzugsweise nur am Rand. Dies ist einem kompakten und kostengünstigen Aufbau des Bearbeitungssystems und einem hohen Durchsatz von Brillengläsern zuträglich.

Vorzugsweise weist das Bearbeitungssystem eine Handhabungsvorrichtung auf, die zum gleichzeitigen bzw. paarweisen Austausch von Werkzeugen, insbesondere Polierwerkzeugen, an zwei Werkzeughalterungen einer Bearbeitungsstation, insbesondere Polierstation, ausgebildet ist. Dies ist einem kompakten und kostengünstigen Aufbau des Bearbeitungssystems und einem hohen Durchsatz von Brillengläsern zuträglich.

Das Bearbeitungssystem weist vorzugsweise eine Handhabungsvorrichtung mit mehreren Halteeinrichtungen zum Halten von Werkzeugen, insbesondere Polierwerkzeugen, auf, wobei die Halteeinrichtungen an verschiedenen Armen angeordnet und/oder - insbesondere zwei Paare von Halteeinrichtungen - unabhängig voneinander bewegbar sind. Die Arme sind vorzugsweise parallel zueinander angeordnet und/oder bewegbar, insbesondere linear. Dies ist einem schnellen Wechsel und daher einem hohen Durchsatz von Brillengläsern zuträglich.

Das Bearbeitungssystem weist bevorzugt eine Handhabungsvorrichtung zum Austausch von Werkzeugen, insbesondere Polierwerkzeugen, auf, die zwei Polierstationen zugeordnet und/oder zwischen zwei Bearbeitungs- bzw. Polierstationen angeordnet und/oder verfahrbar ist. Dies ist einem kompakten und kostengünstigen Aufbau des Bearbeitungssystems und einem hohen Durchsatz von Brillengläsern zuträglich.

Vorzugsweise weist das Bearbeitungssystem zwei Polierstationen auf, denen ein gemeinsames Werkzeugmagazin für Polierwerkzeuge zugeordnet ist. Dies ist einem kompakten und kostengünstigen Aufbau des Bearbeitungssystems und einem hohen Durchsatz von Brillengläsern zuträglich.

Es ist vorteilhaft, wenn das Bearbeitungssystem bzw. die Handhabungsvorrichtung einen Sensor, insbesondere Taster, aufweist, um festzustellen, ob sich in einem Transportbehälter eine oder mehrere Brillengläser befinden. Hierdurch können Fehler bei der Bearbeitung vermieden und/oder schnelle Abläufe erzielt werden.

Vorzugsweise weist das Bearbeitungssystem eine Bedienvorrichtung mit einer Eingabeeinrichtung und einer Anzeigeeinrichtung auf. Mit der Bedienvorrichtung ist vorzugsweise das Bearbeitungssystem, insbesondere einzelne Bearbeitungsstationen des Bearbeitungssystems, steuerbar bzw. bedienbar.

Gemäß einem auch unabhängig realisierbaren Aspekt ist die Bedienvorrichtung vorzugsweise an einem Arm, insbesondere Schwenkarm, angeordnet und auf entgegengesetzte Seiten des Bearbeitungssystems und/oder vor verschiedene Bearbeitungsstationen bewegbar. Dies erleichtert die Bedienung des Bearbeitungssystems bzw. der Bearbeitungsstationen.

Gemäß einem weiteren, auch unabhängig realisierbaren Aspekt ist mittels der Anzeigeeinrichtung vorzugsweise ein Steuermenü anzeigbar und die Anzeigeeinrichtung dazu ausgebildet, abhängig von einer relativen Position und/oder Ausrichtung der Bedienvorrichtung bezüglich der Bearbeitungsstation(en) unterschiedliche Steuermenüs, insbesondere jeweils für eine der Bearbeitungsstationen, anzuzeigen. Hierdurch wird eine erleichterte und flexible Bedienung verschiedener Bearbeitungsstationen des Bearbeitungssystems erleichtert und die Bediensicherheit verbessert.

Vorzugsweise sind der Arm und die Bedienvorrichtung außerhalb der Verkleidung bzw. des Gehäuses des Bearbeitungssystems angeordnet. Insbesondere kann der Arm zumindest abschnittsweise oberhalb des Gehäuses angeordnet sein. Die Bedienvorrichtung ist vorzugsweise an einem zumindest im Wesentlichen vertikal verlaufenden oder unteren Abschnitt des Arms und/oder seitlich der Verkleidung bzw. des Gehäuses angeordnet bzw. anordenbar. Hierdurch ist eine komfortable Bedienung ermöglicht.

Der Arm ist vorzugsweise um eine vertikale Achse schwenkbar, insbesondere um mindestens 180°, besonders bevorzugt zumindest im Wesentlichen um 270° oder 360°. Dies ermöglicht eine flexible Positionierung der Bedienvorrichtung an einer gewünschten Position bezüglich des Bearbeitungssystems bzw. der Bearbeitungsstationen.

Der Arm weist vorzugsweise mehrere Gelenkachsen bzw. gelenkig miteinander verbundene Abschnitte auf. Dies ist einer flexiblen Positionierung der Bedienvorrichtung zuträglich.

Vorzugsweise ist die Bedienvorrichtung zur individuellen Steuerung der jeweils nächstliegenden Bearbeitungsstation(en) ausgebildet. Alternativ oder zusätzlich ist die Bedienvorrichtung vorzugsweise dazu ausgebildet, automatisch zur jeweils nächstliegenden Bearbeitungsstation umzuschalten bzw. ein entsprechendes Steuermenü für die nächstliegende Bearbeitungsstation anzuzeigen. Dies erleichtert die Bedienung des Bearbeitungssystems bzw. der Bearbeitungsstationen.

Gemäß einem weiteren, auch unabhängig realisierbaren Aspekt betrifft die vorliegende Erfindung ein Verfahren zum Bearbeiten von Brillengläsern in einem Bearbeitungssystem mit mehreren Bearbeitungsstationen und einem gemeinsamen Grundgestell und/oder einer gemeinsamen Verkleidung bzw. einem gemeinsamen Gehäuse für die Bearbeitungsstationen.

Vorzugsweise wird das Verfahren in bzw. mit einem Bearbeitungssystem nach einem der voranstehend beschriebenen Aspekte durchgeführt bzw. ist das voranstehend beschriebene Bearbeitungssystem zur Durchführung des nachfolgend beschriebenen Verfahrens ausgebildet.

Bei dem Verfahren wird ein Brillenglas nacheinander in verschiedenen Bearbeitungsstationen des Bearbeitungssystems bearbeitet.

Gemäß einem Aspekt des Verfahrens werden vorzugsweise verschiedene Brillengläser gleichzeitig in verschiedenen Bearbeitungsstationen bearbeitet, während mindestens ein weiteres Brillenglas weiter transportiert und/oder zu einer Bearbeitungsstation bewegt wird. Dies ist einem hohen Durchsatz von Brillengläsern zuträglich.

Gemäß einem weiteren, auch unabhängig realisierbaren Aspekt werden verschiedene Brillengläser vorzugsweise gleichzeitig in verschiedenen Bearbeitungsstationen gefräst und drehend bearbeitet. Alternativ oder zusätzlich werden verschiedene Brillengläser gleichzeitig in verschiedenen Bearbeitungsstationen poliert und formgebend bearbeitet, insbesondere gefräst und/oder drehend bearbeitet. Dies ist einem hohen Durchsatz von Brillengläsern zuträglich.

Gemäß einem weiteren, auch unabhängigen realisierbaren Aspekt des Verfahrens wird das Brillenglas vorzugsweise zur Bearbeitung aus einem Transportbehälter entnommen, in verschiedenen Bearbeitungsstationen bearbeitet und anschließend wieder in den Transportbehälter abgelegt, wobei der Transportbehälter während (vor, gleichzeitig und/oder nach) der Bearbeitung bzw. zwischen der Entnahme und dem Ablegen des Brillenglases entlang der Bearbeitungsstationen weiter transportiert wird, insbesondere mittels eines Transportsystems. Dies ist einem hohen Durchsatz von Brillengläsern zuträglich.

Gemäß einem weiteren, auch unabhängig realisierbaren Aspekt übergibt eine Handhabungsvorrichtung vorzugsweise das Brillenglas nach einem Fräsen in einer Frässtation von der Frässtation vorzugsweise unmittelbar an eine nachgeordnete Drehstation zur drehenden Bearbeitung. Insbesondere ist vorgesehen, dass die Handhabungsvorrichtung das Brillenglas unmittelbar aus einer Brillenglashalterung bzw. einem Spannfutter der Frässtation bzw. deren Werkstückspindel entnimmt, mit der/dem das Brillenglas beim Fräsen gehalten wird, und/oder unmittelbar an eine Brillenglashalterung bzw. ein Spannfutter der Drehstation bzw. deren Werkstückspindel übergibt, mit der/dem das Brillenglas beim Bearbeiten in der Drehstation gehalten wird. Vorzugsweise sind also keine Übergabeeinrichtungen, wie zum Beispiel Greifer oder Sauger, vorgesehen, die den Brillenglashalterungen bzw. Spannfuttern und der Handhabungsvorrichtung zwischengeordnet sind. Dies ist einem hohen Durchsatz von Brillengläsern zuträglich.

Es ist ein besonderer Vorteil der vorliegenden Erfindung, dass die formgebende bzw. zerspanende Bearbeitung der Brillengläser nicht in einer einzigen Bearbeitungsstation erfolgt, die die Brillengläser sowohl fräst als auch drehend bearbeitet, sondern das Fräsen und Drehen auf zwei separate Bearbeitungsstationen aufgeteilt bzw. verteilt ist. Hierdurch ergeben sich Verbesserungen bzw. Optimierungen bei den Bearbeitungszeiten bzw. dem Durchsatz des Bearbeitungssystems, da das Fräsen der Brillengläser üblicherweise nach einer deutlich kürzeren Zeit abgeschlossen ist als die drehende Bearbeitung der Brillengläser. Die drehende Bearbeitung eines Brillenglases benötigt typischerweise etwa das Zwei- bis Dreifache der für das Fräsen benötigten Zeit. Durch das Aufteilen von Fräsen und Drehen können daher Totzeiten bzw. Stillstandzeiten der Bearbeitungsstationen, insbesondere der Drehstation, verringert und ein höherer Durchsatz erreicht werden.

Der Ausdruck "Drehen" in Bezug auf Brillengläser bezeichnet im Rahmen der vorliegenden Erfindung vorzugsweise einen Bearbeitungsvorgang des Brillenglases, bei dem von dem Brillenglas Späne abgetrennt werden, insbesondere um eine gewünschte Form des Brillenglases zu erzeugen. Der Begriff "Drehen" eines Brillenglases bezeichnet insbesondere eine formgebende oder zerspanende Bearbeitung, besonders bevorzugt ein Stirndrehen, des Brillenglases, insbesondere einer Flachseite bzw. optischen Oberfläche des Brillenglases, und nicht lediglich das Drehen des Brillenglases um eine Achse ohne eine (formgebende bzw. zerspanende) Bearbeitung des Brillenglases. Für ein Drehen des Brillenglases ohne Bearbeitung wird vorzugsweise der Begriff "Rotieren" verwendet.

Insbesondere werden die Begriffe "Drehen" und "drehende Bearbeitung" sowie Ableitungen davon hier synonym verwendet und sind austauschbar. Unter dem Begriff "Drehen" ist hier bevorzugt ein Stirndrehen zu verstehen.

Gemäß einem bevorzugten Verfahrensaspekt wird unmittelbar nach Entnahme des Brillenglases aus einer Bearbeitungsstation mit einer Handhabungsvorrichtung ein von dieser Handhabungsvorrichtung bereits bevorratetes weiteres Brillenglas an dieselbe Bearbeitungsstation übergeben. Hierdurch können Totzeiten bzw. Stillstandzeiten der Bearbeitungsstation beim Austausch von Brillengläsern verringert und somit der Durchsatz von Brillengläsern erhöht werden.

Vorzugsweise wird das Brillenglas mit derselben Handhabungsvorrichtung aus dem Transportbehälter entnommen, an eine Bearbeitungsstation und zwischen zwei Bearbeitungsstationen übergeben, aus der zweiten Bearbeitungsstation entnommen und wieder in den (selben) Transportbehälter abgelegt. Dies ist einem kostengünstigen und kompakten Aufbau des Bearbeitungssystems zuträglich.

Die oben genannten Aspekte und Merkmale sowie weitere sich aus den Ansprüchen und der nachfolgenden Beschreibung ergebenden Aspekte und Merkmale können unabhängig voneinander und in jeder beliebigen Kombination realisiert werden.

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Es zeigt:
- Fig. 1: eine schematische Aufsicht eines vorschlagsgemäßen Bearbeitungssystems;
- Fig. 2: eine perspektivische Darstellung des Bearbeitungssystems;
- Fig. 3: einen schematischen Schnitt eines geblockten Brillenglases mit einem Blockstück;
- Fig. 4: eine Seitenansicht des Bearbeitungssystems mit einer Handhabungsvorrichtung;
- Fig. 5: eine Vorderansicht des Bearbeitungssystems aus Fig. 4;
- Fig. 6: eine perspektivische Darstellung der Handhabungsvorrichtung;
- Fig. 7: eine perspektivische Rückansicht der Handhabungsvorrichtung;
- Fig. 8: eine modifizierte Seitenansicht des Bearbeitungssystems mit einer weiteren Handhabungsvorrichtung;
- Fig. 9: eine Vorderansicht des Bearbeitungssystems aus Fig. 8;
- Fig. 10: eine perspektivische Darstellung der weiteren Handhabungsvorrichtung;
- Fig. 11: eine Seitenansicht der weiteren Handhabungsvorrichtung;
- Fig. 12: eine Vorderansicht des Bearbeitungssystems mit einer Handhabungsvorrichtung für Werkzeuge;
- Fig. 13: eine modifizierte Seitenansicht des Bearbeitungssystems aus Fig. 12;
- Fig. 14: eine perspektivische Darstellung eines Werkzeugmagazins und einer Reinigungsstation;
- Fig. 15: eine perspektivische Darstellung des Werkzeugmagazins und der Handhabungsvorrichtung für Werkzeuge;
- Fig. 16: eine perspektivische Darstellung der Handhabungsvorrichtung für Werkzeuge; und
- Fig. 17: eine perspektivische Darstellung einer Signierstation.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden können, auch wenn von einer wiederholten Beschreibung abgesehen wird.

### Gesamtkonzept

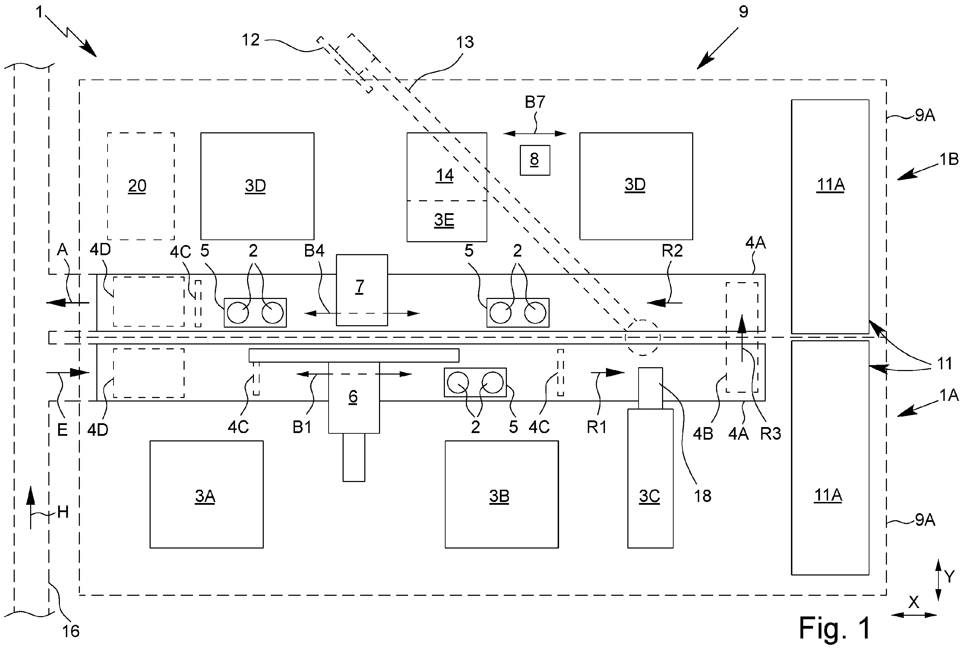

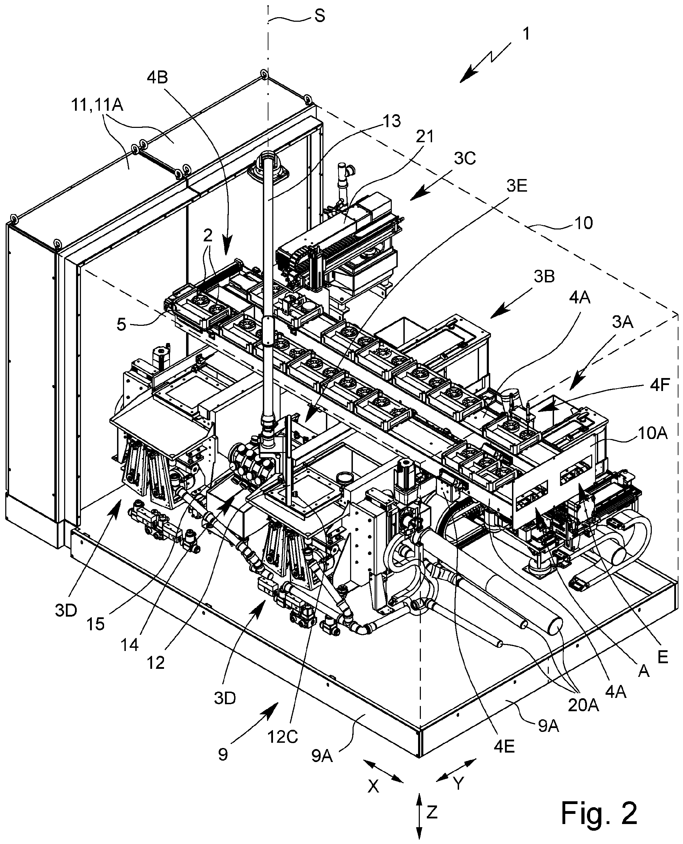

Fig. 1 zeigt in einer sehr schematischen Ansicht ein Bearbeitungssystem 1 gemäß der vorliegenden Erfindung. In Fig. 2 ist das Bearbeitungssystem 1 in einer perspektivischen, vereinfachten Darstellung gezeigt.

Das Bearbeitungssystem 1 ist zur insbesondere gleichzeitigen Bearbeitung mehrerer Brillengläser 2 ausgebildet.

Das Bearbeitungssystem 1 ermöglicht insbesondere einen hohen Durchsatz von Brillengläsern 2 bei einem kleinen Footprint, also einer kleinen erforderlichen Aufstellfläche auf dem Boden.

Der Footprint bzw. die benötigte Aufstellfläche des Bearbeitungssystems 1 beträgt vorzugsweise höchstens 20 m², bevorzugt höchstens 10 m², insbesondere etwa 2 m x 3,2 m.

Vorzugsweise ist das Bearbeitungssystem 1 dazu ausgebildet, mehr als 60 Brillengläser 2, insbesondere etwa 80 oder mehr Brillengläser 2 pro Stunde, (vollständig) zu bearbeiten. Ein Schwerpunkt des Bearbeitungssystems 1 liegt insbesondere auf möglichst niedrigen Stillstandzeiten bzw. Totzeiten einzelner Bearbeitungsstationen, einer hohen Auslastung einzelner Bearbeitungsstationen und/oder einer möglichst geringen Verweilzeit der Brillengläser 2 in dem Bearbeitungssystem 1.

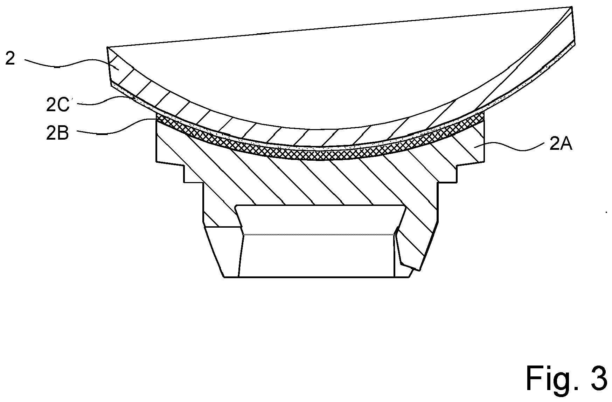

Vorzugsweise ist das Bearbeitungssystem 1 zum Fräsen, Drehen, Markieren bzw. Signieren, Polieren und/oder Reinigen bzw. Waschen und/oder Trocknen sowie optional zum Messen, Randbearbeiten bzw. Edgen und/oder Beschichten (Coating) von Brillengläsern 2 ausgebildet. Insbesondere bezieht sich das Fräsen, Drehen und Polieren auf das Bearbeiten einer Flachseite bzw. optischen Fläche eines Brillenglases 2. Die Flachseite bildet vorzugsweise eine optische Oberfläche bzw. optisch wirksame Fläche des Brillenglases 2 und ist üblicherweise nicht eben, sondern etwas gebogen, beispielsweise sphärisch oder torisch, wie insbesondere auch in Fig. 3 angedeutet ist.

Das Bearbeitungssystem 1 ist vorzugsweise zur Bearbeitung von geblockten Brillengläsern 2 bzw. Brillengläsern 2, die an einem Blockstück 2A befestigt sind, ausgebildet. Dies ist jedoch nicht zwingend, das Bearbeitungssystem 1 kann auch zur blocklosen Bearbeitung von Brillengläsern 2 ausgebildet sein.

Fig. 3 zeigt in einem schematischen Schnitt ein Brillenglas 2, das auf einem zugeordneten Blockstück 2A mittels eines Blockmaterials 2B geblockt, also temporär befestigt, ist.

Zwischen dem Blockmaterial 2B und dem Brillenglas 2 kann eine Schutzschicht 2C vorgesehen sein, die beispielsweise durch eine Beschichtung wie einen Lack oder Film oder dergleichen oder durch eine (beispielsweise aufgeklebte) Folie gebildet sein kann.

Das Blockstück 2A ist insbesondere zum Einspannen mit definierter Drehlage für eine Bearbeitung des zugeordneten Brillenglases 2 ausgebildet.

Dementsprechend weist das Brillenglas 2 vorzugsweise eine "Blockseite" und eine "Bearbeitungsseite" auf. Üblicherweise ist die Blockseite, also die Seite bzw. Flachseite des Brillenglases 2, an der das Blockstück 2A befestigt ist bzw. die dem Blockstück 2A zugewandt ist, bereits fertig bearbeitet und/oder erfolgt nur eine Bearbeitung der (noch unbearbeiteten) Bearbeitungsseite.

Vorzugsweise wird durch das Blockstück 2A die Handhabung und Ausrichtung des Brillenglases 2 erleichtert. Im Folgenden wird auf das Blockstück 2A nicht explizit eingegangen. Insbesondere umfasst der Begriff "Brillenglas 2" auch Brillengläser 2 mit daran angeordneten Blockstücken 2A.

Im Falle einer blocklosen Bearbeitung weist das Bearbeitungssystem 1 vorzugsweise ein System zum Erfassen der Lage der Brillengläser 2 und/oder zum Ausrichten der Brillengläser 2 auf. Dies kann beispielsweise durch eine oder mehrere Messeinrichtungen zur Bestimmung der Lage und/oder Ausrichteeinrichtungen zum Ausrichten der Brillengläser 2 in einer bestimmten Lage und/oder zum Beibehalten einer bestimmten Lage der Brillengläser 2 aufweisen.

Insbesondere können derartige Einrichtungen einer oder mehreren Handhabungsvorrichtungen und/oder einer oder mehreren Bearbeitungsstationen des Bearbeitungssystems 1 zugeordnet sein.

Im Folgenden wird bei der Beschreibung der Anordnung unterschiedlicher Komponenten zueinander insbesondere auf die in Fig. 1 und 2 mit Pfeilen angedeuteten Achsen X, Y und Z Bezug genommen.

Die Achsen X, Y und Z sind vorzugsweise jeweils orthogonal zueinander. Die X- und Y-Achse verlaufen vorzugsweise horizontal. Die Z-Achse verläuft vorzugsweise vertikal bzw. lotrecht.

Als X-, Y- und Z-Richtung werden im Folgenden Richtungen bezeichnet, die parallel zur X-, Y- und Z-Achse verlaufen. Die X-Richtung bzw. X-Achse verläuft vorzugsweise in der Mittel-, Längs- oder Hauptachse des Bearbeitungssystems 1 oder parallel dazu.

Das Bearbeitungssystem 1 weist vorzugsweise mehrere Bearbeitungsstationen 3 auf. Insbesondere weist das Bearbeitungssystem 1 mindestens zwei verschiedenartige Bearbeitungsstationen 3 bzw. mindestens zwei Bearbeitungsstationen 3 zur Durchführung unterschiedlicher Bearbeitungen auf.

Vorzugsweise weist das Bearbeitungssystem 1 eine Frässtation 3A, eine Drehstation 3B, eine Signierstation 3C, eine Polierstation 3D und/oder eine Reinigungsstation 3E auf. Die Stationen 3A-E stellen jeweils eine Bearbeitungsstation 3 dar.

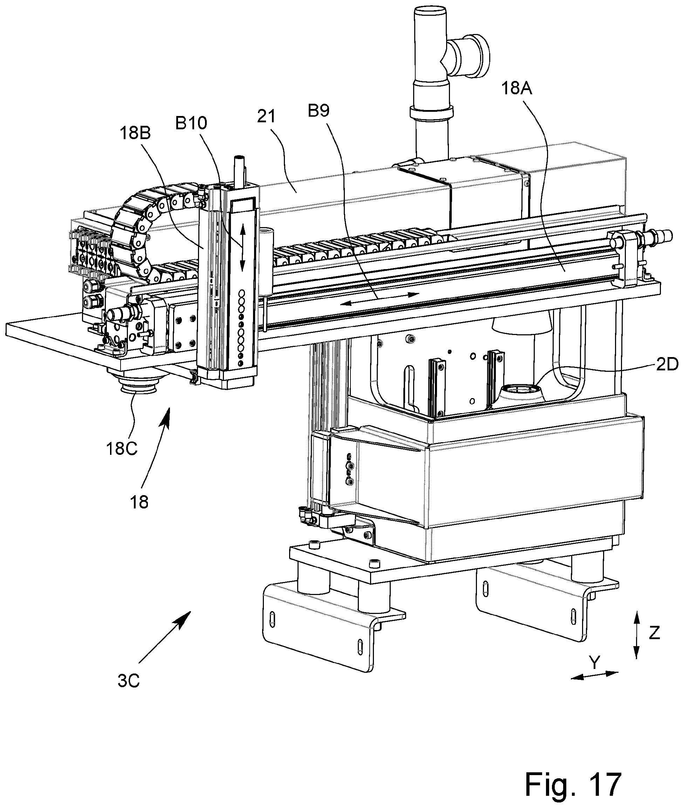

Eine Bearbeitungsstation 3, insbesondere die Frässtation 3A, Drehstation 3B und/oder Polierstation 3D, weist vorzugsweise ein Werkzeug zur Bearbeitung des Brillenglases 2, eine Werkstückspindel bzw. Spindel für das zur bearbeitende Brillenglas 2 und/oder eine Werkzeugspindel für das Bearbeitungswerkzeug auf. Insbesondere weist die Werkstückspindel ein Spannfutter 2D für das Brillenglas 2 bzw. das Blockstück 2A auf, wie in Fig. 17 beispielhaft dargestellt. Des Weiteren weist eine Bearbeitungsstation 3 vorzugsweise einen Arbeitsraum zum Bearbeiten von Brillengläsern 2 auf, insbesondere wobei die Werkstückspindel und/oder Werkzeugspindel in dem Arbeitsraum angeordnet sind. Verschiedene Bearbeitungsstationen 3 weisen vorzugsweise verschiedene Werkstückspindeln, Werkzeugspindeln und/oder Arbeitsräume auf.

Die Drehstation 3B ist vorzugsweise schwingungsentkoppelt, beispielsweise durch eine Luftlagerung. Hier sind jedoch auch andere Lösungen möglich.

Vorzugsweise ist das Bearbeitungssystem 1 dazu ausgebildet, eine vollständige Bearbeitung bzw. Oberflächenbearbeitung, auch als Surfacing bezeichnet, der Brillengläser 2 durchzuführen. Eine Oberflächenbearbeitung ist insbesondere eine Bearbeitung der optischen Oberfläche(n) bzw. Flachseite(n) eines Brillenglases 2. Eine "vollständige Bearbeitung" im Sinne der vorliegenden Erfindung umfasst insbesondere ein Fräsen, Drehen, Polieren und/oder Reinigen und optional ein Signieren. Des Weiteren kann eine vollständige Bearbeitung optional auch ein Beschichten (Coating) und/oder eine Randbearbeitung (Edgen) umfassen. Hier sind jedoch auch andere Lösungen möglich, insbesondere eine nicht vollständige bzw. nur teilweise Bearbeitung in dem Bearbeitungssystem 1.

Im Folgenden werden Bearbeitungsstationen 3, die die gleiche Art von Bearbeitungen durchführen, die beispielsweise also jeweils die Brillengläser 2 polieren, als "gleichartige" Bearbeitungsstationen 3 bezeichnet. Demgegenüber werden Bearbeitungsstationen 3, die unterschiedliche Arten von Bearbeitungen durchführen, als "verschiedenartige" Bearbeitungsstationen 3 bezeichnet. Insbesondere sind die Frässtation 3A, Drehstation 3B, Signierstation 3C, Polierstation 3D und Reinigungsstation 3E jeweils verschiedenartige Bearbeitungsstationen 3.

Das Bearbeitungssystem 1 kann auch jeweils mehrere gleichartige Bearbeitungsstationen 3 aufweisen. Im Darstellungsbeispiel weist das Bearbeitungssystem 1 vorzugsweise genau zwei Polierstationen 3D auf.

Vorzugsweise wird das Brillenglas 2 in allen verschiedenartigen Bearbeitungsstationen 3 für unterschiedliche Bearbeitungen bearbeitet. Die (unterschiedlichen) Bearbeitungen in den verschiedenartigen Bearbeitungsstationen bauen vorzugsweise aufeinander auf bzw. bilden vorzugsweise eine Folgebearbeitung des Brillenglases 2. Insbesondere ist die Bearbeitungsreihenfolge für jedes Brillenglas 2 gleich.

Falls das Bearbeitungssystem 1 mehrere gleichartige Bearbeitungsstationen 3 bzw. mehrere Bearbeitungsstationen 3 für die gleiche Bearbeitung aufweist, wird das Brillenglas 2 vorzugsweise nur in einer der gleichartigen Bearbeitungsstationen 3 bearbeitet.

Das Bearbeitungssystem 1 weist vorzugsweise ein Transportsystem 4 zum Transport der Brillengläser 2 innerhalb des Bearbeitungssystems 1 auf. Vorzugsweise erfolgt der Transport der Brillengläser 2 in Transportbehältern 5, die mittels des Transportsystems 4 transportiert werden.

Die Transportbehälter 5 und/oder Brillengläser 2 werden (mittels des Transportsystems 4) vorzugsweise in X-Richtung transportiert.

Das Transportsystem 4 weist vorzugsweise mehrere, insbesondere separate, Transportvorrichtungen 4A auf, beim Darstellungsbeispiel zwei Transportvorrichtungen 4A.

Die Transportvorrichtungen 4A können auch durch verschiedene Abschnitte eines gemeinsamen, beispielsweise eine durchgehende Förderbahn bildenden, Transportsystems 4 gebildet sein.

Die nachfolgenden Ausführungen zu Transportvorrichtungen 4A gelten vorzugsweise entsprechend auch für Transportabschnitte.

Die Transportabschnitte bzw. Transvorrichtungen 4A verlaufen vorzugsweise zumindest bereichsweise, stückweise oder weitestgehend geradlinig.

Die Transportvorrichtungen 4A sind vorzugsweise als Rollenbahn oder Förderband ausgebildet.

Die Transportvorrichtungen 4A sind vorzugsweise parallel zur X-Achse und/oder zueinander angeordnet oder verlaufen in X-Richtung. Das Transportsystem 4 bzw. die Transportvorrichtungen 4A dient/dienen vorzugsweise dem Transport der Transportbehälter 5 bzw. Brillengläser 2 an den Bearbeitungsstationen 3 entlang bzw. vorbei.

Das Bearbeitungssystem 1 weist vorzugsweise eine oder mehrere Handhabungsvorrichtungen 6, 7, 8, 18 zur Handhabung der Brillengläser 2 und/oder zur Handhabung von Werkzeugen 15 zur Bearbeitung der Brillengläser 2 auf.

Unter dem Begriff "Handhabung" eines Brillenglases 2 werden insbesondere einer oder mehrere der folgenden Schritte verstanden: Entnahme des Brillenglases 2 aus einem Transportbehälter 5, Transfer des Brillenglases 2 vom Transportbehälter 5 zu einer oder mehreren Bearbeitungsstationen 3, Übergabe des Brillenglases 2 an die Bearbeitungsstation 3, insbesondere Einsetzen in eine Brillenglashalterung bzw. ein Spannfutter 2D der Bearbeitungsstation 3, Entnahme des Brillenglases 2 aus einer Bearbeitungsstation 3, insbesondere unmittelbare Entnahme des Brillenglases 2 aus einer Brillenglashalterung bzw. einem Spannfutter 2D der Bearbeitungsstation 3, Transfer des Brillenglases 2 zwischen zwei Bearbeitungsstationen 3 bzw. Übergabe des Brillenglases 2 von einer Bearbeitungsstation 3 an eine weitere Bearbeitungsstation 3 bzw. zwischen zwei Bearbeitungsstationen 3 und/oder Übergabe des Brillenglases 2 an einen Transportbehälter 5 bzw. Ablegen des Brillenglases 2 in einen Transportbehälter 5. Des Weiteren kann die Handhabung eines Brillenglases 2 die Veränderung einer relativen Lage des Brillenglases 2 umfassen, beispielsweise ein Rotieren, Verkippen, Verschwenken und/oder sonstiges Ausrichten des Brillenglases 2.

Die Handhabungsvorrichtungen 6-8 sind in Fig. 2 der Übersichtlichkeit halber weggelassen und werden in weiteren Figuren detailliert dargestellt.

Die Handhabungsvorrichtungen 6-8 sind vorzugsweise zur Handhabung von Brillengläsern 2 und/oder Werkzeugen 15 unabhängig von der Bearbeitung in den Bearbeitungsstationen 3 und/oder unabhängig von dem Transport der Transportbehälter 5 mittels des Transportsystems 4 ausgebildet. Vorzugsweise sind die verschiedenen Handhabungsvorrichtungen 6-8 unabhängig voneinander und/oder weisen keine gemeinsamen Bewegungsachsen auf.

Vorzugsweise sind einzelne, mehrere oder alle Handhabungsvorrichtungen 6-8 mehreren Bearbeitungsstationen 3 zugeordnet.

Die Handhabungsvorrichtungen 6-8 sind vorzugsweise entweder zur Handhabung von Brillengläsern 2 oder zur Handhabung von Werkzeugen 15 ausgebildet. Es ist jedoch auch möglich, dass eine oder mehrere der Handhabungsvorrichtungen 6-8 sowohl zur Handhabung von Brillengläsern 2 als auch zur Handhabung von Werkzeugen 15 ausgebildet ist bzw. sind.

Vorzugsweise arbeiten die Handhabungsvorrichtungen 6-8 unabhängig voneinander und/oder unabhängig von einer Bearbeitung der Brillengläser 2 in den Bearbeitungsstationen 3. Insbesondere werden Brillengläser 2 und/oder Werkzeuge 15 mittels einer oder mehrerer der Handhabungsvorrichtungen 6-8 gehandhabt, insbesondere zwischen verschiedenen Positionen bewegt bzw. transferiert, während in einer (der Handhabungsvorrichtung 6-8 zugeordneten) Bearbeitungsstation 3 ein Brillenglas 2 bearbeitet wird. Auf diese Weise können Totzeiten der Bearbeitungsstationen 3, also Zeiträume, in denen in einer Bearbeitungsstation 3 keine Bearbeitung eines Brillenglases 2 erfolgt, minimiert werden. Dies erhöht den Durchsatz der Bearbeitungsstationen 3 bzw. des Bearbeitungssystems 1.

Die Handhabungsvorrichtungen 6-8 sind zur Realisierung kurzer Handhabungszeiten und/oder kurzer Verfahrwege vorzugsweise möglichst nah an dem Transportsystem 4 und/oder den jeweils zugeordneten Bearbeitungsstationen 3 positioniert.

Vorzugsweise sind einige, mehrere oder alle der Handhabungsvorrichtungen 6-8, 18 zur Erkennung von Transportbehältern 5 bzw. Brillengläsern 2 und/oder zur Bestimmung bzw. Erfassung der Position dieser ausgebildet, beispielsweise mittels einer später beschriebenen Erfassungseinrichtung 4E und/oder einer oder mehreren sonstigen bzw. weiteren Positionserfassungseinrichtungen.

Das Bearbeitungssystem 1 weist vorzugsweise ein Grundgestell 9 auf, welches die Bearbeitungsstationen 3 und/oder das Transportsystem 4 trägt bzw. auf dem die Bearbeitungsstationen 3 und/oder das Transportsystem 4 angeordnet sind. Das Grundgestell 9 umfasst vorzugsweise einen Metallrahmen oder ist hierdurch gebildet.

Das Bearbeitungssystem 1 weist vorzugsweise ein Gehäuse bzw. eine Verkleidung 10 auf. Die Bearbeitungsstationen 3 und/oder das Transsportsystem 4 sind vorzugsweise innerhalb der Verkleidung 10 angeordnet bzw. von der Verkleidung 10 umgeben. Insbesondere bildet die Verkleidung 10 eine äußere Umhüllung bzw. Begrenzung des Bearbeitungssystems 1.

Die Verkleidung 10 kann an dem Grundgestell 9 befestigt bzw. mit diesem verbunden sein. Es ist jedoch auch möglich, dass die Verkleidung 10 von dem Grundgestell 9 getrennt ist, beispielsweise durch eine Verankerung im Boden ohne Kontakt mit dem Grundgestell 9.

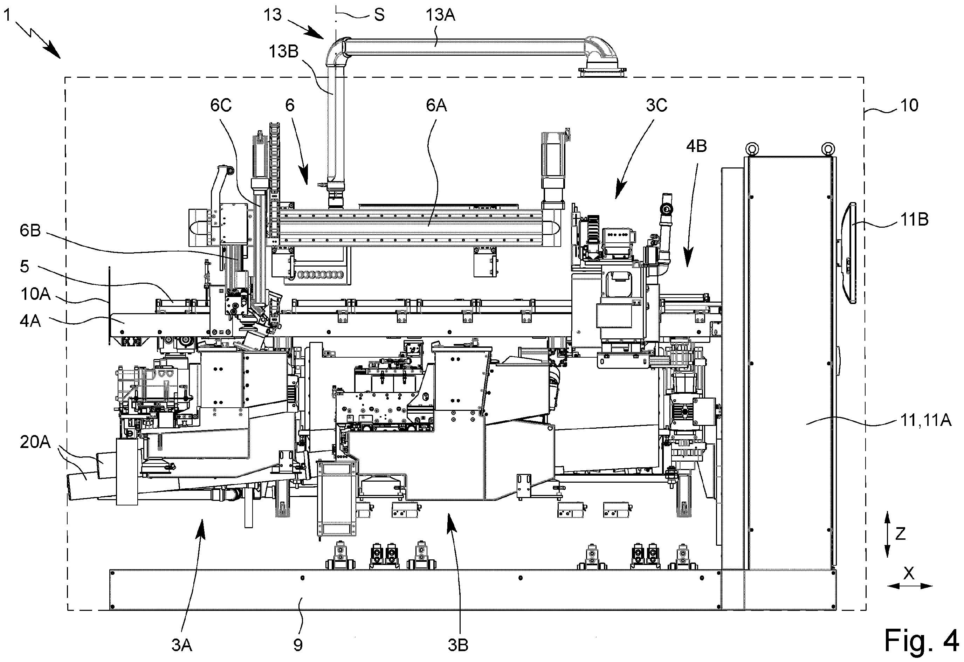

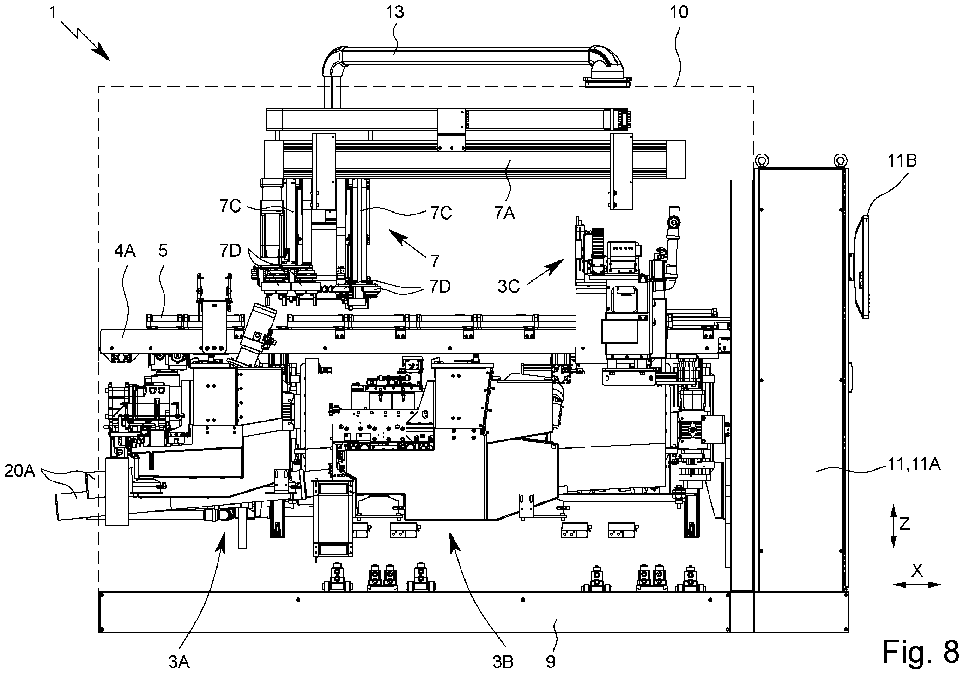

In Fig. 4 und 8 sind unterschiedliche Ausführungsformen der Verkleidung 10 angedeutet. Insbesondere ist es möglich, dass Teile des Bearbeitungssystems 1 außerhalb der Verkleidung 10 angeordnet sind. Bei dem in Fig. 8 dargestellten Beispiel ist der Schaltschrank 11A außerhalb der Verkleidung 10 angeordnet.

Die Verkleidung 10 weist vorzugsweise mehrere Zugänge, wie Öffnungen, Klappen, Türen, Fenster und/oder sonstige Einrichtungen, auf, die einen Zugang zu dem von der Verkleidung 10 umgebenen bzw. begrenzten Raum ermöglichen. Insbesondere ist so ein Zugang zu einzelnen Bearbeitungsstationen 3, zu dem Transportsystem 4 und/oder zu dem Schaltschrank 11A möglich, beispielsweise zur Inspektion, Wartung, Instandhaltung und/oder Reparatur. Die Zugänge sind vorzugsweise öffenbar und/oder schließbar.

Insbesondere kann bei von dem Darstellungsbeispiel abweichenden Ausführungsformen durch Zugänge der Verkleidung 10 auch ein Zugang zu anderen Teilen des Bearbeitungssystems 1 als den Bearbeitungsstationen 3 ermöglicht sein. Beispielsweise kann das Transportsystem 4 derart in der Nähe der Verkleidung 10 angeordnet sein, dass durch Zugänge der Verkleidung ein unmittelbarer Zugang zu dem Transportsystem 4 ermöglicht ist, z. B. wenn das Transportsystem 4 an äußeren Rand des Bearbeitungssystems 1 bzw. zumindest teilweise in der Nähe der Verkleidung angeordnet ist und/oder nur eine Transportvorrichtung 4A aufweist.

Das Bearbeitungssystem 1 weist vorzugsweise eine integrierte bzw. gemeinsame Steuerung für die Bearbeitungsstationen 3, das Transportsystem 4 und/oder die Handhabungsvorrichtungen 6-8 auf.

Die Steuerung ist vorzugsweise in einem oder mehreren Schaltschränken 11A angeordnet bzw. untergebracht. Die Steuerung bzw. der Schaltschrank 11A ist vorzugsweise an einer Stirnseite des Bearbeitungssystems 1, des Transportsystems 4 und/oder der Verkleidung 10 und/oder an einer Querseite des Grundgestells 9 bzw. auf oder an dem Grundgestell 9 angeordnet.

Der Schaltschrank 11A kann bewegbar sein, sodass ein Zugang zu dem Bearbeitungssystem 1 oder Teilen davon, wie dem Transportsystem 4 und/oder einer oder mehreren Bearbeitungsstationen 3, ermöglicht oder erleichtert wird, beispielsweise durch Verschieben, Drehen, Klappen oder Verschwenken des Schaltschranks 11A.

Die Steuerung kann eine oder mehrere separate bzw. unabhängig voneinander arbeitende Steuereinrichtungen 11 zur Steuerung einer oder mehrerer Komponenten des Bearbeitungssystems 1 aufweisen oder hierdurch gebildet sein. Hierauf wird später noch genauer eingegangen.

Das Bearbeitungssystem 1 weist vorzugsweise eine Bedienvorrichtung 12 auf. Die Bedienvorrichtung 12 weist vorzugsweise eine Anzeigeeinrichtung 12A und/oder eine Eingabeeinrichtung 12B auf. Die Anzeigeeinrichtung 12A und Eingabeeinrichtung 12B können insbesondere auch durch das gleiche Element gebildet sein, beispielsweise einen Touch-Screen bzw. ein berührungsempfindliches Display.

Mit der Bedienvorrichtung 12 sind vorzugsweise verschiedene Bearbeitungsstationen 3 des Bearbeitungssystems 1 einzeln bzw. unabhängig voneinander steuerbar bzw. bedienbar. Hierauf wird später noch genauer eingegangen.

Es ist vorteilhaft, wenn die Bedienvorrichtung 12 an einem Arm 13, insbesondere an dessen Ende, angeordnet ist.

Das Bearbeitungssystem 1 bzw. der Arm 13 ist vorzugsweise derart ausgebildet, dass die Bedienvorrichtung 12 flexibel einsetzbar ist bzw. um das Bearbeitungssystem 1 herum bzw. wahlweise auf verschiedene Seiten bzw. vor unterschiedlichen Bearbeitungsstationen 3 positionierbar ist. Hierauf wird später noch genauer eingegangen.

Das Bearbeitungssystem 1 weist vorzugsweise ein Werkzeugmagazin 14 auf. Das Werkzeugmagazin 14 kann einer oder mehreren Bearbeitungsstationen 3 zugeordnet sein bzw. Werkzeuge 15 für eine oder mehrere Bearbeitungsstationen 3 aufweisen bzw. bevorraten.

Besonders bevorzugt ist das Werkzeugmagazin 14 einer oder zwei Polierstationen 3D zugeordnet und/oder zwischen zwei Polierstationen 3D angeordnet. In diesem Fall sind die Werkzeuge 15 insbesondere Polierwerkzeuge bzw. Polierköpfe.

Grundsätzlich kann das Bearbeitungssystem 1 jedoch auch ein oder mehrere Werkzeugmagazine 14 für andere Werkzeuge 15, beispielsweise Fräs- und/oder Drehwerkzeuge, aufweisen.

Vorzugsweise ist die Reinigungsstation 3E einer oder mehreren Polierstationen 3D zugeordnet und/oder zur Reinigung von Brillengläsern 2 und/oder Werkzeugen 15, insbesondere Polierwerkzeugen, ausgebildet.

Die Reinigungsstation 3E ist vorzugsweise neben einer oder mehreren Polierstationen 3D angeordnet, insbesondere zwischen zwei Polierstationen 3D.

Die Reinigungsstation 3E ist vorzugsweise zum Waschen und/oder Trocknen von Brillengläsern 2 und/oder Werkzeugen 15 ausgebildet. Hierauf wird später noch genauer eingegangen.

Vorzugsweise bilden das Werkzeugmagazin 14 und die Reinigungsstation 3E eine gemeinsame Baueinheit bzw. ist das Werkzeugmagazin 14 in die Reinigungsstation 3E integriert.

Das Bearbeitungssystem 1 weist vorzugsweise ein Versorgungssystem 20 zur Versorgung einer oder mehrerer Bearbeitungsstationen 3 mit Betriebsmitteln auf. Die Anordnung bzw. Position des Versorgungsystems 20 ist in Fig. 1 schematisch angedeutet. In den weiteren Figuren ist das Versorgungssystem 20 nicht dargestellt.

Das Versorgungssystem 20 ist vorzugsweise in der Nähe des Eingangs E und/oder Ausgangs A, in der Nähe der Polierstation 3D, auf der Polierseite 1B und/oder auf der dem Schaltschrank 11A gegenüberliegenden Seite des Bearbeitungssystems 1 angeordnet.

Vorzugsweise ist das Versorgungsystem 20 seitlich versetzt zu dem Transportsystem 4 und/oder zumindest teilweise unterhalb des Transportsystems 4 angeordnet.

Das Versorgungssystem 20 weist insbesondere Vorratsbehälter für verschiedene Betriebsmittel der Bearbeitungsstationen 3, insbesondere der Polierstationen 3D, auf, beispielsweise Kühlmittel, Poliermittel, Reinigungsflüssigkeit oder dergleichen.

Das Versorgungssystem 20 weist vorzugsweise eine oder mehrere Leitungen 20A zur Zuführung von Betriebsmitteln zu den Bearbeitungsstationen 3 und/oder zur Abführung von (gebrauchten bzw. verbrauchten) Betriebsmitteln bzw. Abfall, Abwasser o. dgl. von den Bearbeitungsstationen 3. Dementsprechend kann das Versorgungssystem 20 auch Auffangbehälter für von den Bearbeitungsstationen abgeführte Betriebsmittel, Abfälle, Abwasser o.dgl. aufweisen.

Das Transportsystem 4 bzw. das Bearbeitungssystem 1 ist vorzugsweise an ein externes bzw. von dem Bearbeitungssystem 1 separates Transfersystem 16 angebunden, über das die Brillengläser 2 bzw. Transportbehälter 5 mit den Brillengläsern 2 dem Bearbeitungssystem 1 bzw. Transportsystem 4 zugefördert werden bzw. zuförderbar sind und/oder von dem Bearbeitungssystem 1 weggefördert werden bzw. wegförderbar sind.

### Teilbarkeit

Das Grundgestell 9 weist vorzugsweise mehrere, insbesondere zwei, Teilgestelle 9A auf, die jeweils ein Grundgestell für eine oder mehrere Bearbeitungsstationen 3 und insbesondere eine Transportvorrichtung 4A bilden. Die Teilgestelle 9A sind vorzugsweise miteinander zu dem Grundgestell 9 verbindbar bzw. aneinander befestigbar.

Insbesondere sind die Teilgestelle 9A vor Ort, also am Aufbauort des Bearbeitungssystems 1, einfach bzw. mit geringem Aufwand und/oder in geringer Zeit miteinander zu dem Grundgestell 9 verbindbar.

Gemäß einem bevorzugten Aspekt ist das Bearbeitungssystem 1 in zwei Teile 1A, 1B teilbar bzw. aus zwei Teilen 1A, 1B zusammengesetzt bzw. zusammensetzbar.

Optional ist jeder der beiden Teile 1A, 1B separat und/oder unabhängig von dem jeweils anderen Teil 1A, 1B funktionsfähig. Insbesondere sind die Teile 1A, 1B dann jeweils derart ausgebildet, dass sie ein selbstständig funktionsfähiges Bearbeitungssystem 1 für gleiche oder unterschiedliche Bearbeitungen bilden.

Bei dem Darstellungsbeispiel ist das Bearbeitungssystem 1 in zwei Teile 1A, 1B, vorzugsweise eine Bearbeitungsseite 1A und eine Polierseite 1B, aufgeteilt.

Vorzugsweise bilden die beiden Seiten bzw. Teile 1A, 1B des Bearbeitungssystems 1 jeweils eine fertig montierte Baueinheit mit einer Transportvorrichtung 4A, einer oder mehreren Bearbeitungsstationen 3, einer oder mehreren Handhabungsvorrichtungen 6-8 und/oder einer Steuerung bzw. einem Schaltschrank 11A. Insbesondere weist dabei die Bearbeitungsseite 1A die Frässtation 3A und die Drehstation 3B und optional die Signierstation 3C auf. Die Signierstation 3C kann jedoch auch in die Polierseite 1B integriert werden. Die Polierseite 1B weist beim Darstellungsbeispiel zwei vorzugsweise identisch ausgebildete Polierstationen 3D auf. Des Weiteren weist die Polierseite 1B vorzugsweise das Werkzeugmagazin 14 und/oder die Reinigungsstation 3E auf.

Die Bearbeitungsseite 1A kann ein Bearbeitungssystem 1 zum Fräsen, Drehen und/oder Signieren von Brillengläsern 2 bilden.

Die Polierseite 1B kann ein Bearbeitungssystem 1 zum Polieren, Reinigen und/oder Signieren von Brillengläsern 2 bilden.

### Bevorzugter Verfahrensablauf

Vorzugsweise weist ein Verfahren zur Bearbeitung von Brillengläsern 2 einen oder mehrere der folgenden Schritte auf. Das Bearbeitungssystem 1 ist insbesondere zur Durchführung dieser Schritte ausgebildet.

Das Verfahren wird im Folgenden vorrangig in Bezug auf ein einzelnes Brillenglas 2 beschrieben. Vorzugsweise werden bei dem Verfahren mehrere Brillengläser 2 gleichzeitig in verschiedenen Bearbeitungsstationen 3 bearbeitet. Vorzugsweise durchlaufen verschiedene Brillengläser 2 die gleichen Bearbeitungsstationen 3 und/oder durchlaufen alle Brillengläser 2 die Bearbeitungsstationen 3 in der gleichen Reihenfolge.

Die nachfolgend erläuterten Schritte sollen einen Überblick über das Verfahren geben. Das Verfahren kann insbesondere weitere Schritte aufweisen, die später beschrieben werden. Das Bearbeitungssystem 1 ist insbesondere auch zur Durchführung dieser weiteren Schritte ausgebildet.

Vorzugsweise wird das Brillenglas 2 dem Bearbeitungssystem 1 bzw. Transportsystem 4 zunächst übergeben bzw. zugefördert, insbesondere mittels des externen Transfersystems 16 und/oder in Transportbehältern 5.

Vorzugsweise werden mehrere Brillengläser 2 gleichzeitig bearbeitet und/oder transportiert und/oder gehandhabt.

Das Brillenglas 2 wird vorzugsweise nacheinander in mehreren, insbesondere verschiedenen, Bearbeitungsstationen 3, bearbeitet. Vorzugsweise erfolgen parallel bzw. gleichzeitig ein Transport des dem Brillenglas 2 zugeordneten Transportbehälters 5 durch das Transportsystem 4 und eine Handhabung des Brillenglases 2 durch eine oder mehrere Handhabungsvorrichtungen 6, 7.

Das Brillenglas 2 wird vorzugsweise zunächst in der Frässtation 3A bearbeitet bzw. gefräst. Dazu wird vorzugsweise der Transportbehälter 5 mit dem Brillenglas 2 mittels des Transportsystems 4 vor die Frässtation 3A transportiert und das Brillenglas 2 mittels der Handhabungsvorrichtung 6 aus dem Transportbehälter 5 entnommen und an die Frässtation 3A übergeben.

Nach der Bearbeitung in der Frässtation 3A bzw. dem Fräsen wird das Brillenglas 2 vorzugsweise mit derselben Handhabungsvorrichtung 6 aus der Frässtation 3A entnommen und an eine weitere Bearbeitungsstation 3, insbesondere an die Drehstation 3B, übergeben. Anschließend erfolgt vorzugsweise eine drehende Bearbeitung des Brillenglases 2 in der Drehstation 3B. Nach der drehenden Bearbeitung wird das Brillenglas 2, vorzugsweise mit derselben Handhabungsvorrichtung 6, aus der Drehstation 3B entnommen. Insbesondere wird das Brillenglas 2 zwischen dem Fräsen und dem Drehen nicht wieder an das Transportsystem 4 übergeben bzw. nicht in den Transportbehälter 5 abgelegt.

Anschließend wird das Brillenglas 2 vorzugsweise wieder, insbesondere mittels derselben Handhabungsvorrichtung 6, in einem Transportbehälter 5 abgelegt, besonders bevorzugt in denselben Transportbehälter 5, aus dem es zuvor entnommen wurde.

Der Transportbehälter 5 wurde vorzugsweise zwischenzeitlich weiter transportiert bzw. von der Frässtation 3A zu bzw. vor die Drehstation 3B transportiert. Der Weitertransport erfolgt vorzugsweise während der Bearbeitung des Brillenglases 2 und/oder der Handhabung des Brillenglases 2 mittels der Handhabungsvorrichtung 6.

Es ist bevorzugt, wenn mittels der Handhabungsvorrichtung 6 mehrere Brillengläser 2 gleichzeitig gehandhabt werden. Es ist insbesondere bevorzugt, wenn die Handhabungsvorrichtung 6 während der Bearbeitung eines ersten Brillenglases 2 in der Frässtation 3A bereits ein weiteres Brillenglas 2 aus dem gleichen oder einem weiteren Transportbehälter 5 entnimmt und vorzugsweise zur anschließenden Bearbeitung in der Frässtation 3A bereits vorhält bzw. bevorratet. Wenn die Bearbeitung des ersten Brillenglases 2 in der Frässtation 3A beendet ist, kann die Handhabungsvorrichtung 6 dann dieses Brillenglas 2 aus der Frässtation 3A entnehmen und unmittelbar im Anschluss daran das bevorratete, noch nicht gefräste weitere Brillenglas 2 an die Bearbeitungsstation 3 bzw. Frässtation 3A übergeben.

Vorzugsweise wird dann das erste fertig gefräste Brillenglas 2 wie beschrieben an die Drehstation 3B übergeben. Es ist auch möglich, dass nach dem Fräsen des ersten Brillenglases 2 dieses erst an die Drehstation 3B übergeben wird und erst danach das (bereits bevorratete) weitere Brillenglas 2 an die Frässtation 3A übergeben wird.

Falls in der Drehstation 3B bereits ein Brillenglas 2 bearbeitet wird, wird vorzugsweise abgewartet, bis die Bearbeitung beendet ist, um zunächst das Brillenglas 2 aus der Drehstation 3B zu entnehmen und erst dann das nächste Brillenglas 2 an die Drehstation 3B zu übergeben.

Das Drehen und/oder Fräsen erfolgt vorzugsweise wie in der DE 10 2005 057 725 A1 beschrieben.

Vorzugsweise ist eine Brillenglashalterung bzw. Werkstückspindel der Frässtation 3A und/oder Drehstation 3B horizontal ausgerichtet und/oder wird das Brillenglas 2 beim Drehen bzw. Fräsen um eine horizontal verlaufende Rotationsachse rotiert.

Vorzugweise erfolgt nach dem Fräsen und/oder Drehen des Brillenglases 2 ein Markieren bzw. Signieren des Brillenglases 2. Das Markieren bzw. Signieren kann jedoch auch erst zu einem späteren Zeitpunkt, insbesondere nach einem Polieren des Brillenglases 2, erfolgen.

Der Transportbehälter 5 mit dem Brillenglas 2 wird nach dem Drehen des Brillenglases 2 vorzugsweise weiter transportiert, insbesondere zur Signierstation 3C transportiert.

Vorzugsweise wird das Brillenglas 2 mittels einer Handhabungsvorrichtung 18 der Signierstation 3C aus dem Transportbehälter 5 entnommen, anschließend, insbesondere mit einem Laser 21 bzw. Laserstrahl, signiert bzw. markiert und wieder an den Transportbehälter 5 übergeben bzw. in diesem abgelegt.

Vorzugsweise wird der Transportbehälter 5 mit dem Brillenglas 2 anschließend weiter transportiert und/oder von der Bearbeitungsseite 1A auf die Polierseite 1B übergeben. Insbesondere wird der Transportbehälter 5 an eine weitere bzw. die zweite Transportvorrichtung 4A des Transportsystems 4 übergeben, bevorzugt mit einer insbesondere am Ende des Transportsystems 4 bzw. der ersten Transportvorrichtung 4A angeordneten Wechseleinrichtung 4B.

Vorzugsweise erfolgt als weiterer bzw. nächster Bearbeitungsschritt ein Polieren des Brillenglases 2. Das Bearbeitungssystem 1 weist hierzu vorzugsweise zwei, insbesondere gleichartige oder identisch ausgebildete, Polierstationen 3D auf. Hierdurch kann der Durchsatz des Bearbeitungssystems 1 erhöht werden, da der Poliervorgang üblicherweise deutlich länger dauert als das Drehen und/oder Fräsen des Brillenglases 2.

Das Bearbeitungssystem 1 weist vorzugsweise eine weitere und/oder von der zuvor erwähnten Handhabungsvorrichtung 6 separate und/oder unabhängig arbeitende Handhabungsvorrichtung 7 zur Handhabung von Brillengläsern 2 auf. Die Handhabungsvorrichtung 7 ist vorzugsweise mehreren Bearbeitungsstationen 3, insbesondere den zwei Polierstationen 3D, zugeordnet.

Vorzugsweise entnimmt die Handhabungsvorrichtung 7 das Brillenglas 2 aus dem Transportbehälter 5 und übergibt es an eine der Polierstationen 3D. Das Brillenglas 2 wird vorzugsweise nur in einer der beiden Polierstationen 3D bearbeitet bzw. poliert.

Vorzugsweise ist die Polierstation 13D bzw. ist jede der Polierstationen 13D zum gleichzeitigen bzw. parallelen Polieren zweier Brillengläser 2 ausgebildet.

Die Handhabungsvorrichtung 7 ist vorzugsweise zur gleichzeitigen bzw. paarweisen Handhabung von zwei Brillengläsern 2 ausgebildet. Vorzugsweise werden mit der Handhabungsvorrichtung 7 zwei Brillengläser 2 gleichzeitig bzw. paarweise aus dem Transportbehälter 5 entnommen und/oder an die Polierstation 3D übergeben. Vorzugsweise werden mittels der Handhabungsvorrichtung 7 zwei Brillengläser 2 gleichzeitig bzw. paarweise aus der Polierstation 3D entnommen und/oder an den Transportbehälter 5 übergeben.

Vorzugsweise werden mittels der Handhabungsvorrichtung 7 zwei zu polierende Brillengläser 2 gleichzeitig aus dem Transportbehälter 5 entnommen, anschließend zwei bereits polierte Brillengläser 2 aus der Polierstation 3D entnommen und unmittelbar im Anschluss daran die zwei noch zu polierenden Brillengläser 2 an die Polierstation 3D übergeben und erst dann die zwei bereits polierten Brillengläser 2 wieder in einen bzw. den ursprünglichen Transportbehälter 5 abgelegt.

Vorzugsweise verfährt die Handhabungsvorrichtung 7, insbesondere parallel zu dem Transportsystem 4, während eine Bearbeitung von Brillengläsern 2 in einer Polierstation 3D erfolgt. Insbesondere werden Brillengläser 2 an eine der Polierstationen 3D übergeben und/oder aus dieser entnommen, während in der anderen Polierstation 3D weitere Brillengläser 2 poliert werden.

Vorzugsweise erfolgt gleichzeitig mit der Übergabe und/oder Entnahme bzw. einem Wechsel der Brillengläser 2 in der Polierstation 3D auch ein Wechsel von Polierwerkzeugen. Zum Wechsel der Polierwerkzeuge ist vorzugsweise die Handhabungsvorrichtung 8 vorgesehen.

Vorzugsweise erfolgt das Polieren wie in der US 2014/0038494 A1 beschrieben bzw. ist die Polierstation 3D wie in dieser Schrift dargelegt ausgebildet.

Nach dem Polieren werden die Brillengläser 2 vorzugsweise gereinigt, insbesondere gewaschen und/oder getrocknet. Dies erfolgt insbesondere, während in der Polierstation 3D bzw. den Polierstationen 3D weitere Brillengläser 2 poliert werden.

Das zuvor beschriebene Signieren der Brillengläser 2 kann auch erst nach dem Polieren und/oder Reinigen der Brillengläser 2 erfolgen.

Vorzugsweise werden die Transportbehälter 5 bzw. Brillengläser 2 schließlich wieder an das externe Transfersystem 16 übergeben.

Zusammengefasst werden in dem Bearbeitungssystem 1 vorzugsweise mehrere Brillengläser 2 gleichzeitig in verschiedenen Bearbeitungsstationen 3 bearbeitet, insbesondere gefräst, drehend bearbeitet, signiert und vorzugsweise in einer von mehreren Polierstationen 3D, poliert. Vorzugsweise erfolgt der Transport der Transportbehälter 5 durch das Transportsystem 4, während die Brillengläser 2 mittels mehrerer Handhabungsvorrichtungen 6, 7, 18 gehandhabt und/oder in den Bearbeitungsstationen 3 bearbeitet werden.

### Transportsystem

Vorzugsweise ist das Transportsystem 4 zumindest im Wesentlichen in der Mitte oder Mittelachse des Bearbeitungssystems 1 angeordnet und/oder sind die Bearbeitungsstationen 3 oder zumindest Teile davon auf verschiedenen, insbesondere voneinander abgewandten, Seiten des Transportsystems 4 angeordnet.

Die Transportvorrichtungen 4A sind vorzugsweise unmittelbar zueinander benachbart, insbesondere nebeneinander angeordnet.

Die Bearbeitungsstationen 3 bilden vorzugsweise zwei Reihen, insbesondere wobei zwischen den Reihen das Transportsystem 4 und insbesondere die beiden Transportvorrichtungen 4A angeordnet sind. Gemäß einer anderen Ausführungsform kann aber auch vorgesehen sein, dass die Bearbeitungsstationen 3 zwischen den Transportvorrichtungen 4A und/oder die Transportvorrichtungen 4A jeweils am Rand des Bearbeitungssystem 1 angeordnet sind.

Vorzugsweise weist jeder der Teile 1A, 1B eine Transportvorrichtung 4A auf.

Die Bearbeitungsstationen 3 sind vorzugsweise zumindest teilweise seitlich und/oder unterhalb des Transportsystems 4 angeordnet.

Bevorzugt sind die Transportvorrichtungen 4A zumindest im Wesentlichen gleichartig bzw. identisch ausgebildet. Ausführungen in Bezug auf eine der Transportvorrichtungen 4A gelten vorzugsweise auch für die andere Transportvorrichtung 4A.

Wie bereits eingangs erwähnt, können die Transportvorrichtungen 4A auch lediglich durch verschiedene Abschnitte eines Transportsystems 4 gebildet sein.

Die Transportvorrichtungen 4A sind vorzugsweise als Linearförderer, besonders bevorzugt als Förderbänder, ausgebildet und/oder parallel zueinander angeordnet.

Das Transportsystem 4 bzw. die Transportvorrichtungen 4 können getaktet sein.

Die Transportvorrichtungen 4A weisen vorzugsweise entgegengesetzte bzw. antiparallele Transportrichtungen R1, R2 auf. Die Transportrichtungen R1 und/oder R2 verlaufen vorzugsweise parallel zur X-Achse und/oder horizontal.

Es ist auch möglich, dass eine oder mehrere Transportvorrichtungen 4A mehrere Transportrichtungen aufweisen bzw. dazu ausgebildet sind, Transportbehälter 5 bzw. Brillengläser 2 in einander entgegengesetzten Richtungen bzw. vor und zurück zu transportieren.

Die Transportbehälter 5 sind vorzugsweise als Kisten ausgebildet. Insbesondere ist die Kiste auf der Oberseite offen, sodass eine Handhabung der Brillengläser 2 von oben ermöglicht ist.

Vorzugsweise ist jeder Transportbehälter 5 einem Brillenglas 2 bzw. einem Paar von Brillengläsern 2 zugeordnet oder umgekehrt. Nach einer Bearbeitung in einer Bearbeitungsstation 3 werden die Brillengläser 2 vorzugsweise wieder in demselben Transportbehälter 5 abgelegt, aus dem sie zuvor zur Bearbeitung entnommen wurden.

Vorzugsweise weisen die Transportbehälter 5 einen Identifikator für den Transportbehälter 5 bzw. die mit dem Transportbehälter 5 transportierten Brillengläser 2 auf. Der Identifikator kann beispielsweise als Barcode oder RFID-Chip ausgebildet sein.

Alternativ oder zusätzlich können die Brillengläser 2 und/oder Blockstücke 2A jeweils mit einem Identifikator versehen sein.

Vorzugsweise sind durch den Identifikator Informationen zu den Brillengläsern 2 bzw. zur Bearbeitung der Brillengläser 2 abrufbar und/oder weist der Identifikator solche Informationen auf.

Das Bearbeitungssystem 1 bzw. Transportsystem 4 weist vorzugsweise ein oder mehrere Lesegeräte bzw. Erfassungseinrichtungen 4E zum Erfassen, insbesondere Auslesen, der Identifikatoren insbesondere der Transportbehälter 5 auf. Die Erfassungseinrichtungen 4E sind vorzugsweise seitlich an den Transportvorrichtungen 4A, insbesondere seitlich eines Transportbandes bzw. Förderbandes, angeordnet.

Alternativ oder zusätzlich weisen eine oder mehrere der Handhabungsvorrichtungen 6, 7, 18 eine Erfassungseinrichtung 4E auf. Im Darstellungsbeispiel weist insbesondere die Handhabungsvorrichtung 7 für Brillengläser 2 der Polierseite 1B eine Erfassungseinrichtung 4E auf.

Das Bearbeitungssystem 1 bzw. Transportsystem 4 weist vorzugsweise eine Aufnahme und eine Abgabe bzw. einen Eingang E und einen Ausgang A für Brillengläser 2 bzw. Transportbehälter 5 auf.

Der Begriff "Eingang" bezeichnet insbesondere die Stelle, an der die Brillengläser 2 bzw. Transportbehälter 5 in das Bearbeitungssystem 1 eintreten bzw. (von dem externen Transfersystem 16) an das Bearbeitungssystem 1 übergeben werden. Entsprechend bezeichnet der Begriff "Ausgang" die Stelle, an der die Brillengläser 2 bzw. Transportbehälter 5 das Bearbeitungssystem 1 bzw. Transportsystem 4 wieder verlassen und/oder an das externe Transfersystem 16 übergeben werden.

Der Eingang E und Ausgang A des Bearbeitungssystems 1 bzw. Transportsystems 4 sind vorzugsweise unmittelbar zueinander benachbart bzw. nebeneinander und/oder auf der gleichen Seite des Bearbeitungssystems 1 angeordnet.

Vorzugsweise weist das Bearbeitungssystem 1 bzw. Transportsystem eine Platte 10A auf, die am Eingang E und/oder Ausgang A angeordnet ist bzw. den Eingang E und/oder Ausgang A bildet. Vorzugsweise weist die Platte 10A zwei Durchbrechungen auf, durch die die Brillengläser 2 bzw. Transportbehälter 5 in das Bearbeitungssystem 1 bzw. Transportsystem 4 eintreten bzw. dieses verlassen.

Die Platte 10A kann insbesondere einen Teil der Verkleidung 10 bilden. Es ist jedoch auch möglich, dass die Platte 10A innerhalb der Verkleidung 10 angeordnet ist.

Insbesondere ist das Transportsystem 4 derart ausgebildet, dass die Transportbehälter 5 bzw. Brillengläser 2 auf der gleichen Seite des Bearbeitungssystems 1 in dieses eintreten und dieses wieder verlassen bzw. das Bearbeitungssystem 1 nicht in einer Richtung bzw. entlang einer Achse vollständig durchlaufen.

Das Transportsystem 4 weist vorzugsweise eine Wechseleinrichtung 4B auf, mittels der die Brillengläser 2 bzw. Transportbehälter 5 zwischen Transportvorrichtungen 4A wechseln können bzw. von einer Transportvorrichtung 4A zu einer weiteren Transportvorrichtung 4A wechseln können bzw. transportierbar sind. Vorzugsweise ist die Wechseleinrichtung 4B in einem Endbereich des Transportsystems 4 bzw. der Transportvorrichtungen 4A und/oder benachbart zu bzw. kurz vor den Schaltschränken 11A angeordnet. Die Wechseleinrichtung 4B ist insbesondere am Ende des Transportsystems 4 bzw. der Transportvorrichtung 4A und/oder dem Eingang E und/oder Ausgang A gegenüberliegend angeordnet.

Vorzugsweise weist die Wechseleinrichtung 4B eine Transportrichtung R3 auf bzw. werden die Transportbehälter 5 mittels der Wechselrichtung 4B in der Transportrichtung R3 gefördert. Die Transportrichtung R3 verläuft vorzugsweise quer, insbesondere senkrecht, zur ersten und/oder zweiten Transportrichtung R1, R2. Vorzugsweise verläuft die Transportrichtung R3 in Y-Richtung.

Die Wechseleinrichtung 4B ist vorzugsweise zum Quertransport der Transportbehälter 5 bzw. Brillengläser 2 ausgebildet.

Die Wechseleinrichtung 4B kann auch zum Drehen der Transportbehälter 5 ausgebildet sein. Hierzu kann die Wechseleinrichtung 4B beispielsweise zwei Kurvenelemente aufweisen, sodass durch die Transportvorrichtungen 4A und die Wechseleinrichtung 4B ein U-förmiges Transportsystem 4 gebildet ist. Die Wechseleinrichtung 4B kann jedoch alternativ oder zusätzlich dazu ausgebildet sein, die Transportbehälter 5 auf der Stelle zu drehen bzw. um eine Rotationsachse zu rotieren.

Die Wechseleinrichtung 4B kann ferner auch durch einen Roboterarm o. dgl. gebildet sein oder diesen aufweisen, wobei der Roboterarm dazu ausgebildet ist, einen Transportbehälter 5 und/oder Brillengläser 2 zu greifen und von einer Transportvorrichtung 4A auf die andere Transportvorrichtung 4A überzusetzen. Gegebenenfalls kann hierbei zusätzlich ein Drehen des Transportbehälters 5 erfolgen.

Durch ein Drehen der Transportbehälter 5 mittels der Wechseleinrichtung 4B wird die relative Ausrichtung der Transportbehälter 5 in Bezug auf die jeweilige lokale Transportrichtung R1, R2, R3 beibehalten.

Insbesondere werden die Brillengläser 2 bzw. Transportbehälter 5 am Eingang E zunächst an die erste Transportvorrichtung 4A übergeben, innerhalb des Bearbeitungssystems 1 in der ersten Transportrichtung R1, vorzugsweise geradlinig bzw. linear, transportiert, mittels der Wechseleinrichtung 4B an die andere bzw. zweite Transportvorrichtung 4A übergeben, mittels der weiteren Transportvorrichtung 4A in die zweite, der ersten Transportrichtung R1 entgegengesetzte Transportrichtung R2 transportiert und vorzugsweise am Ausgang A schließlich wieder an das externe Transfersystem 16 oder eine sonstige Einrichtung übergeben.

Gemäß einer Variante können auch eine oder mehrere weitere Wechseleinrichtungen 4B vorgesehen sein, insbesondere im Bereich des Eingangs E und/oder Ausgangs A und/oder auf der der ersten Wechseleinrichtung 4B gegenüberliegenden Seite des Transportsystems 4, aber auch an beliebigen anderen Positionen.

Das Transportsystem 4 kann auch mehr als zwei bzw. eine oder mehrere weitere Transportvorrichtungen 4A aufweisen, insbesondere um eine Zirkulation von Brillengläsern 2 bzw. Transportbehältern 5 und/oder ein Überholen von Brillengläsern 2 bzw. Transportbehältern 5 zu ermöglichen. Die weitere Transportvorrichtung 4A bzw. die weiteren Transportvorrichtungen 4A ist bzw. sind vorzugsweise parallel zu den in den Figuren dargestellten Transportvorrichtungen 4A angeordnet und/oder weist bzw. weisen zu den Transportrichtungen R1 und/oder R2 parallele Transportrichtungen auf. Die weiteren Transportvorrichtungen 4A sind vorzugsweise unmittelbar benachbart zu den in den Figuren dargestellten Transportvorrichtungen 4A angeordnet, beispielsweise darüber, darunter, daneben und/oder dazwischen. Insbesondere bilden die Transportvorrichtungen 4A einen Kreislauf für die Brillengläser 2 bzw. Transportbehälter 5. Hierzu kann das Transportsystem 4 bzw. können die weiteren Transportvorrichtungen 4A insbesondere eine oder mehrere (zusätzliche) Wechseleinrichtungen 4B aufweisen.

Alternativ oder zusätzlich zur Bildung eines Kreislaufs kann vorgesehen sein, die Transportbehälter 5 bzw. Brillengläser 2 mittels der weiteren Transportvorrichtung 4A bedarfsweise anzuhalten und/oder vor und/oder zurück zu bewegen bzw. zu transportieren, insbesondere also entlang und/oder entgegen der Transportrichtung R1 und/oder R2. Vorzugsweise ist dieselbe (weitere) Transportvorrichtung 4A zum Anhalten und/oder zum Bewegen bzw. Transportieren der Transportbehälter 5 bzw. Brillengläser 2 in zwei einander entgegengesetzte Richtungen ausgebildet. Es können mehrere Verbindungen bzw. (Wechsel-)Einrichtungen zur Anbindung der weiteren Transportvorrichtung(en) 4A vorgesehen sein, sodass an verschiedenen Positionen Transportbehälter 5 bzw. Brillengläser 2 zwischen der weiteren Transportvorrichtung 4A und einer Transportvorrichtung 4A, die die Brillengläser 2 an den Bearbeitungsstationen 3 entlang transportiert, wechseln können und/oder ein Überholen von Brillengläsern 2 bzw. Transportbehältern 5 ermöglicht ist.

Ein Überholen von Brillengläsern 2 bzw. Transportbehältern 5 kann alternativ oder zusätzlich auch über einen Abstell- oder Wartebereich für die Transportbehälter 5 ermöglicht bzw. realisiert werden. Der Wartebereich kann eine (stillstehende) Transportvorrichtung 4A, insbesondere ein stillstehendes Förderband, oder eine sonstige Einrichtung, die zur temporären Aufnahme bzw. zum temporären Bereithalten eines Transportbehälters 5 geeignet ist, wie etwa eine Ablage oder dergleichen, aufweisen bzw. hierdurch gebildet sein. Vorzugsweise ist der Abstell- oder Wartebereich zwischen den Transportvorrichtungen 4A angeordnet. Der Abstell- oder Wartebereich ist vorzugsweise über eine Wechseleinrichtung 4B an die Transportvorrichtungen 4A angebunden, sodass mittels der Wechseleinrichtung 4B die Transportbehälter 5 zwischen dem Abstell- oder Wartebereich und den Transportvorrichtungen 4A wechseln können bzw. transferiert werden können.

Insbesondere ist es durch die weitere(n) Transportvorrichtungen 4A und/oder den Wartebereich möglich, dass Transportbehälter 5 bzw. Brillengläser 2 an einer oder mehreren Bearbeitungsstationen 3 vorbei gefördert werden, also einzelne Bearbeitungsstationen 3 auslassen, und/oder Brillengläser 2 nicht in allen Bearbeitungsstationen 3 bzw. nur in ausgewählten Bearbeitungsstationen 3 bearbeitet werden.

Vorzugsweise ist das Transportsystem 4 lediglich zum Transport der Transportbehälter 5 vorgesehen oder ausgebildet. Die Handhabung der Brillengläser 2 selbst, insbesondere die Übergabe der Brillengläser 2 an die Bearbeitungsstationen 3 und die Entnahme der Brillengläser 2 aus den Bearbeitungsstationen 3, erfolgt vorzugsweise mittels der Handhabungsvorrichtungen 6, 7, 18.

Die Handhabungsvorrichtungen 6, 7, 18 arbeiten vorzugsweise unabhängig von dem Transportsystem 4 und/oder werden separat gesteuert.

Zur Bearbeitung werden die Brillengläser 2 vorzugsweise mittels einer der Handhabungsvorrichtungen 6, 7, 18 aus dem Transportsystem 4 bzw. Transportbehälter 5 entnommen und/oder nach der Bearbeitung wieder in den gleichen Transportbehälter 5 abgelegt bzw. an das Transportsystem 4 bzw. den Transportbehälter 5 übergeben.

Insbesondere wird der Transportbehälter 5 mittels des Transportsystems 4 weiter transportiert, während aus dem Transportbehälter 5 entnommene Brillengläser 2 in einer oder mehreren Bearbeitungsstationen 3 bearbeitet und/oder mittels der Handhabungsvorrichtung 6, 7 gehandhabt werden.

Das Transportsystem 4 weist vorzugsweise einen oder mehrere Stopper 4C auf.

Der Stopper 4C ist vorzugsweise dazu ausgebildet, Transportbehälter 5 zu stoppen bzw. anzuhalten bzw. einen Weitertransport von Transportbehältern 5 (temporär) zu verhindern.

Insbesondere ist der Stopper 4C durch eine Platte bzw. einen Schieber gebildet, der senkrecht zu der Transportvorrichtung 4A bzw. dem Förderband verfahrbar ist, insbesondere in Z-Richtung.

Der Stopper 4C ist vorzugsweise einer Bearbeitungsstation 3 zugeordnet und/oder derart in der Nähe bzw. vor der Bearbeitungsstation 3 positioniert, dass das Brillenglas 2 aus dem Transportbehälter 5 mittels der Handhabungsvorrichtung 6, 7, 18 entnehmbar und/oder an die Bearbeitungsstation 3 übergebbar ist.

Insbesondere kann (zusätzlich) am Eingang E und/oder am Ausgang A ein Stopper 4C angeordnet sein und/oder der Stopper 4C verschiedenen Transportrichtungen zugeordnet sein. Dies ist insbesondere vorteilhaft, falls die Transportvorrichtung 4A, der der Stopper 4C zugeordnet ist, dazu ausgebildet ist, Transportbehälter 5 bzw. Brillengläser 2 in einander entgegengesetzte Richtungen bzw. vor und zurück zu transportieren.

Das Bearbeitungssystem 1 bzw. Transportsystem 4 weist vorzugsweise eine oder mehrere Speichereinrichtungen 4D zur Speicherung von Transportbehältern 5 bzw. Brillengläsern 2 auf.

Die Speichereinrichtung 4D ist vorzugsweise zur temporären Aufnahme bzw. Zwischenspeicherung eines oder mehrerer Transportbehälter 5 ausgebildet. Insbesondere sind die Transportbehälter 5 in der Speichereinrichtung 4D stapelbar bzw. vertikal bzw. in Z-Richtung übereinander anordenbar.

Die Speichereinrichtung 4D ist vorzugsweise in der Nähe des Eingangs E und/oder Ausgangs A des Transportsystems 4 angeordnet. Vorzugsweise ist die Speichereinrichtung 4D an einem der Wechseleinrichtung 4B gegenüberliegenden Ende des Transportsystems 4 angeordnet.

Gemäß einem bevorzugten Ausführungsbeispiel weist jede der Transportvorrichtungen 4A eine Speichereinrichtung 4D, insbesondere in der Nähe des Eingangs E und/oder Ausgangs A, auf.

Alternativ oder zusätzlich kann die Transportvorrichtung 4A mehrere Speichereinrichtungen 4D, beispielsweise in der Nähe der Wechseleinrichtung 4B und/oder (jeweils) zwischen zwei Bearbeitungsstationen 3, aufweisen.

Das externe Transfersystem 16 ist vorzugsweise durch ein oder mehrere Förderbänder gebildet.

Die Förderrichtung des Transfersystems 16 bzw. das Förderband verläuft vorzugsweise in Y-Richtung und/oder quer, insbesondere senkrecht, zu den Transportvorrichtungen 4A bzw. den Transportrichtungen R1, R2.

In Fig. 1 ist das Transfersystem 16 als durchgehendes Förderband angedeutet, von dem zwei Abschnitte quer abzweigen und das Transfersystem 16 an das Transportsystem 4 bzw. dessen Ein- und Ausgang E, A anbinden. Bei dieser Ausführungsform erfolgt vorzugsweise eine Querförderung der Transportbehälter 5 zum Eingang E und/oder vom Ausgang A. Das Bearbeitungssystem 1 bzw. das Transportsystem 1 ist vorzugsweise quer, insbesondere senkrecht, zu dem Transfersystem 16 bzw. einer Hauptförderrichtung H des Transfersystems 16 angeordnet. Insbesondere verläuft die bzw. die Transportrichtung R1, R2 quer, insbesondere senkrecht, zur Hauptförderrichtung H des Transfersystems 16.

Die Ausrichtung der Transportbehälter 5 bezüglich des Transfersystems 16 bzw. der Hauptförderrichtung H kann bei dem Übergang zwischen dem Transfersystem 16 und dem Transportsystem 4 erhalten bleiben oder sich ändern.

Gemäß einem Beispiel weist das Transfersystem 16 bzw. Bearbeitungssystem 1 am Eingang E und Ausgang A jeweils Kurvenelemente aufweist, über die quer bzw. rechtwinklig zu der Hauptförderrichtung H verlaufende Abschnitte des Transfersystems 16 an ein Förderband des Transfersystems 16 angeschlossen sind, dass die Transportbehälter 5 in der Hauptförderrichtung H fördert. In diesem Fall werden die Transportbehälter 5 vor dem Eingang E in einer Kurve gefördert und auch nach dem Ausgang A in einer Kurve gefördert, sodass das Transportsystem 4 und das Transfersystem 16 ein durchgängiges Förderband mit mehreren Abwinklungen bzw. Kurven bilden. Gegebenenfalls ist es bei dieser Ausführungsform nicht möglich, die Transportbehälter 5 mittels des Transfersystems 16 an dem Bearbeitungssystem 1 vorbei zu transportieren. Bei dieser Ausführungsform ändert sich die Ausrichtung der Transportbehälter 5 bezüglich der Hauptförderrichtung H beim Übergang zwischen dem Transfersystem 16 und dem Transportsystem 4. Bezüglich der jeweiligen "lokalen" Förderrichtung, also der Hauptrichtung H im Transfersystem 16 und der Transportrichtung R1, R2 im Transportsystem 4, bleibt die Ausrichtung der Transportbehälter 5 jedoch erhalten. Dies kann auch durch Drehen der Transportbehälter 5 vor dem Eintritt ins Bearbeitungssystem 1 bzw. nach dem Austritt aus dem Bearbeitungssystem 1 erreicht werden, ohne dass Kurvenelemente vorgesehen sind.

Es sind jedoch auch Lösungen möglich, bei denen die Transportbehälter 5 nicht gedreht werden bzw. die Ausrichtung der Transportbehälter 5 relativ zu dem Transfersystem 16 bzw. der Hauptförderrichtung H beim Übergang zwischen dem Transfersystem 16 und dem Bearbeitungssystem 1 bzw. Transportsystem 4 erhalten bleibt.

Das Bearbeitungssystem 1 bzw. Transportsystem 4 und/oder die Handhabungsvorrichtungen 6, 7, 18 weisen vorzugsweise einen Sensor 4F auf, mit dem feststellbar ist, ob sich in einem Transportbehälter 5 ein oder mehrere Brillengläser 2 befinden.

Besonders bevorzugt ist der Sensor 4F als Taster ausgebildet. Insbesondere ist der Sensor 4F seitlich an der Transportvorrichtung 4A derart angeordnet, dass ein Fühler des Sensors 4F vertikal bzw. in Z-Richtung verfahrbar und/oder oberhalb der mit Transportvorrichtung 4 transportierten Transportbehälter 5 bzw. Brillengläser 2 angeordnet ist. Vorzugsweise kann durch Verfahren des Fühlers, insbesondere in Z-Richtung, festgestellt werden, ob sich in einem Transportbehälter 5 ein oder zwei Brillengläser 2 befinden.

Bevorzugt weist der Sensor 4F mehrere, insbesondere zwei, nebeneinander angeordnete Fühler auf.

Das Bearbeitungssystem 1 bzw. Transportsystem 4 und/oder die Handhabungsvorrichtungen 6, 7, 18 können mehrere Sensoren 4F aufweisen. Beispielsweise kann mehreren bzw. allen Bearbeitungsstationen 3 jeweils ein Sensor 4F zugeordnet sein.

In einem nicht dargestellten Ausführungsbeispiel kann das Transportsystem 4 bzw. die Transportvorrichtung 4A austauschbar und/oder modulartig ausgebildet sein bzw. ein Modul oder eine austauschbare Baueinheit bilden. Das Transportsystem 4 bzw. die Transportvorrichtung 4A ist vorzugsweise derart ausgebildet, dass es/sie zumindest im Wesentlichen vollständig bzw. als Einheit aus dem Bearbeitungssystem 1 herausbewegbar und/oder austauschbar ist. Insbesondere ist dies vorteilhaft um eine Reparatur, Wartung, Inspektion, Instandhaltung und/oder einen Zugang zu der Transportvorrichtung 4A bzw. dem Transportsystem 4 zu ermöglichen bzw. zu erleichtern.

### Handhabungsvorrichtung Bearbeitungsseite

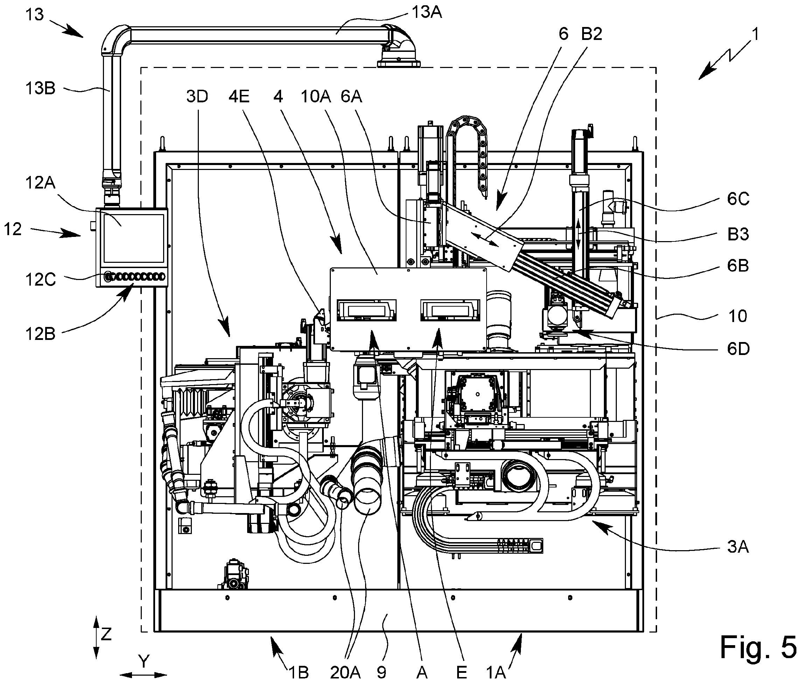

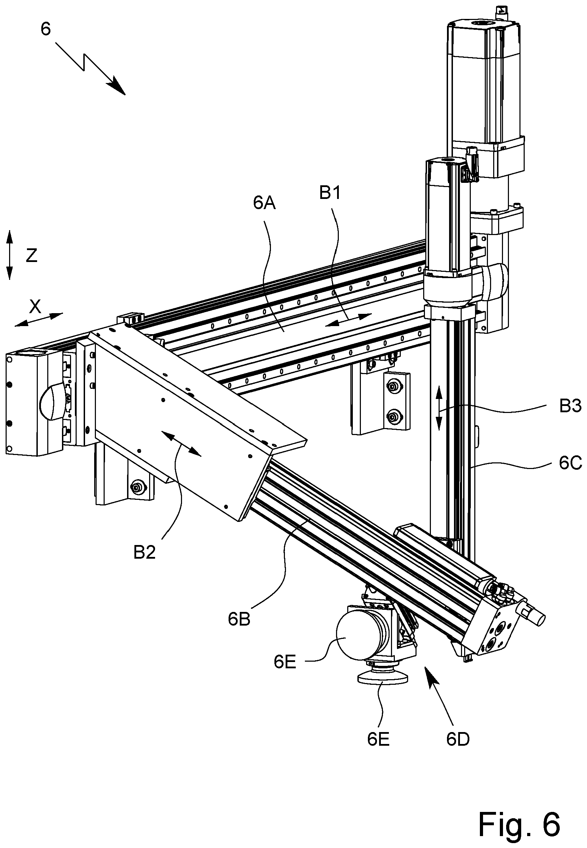

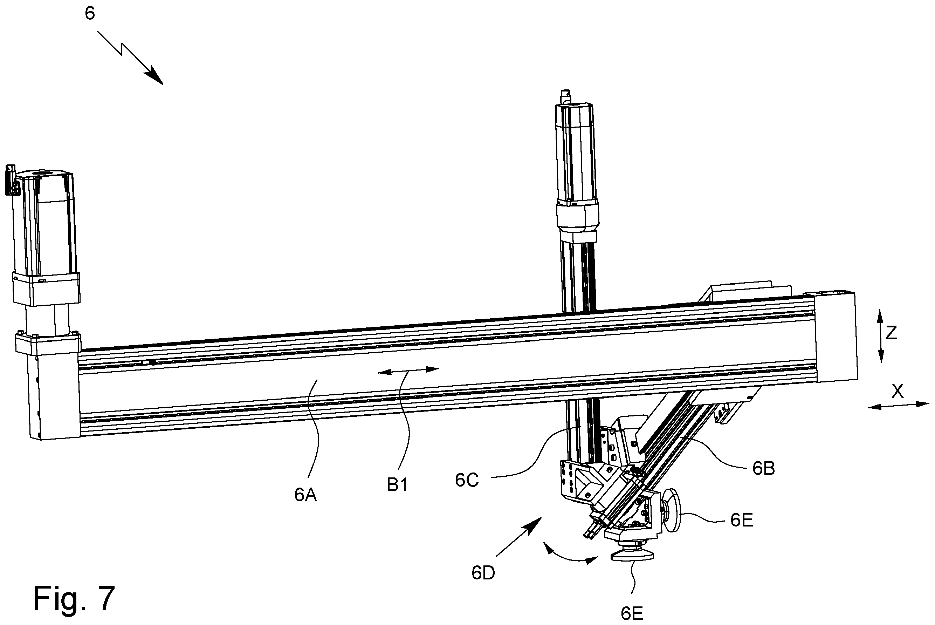

Während die Handhabungsvorrichtungen 6-8, 18 der Übersichtlichkeit halber in Fig. 1 nur sehr schematisch angedeutet sind und in Fig. 2 weggelassen wurden, ist in Fig. 4 und 5 das Bearbeitungssystem 1 mit der Handhabungsvorrichtung 6 in verschiedenen Ansichten dargestellt. Fig. 6 und 7 zeigen die Handhabungsvorrichtung 6 in verschiedenen Ansichten.

Die Handhabungsvorrichtung 6 ist vorzugsweise zur Handhabung von Brillengläsern 2 ausgebildet, insbesondere zur gleichzeitigen Handhabung mehrerer Brillengläser 2, besonders bevorzugt von zwei Brillengläsern 2.

Vorzugsweise ist die Handhabungsvorrichtung 6 mehreren Bearbeitungsstationen 3, insbesondere der Frässtation 3A und der Drehstation 3B, zugeordnet und/oder auf der Bearbeitungsseite 1A angeordnet.

Die Handhabungsvorrichtung 6 ist vorzugsweise zur Übergabe von Brillengläsern 2 zwischen dem Transportsystem 4 und mehreren Bearbeitungsstationen 3 ausgebildet. Insbesondere ist die Handhabungsvorrichtung 6 zur direkten Übergabe von Brillengläsern 2 an eine Werkstückspindel bzw. ein Spannfutter 2D der Werkstückspindel der Frässtation 3A und/oder der Drehstation 3B ausgebildet.

Die Handhabungsvorrichtung 6 ist vorzugsweise entlang bzw. parallel zu dem Transportsystem 4, und/oder parallel zur X-Achse verfahrbar.

Die Handhabungsvorrichtung 6 ist vorzugsweise zumindest teilweise oberhalb des Transportsystems 4 angeordnet und/oder zur Handhabung der Brillengläser 2 von oberhalb des Transportsystems 4 bzw. der Transportvorrichtungen 4A ausgebildet. Dies ist einem kompakten Aufbau zuträglich.

Die Handhabungsvorrichtung 6 oder zumindest Teile davon sind vorzugsweise lotrecht über dem Transportsystem 4 bzw. der Transportvorrichtung 4A angeordnet. Insbesondere ist dies einem kompakten Aufbau des Bearbeitungssystems 1 zuträglich.

Die Handhabungsvorrichtung 6 weist vorzugsweise mehrere Bewegungsachsen B1, B2, B3 auf und/oder ist entlang der Bewegungsachsen B1-B3 bewegbar bzw. verfahrbar. Vorzugsweise ist die Bewegungsachsen B1, die Bewegungsachse B2 und/oder die Bewegungsachse B3 eine lineare Bewegungsachse.

Die Bewegungsachse B1 verläuft vorzugsweise zumindest im Wesentlichen horizontal und/oder parallel zur X-Achse.

Besonders bevorzugt verläuft die Bewegungsachse B1 parallel zu der Transportvorrichtung 4A bzw. Transportrichtung R1, R2.

Die Bewegungsachse B1 ist vorzugsweise lotrecht über dem bzw. oberhalb des Transportsystems 4 angeordnet.

Die Bewegungsachse B2 verläuft vorzugsweise quer, insbesondere orthogonal, zur Bewegungsachse B1. Vorzugsweise verläuft die Bewegungsachse B2 schräg zur Vertikalen bzw. Z-Richtung und/oder zumindest teilweise oberhalb des Transportsystems 4.

Die Bewegungsachse B3 verläuft vorzugsweise vertikal bzw. lotrecht bzw. in Z-Richtung.

Die Handhabungsvorrichtung 6 weist vorzugsweise eine Schiene oder Führung 6A auf oder ist daran angeordnet. Die Handhabungsvorrichtung 6 ist vorzugsweise entlang der Führung 6A bzw. parallel zur Führung 6A verfahrbar.

Insbesondere ist die Führung 6A als Linearführung ausgebildet und/oder parallel zur Transportvorrichtung 4A bzw. Transportrichtung R1, R2 und/oder X-Achse angeordnet.

Die Führung 6A ist vorzugsweise oberhalb, insbesondere lotrecht bzw. mittig über, der Transportvorrichtung 4A bzw. des Transportsystems 4 angeordnet.

Vorzugsweise weist die Führung 6A die Bewegungsachse B1 auf oder bildet die Führung 6A die Bewegungsachse B1.

Zur besseren Unterscheidung wird die Führung 6A im Folgenden auch als Längsführung 6A bezeichnet.

Die Handhabungsvorrichtung 6 weist vorzugsweise eine Führung 6B, im Folgenden zur besseren Unterscheidung auch als Querführung 6B bezeichnet, auf.

Die Längsführung 6A und/oder Querführung 6B sind vorzugsweise durch eine Führungsschiene und/oder einen Schlitten gebildet oder weisen diese auf. Die Querführung 6B ist vorzugsweise verschiebbar an der Längsführung 6A gelagert und/oder entlang der Längsführung 6A bewegbar bzw. verfahrbar.

Die Querführung 6B ist vorzugsweise quer, insbesondere orthogonal, zur Längsführung 6A und/oder Bewegungsachse B1 angeordnet.

Vorzugsweise ist die Querführung 6B zumindest teilweise oberhalb des Transportsystems 4 angeordnet.

Die Querführung 6B verläuft vorzugsweise schräg zur Vertikalen bzw. Z-Achse und/oder senkrecht zur X-Achse.

Vorzugsweise weist die Querführung 6B die Bewegungsachse B2 auf oder bildet die Querführung 6B die Bewegungsachse B2.

Die Handhabungsvorrichtung 6 weist vorzugsweise eine Stelleinrichtung 6C auf.

Die Stelleinrichtung 6C ist vorzugsweise in Z-Richtung bzw. entlang der Bewegungsachse B3 bewegbar bzw. verstellbar. Vorzugsweise bildet die Stelleinrichtung 6C die Bewegungsachse B3 oder weist die Stelleinrichtung 6C die Bewegungsachse B3 auf.

Die Stelleinrichtung 6C ist vorzugsweise verschiebbar an der Querführung 6B gelagert und/oder entlang der Querführung 6B bzw. Bewegungsachse B2 bewegbar bzw. verfahrbar.

Die Handhabungsvorrichtung 6 weist vorzugsweise einen Schwenkkopf 6D auf. Vorzugsweise weist die Stelleinrichtung 6C den Schwenkkopf 6D auf bzw. ist der Schwenkkopf 6D an der Stelleinrichtung 6C, insbesondere an deren unteren Ende, angeordnet.

Der Schwenkkopf 6D ist vorzugsweise um eine Schwenkachse schwenkbar, wie in Fig. 7 mit einem Pfeil angedeutet. Vorzugsweise verläuft die Schwenkachse senkrecht zur Bewegungsachse B3 bzw. Z-Richtung und/oder in Y-Richtung.

Der Schwenkkopf 6D ist vorzugsweise um wenigstens etwa 90° verschwenkbar.

Die Handhabungsvorrichtung 6, insbesondere der Schwenkkopf 6D, weist vorzugsweis mehrere Halteeinrichtungen 6E, insbesondere Greifer und/oder Sauger, zum Halten von Brillengläsern 2 auf. Beim Darstellungsbeispiel sind die Halteeinrichtungen 6E jeweils als Sauger ausgebildet. Die Sauger bzw. Halteeinrichtungen 6E sind vorzugsweise in einem Winkel von etwa 90° zueinander angeordnet. Insbesondere wird hierdurch ein schnelles Wechseln von Brillengläsern 2 unterstützt.

Die Handhabungsvorrichtung 6 bzw. der Schwenkkopf 6D ist vorzugsweise dazu ausgebildet, zwei Brillengläser 2 gleichzeitig zu halten.

Vorzugsweise wird zum Wechseln von Brillengläsern 2 bzw. zum Austausch eines bearbeiteten Brillenglases 2 gegen ein zu bearbeitendes Brillenglas 2 in einer Bearbeitungsstation 3, insbesondere der Frässtation 3A und/oder der Drehstation 3B, wie folgt vorgegangen.

Vorzugsweise wird während der Bearbeitung eines ersten Brillenglases 2 in einer Bearbeitungsstation 3, insbesondere in der Frässtation 3A und/oder Drehstation 3B, der Schwenkkopf 6D bzw. eine der Halteeinrichtungen 6E über einem Transportbehälter 5 mit einem zweiten, zu bearbeitenden Brillenglas 2 positioniert und dieses zweite Brillenglas 2 mittels der Halteeinrichtung 6E gegriffen und dem Transportbehälter 5 entnommen. Anschließend wird vorzugsweise der Schwenkkopf 6D mit dem zu bearbeitenden zweiten Brillenglas 2 in die Nähe der Bearbeitungsstation 3 bewegt, insbesondere derart, dass mit dem Schwenkkopf 6D bzw. der freien Halteeinrichtung 6E möglichst schnell das erste Brillenglas 2 aus der Bearbeitungsstation 3 entnommen werden kann, wenn die Bearbeitung beendet ist.

Wenn nun in der Bearbeitungsstation 3 das erste Brillenglas 2 fertig bearbeitet ist, wird vorzugsweise die Handhabungsvorrichtung 6 bzw. der Schwenkkopf 6D zu dem fertig bearbeiteten Brillenglas 2 bewegt bzw. verfahren und mit der nicht belegten Halteeinrichtung 6E das fertig bearbeitete erste Brillenglas 2 gegriffen und aus dem Spannfutter 2D entnommen. Anschließend wird vorzugsweise der Schwenkkopf 6D geschwenkt, vorzugsweise um etwa 90°, und gegebenenfalls vor, während und/oder nach dem Schwenken des Schwenkkopfes 6D die Stelleinrichtung 6C verfahren, sodass das zu bearbeitende zweite Brillenglas 2 in die Bearbeitungsstation 3, insbesondere ein Spannfutter 2D einer Werkstückspindel der Bearbeitungsstation 3, eingesetzt werden kann. Das zweite Brillenglas 2 wird in die Bearbeitungsstation 3 bzw. das Spannfutter 2D eingesetzt. Danach wird vorzugsweise der Schwenkkopf 6D mit dem fertig bearbeitenden Brillenglas 2 wieder aus der Bearbeitungsstation 3 heraus bewegt.

Vorzugsweise wird im Anschluss das fertig bearbeitete Brillenglas 2 wahlweise an eine weitere Bearbeitungsstation 3, insbesondere die Drehstation 3B, oder den Transportbehälter 5 für das Brillenglas 2 übergeben.

Die Handhabung von Brillengläsern 2 mit der Handhabungsvorrichtung 6 erfolgt vorzugsweise während der Bearbeitung weiterer Brillengläser 2 in den Bearbeitungsstationen 3, insbesondere der Frässtation 3A und/oder der Drehstation 3B. Insbesondere werden während der Bearbeitung eines oder mehrerer Brillengläser 2 in der Frässtation 3A und/oder Drehstation 3B eines oder mehrere weitere Brillengläser 2 aus Transportbehältern 5 entnommen, in Transportbehälter 5 abgelegt und/oder zwischen den Transportbehältern 5 und/oder den Bearbeitungsstationen 3 transferiert.

Auf diese Weise können die Bearbeitungszeiten der Bearbeitungsstationen 3 sinnvoll genutzt und der Durchsatz von Brillengläsern 2 erhöht werden bzw. Stillstandzeiten der Bearbeitungsstationen 3 minimiert werden. Die Bearbeitungszeiten für ein Brillenglas 2 betragen in der Frässtation 3A üblicherweise etwa 10 bis 15 Sekunden und in der Drehstation 3B üblicherweise etwa 30 Sekunden. Daher ist es für eine optimale Auslastung des Bearbeitungssystems 1 besonders vorteilhaft, insbesondere bei der Drehstation 3B die Brillengläser 2 schnell zu wechseln und/oder für weitere Handhabungsschritte die Zeit zu nutzen, in der ein oder mehrere Brillengläser 2 in der Drehstation 3B bearbeitet werden.

### Handhabungsvorrichtung Polierseite

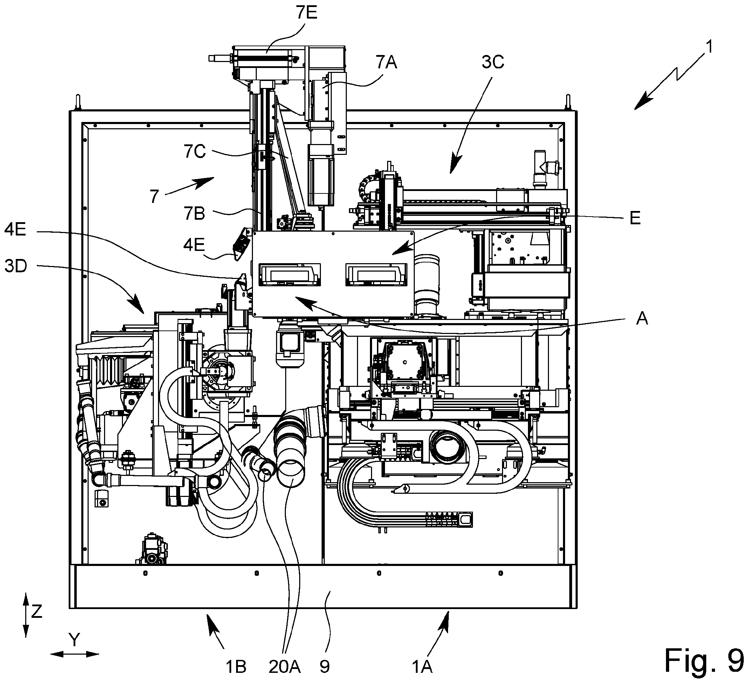

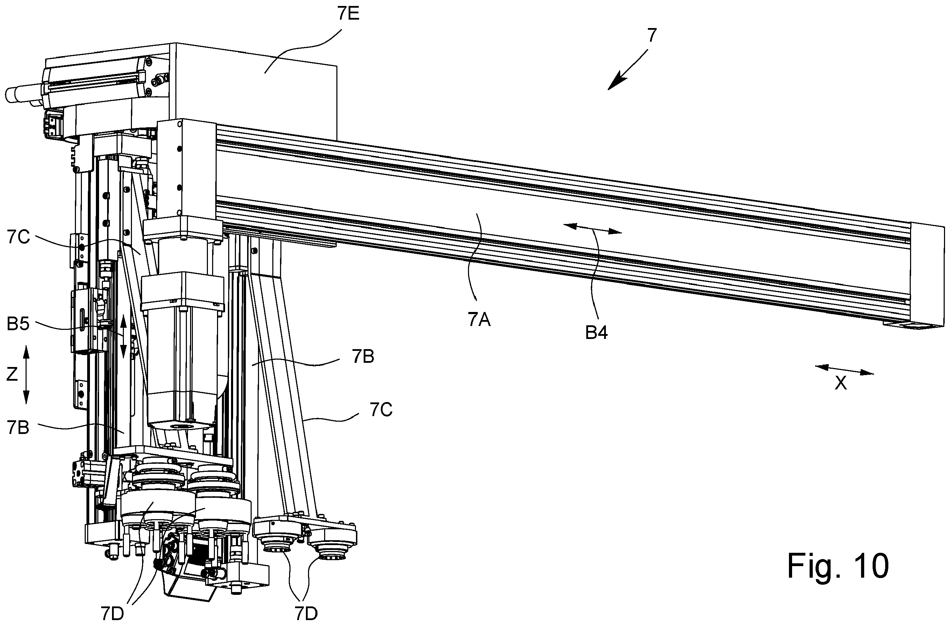

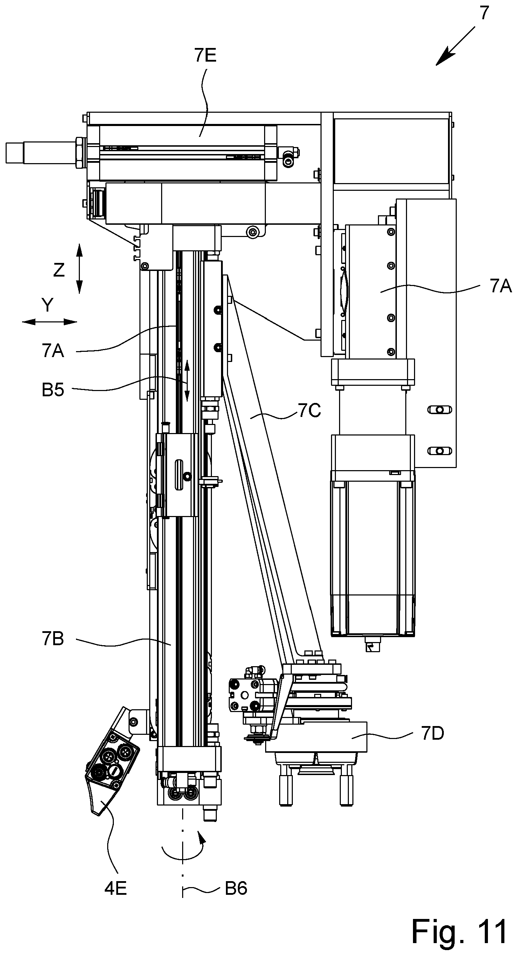

In Fig. 8 und 9 ist das Bearbeitungssystem 1 mit der Handhabungsvorrichtung 7 in verschiedenen Ansichten dargestellt. Fig. 10 und 11 zeigen die Handhabungsvorrichtung 7 in verschiedenen Darstellungen.

Die Handhabungsvorrichtung 7 ist vorzugsweise zur Handhabung von Brillengläsern 2 ausgebildet, insbesondere zur gleichzeitigen Handhabung mehrerer Brillengläser 2, besonders bevorzugt von vier Brillengläsern 2 bzw. zwei Paaren von Brillengläsern 2.

Vorzugsweise ist die Handhabungsvorrichtung 7 mehreren Bearbeitungsstationen 3, insbesondere einer oder mehreren Polierstationen 3D und/oder der Reinigungsstation 3E, zugeordnet und/oder auf der Polierseite 1B angeordnet.

Die Handhabungsvorrichtung 7 ist vorzugsweise zur Übergabe von Brillengläsern 2 zwischen dem Transportsystem 4 und mehreren Bearbeitungsstationen 3, insbesondere der Polierstation 3D und/oder Reinigungsstation 3E, ausgebildet. Insbesondere ist die Handhabungsvorrichtung 7 zur direkten Übergabe von Brillengläsern 2 an eine oder mehrere Werkstückspindeln bzw. Spannfutter 2D der Werkstückspindeln der Polierstation 3D ausgebildet.

Die Handhabungsvorrichtung 7 ist vorzugsweise entlang bzw. parallel zu dem Transportsystem 4 bzw. mindestens einer der Transportvorrichtungen 4A verfahrbar, insbesondere parallel zur X-Achse. Alternativ oder zusätzlich sind die Handhabungsvorrichtung 7 der Polierseite 1B und die Handhabungsvorrichtung 6 der Bearbeitungsseite 1A parallel zueinander angeordnet und/oder verfahrbar.

Die Handhabungsvorrichtung 7 ist vorzugsweise zumindest teilweise oberhalb des Transportsystems 4 angeordnet und/oder zur Handhabung der Brillengläser 2 von oberhalb des Transportsystems 4 bzw. der Transportvorrichtungen 4A ausgebildet. Dies ist einem kompakten Aufbau zuträglich.

Die Handhabungsvorrichtung 7 oder zumindest Teile davon sind vorzugsweise lotrecht über dem Transportsystem 4 bzw. der Transportvorrichtung 4A angeordnet. Insbesondere ist dies einem kompakten Aufbau des Bearbeitungssystems 1 zuträglich.

Die Handhabungsvorrichtung 7 weist vorzugsweise mehrere Bewegungsachsen B4, B5, B6 auf und/oder ist entlang der Bewegungsachsen B4-B6 bewegbar bzw. verfahrbar.

Die Bewegungsachse B4 verläuft vorzugsweise zumindest im Wesentlichen horizontal und/oder parallel zur X-Achse. Die Bewegungsachse B4 ist vorzugsweise lotrecht über dem Transportsystem 4 bzw. der Transportvorrichtung 4A angeordnet. Die Bewegungsachse B4 ist vorzugsweise eine lineare Bewegungsachse.

Die Bewegungsachse B5 verläuft vorzugsweise vertikal bzw. lotrecht bzw. in Z-Richtung. Die Bewegungsachse B5 ist vorzugsweise eine lineare Bewegungsachse.

Die Handhabungsvorrichtung 7 weist vorzugsweise zwei, insbesondere parallel verlaufende, Bewegungsachsen B5 auf.

Die Bewegungsachse B6 verläuft vorzugsweise vertikal bzw. lotrecht bzw. in Z-Richtung. Die Bewegungsachse B6 ist vorzugsweise eine Schwenk- bzw. Rotationsachse.

Vorzugsweise weist die Handhabungsvorrichtung 7 zwei, insbesondere parallele, Bewegungsachsen B6 bzw. Schwenkachsen bzw. Rotationsachsen auf.

Die Handhabungsvorrichtung 7 weist vorzugsweise eine Führung 7A auf oder ist daran angeordnet. Die Handhabungsvorrichtung 7 ist vorzugsweise entlang der Führung 7A bzw. parallel zur Führung 7A verfahrbar.

Insbesondere ist die Führung 7A als Linearführung ausgebildet und/oder parallel zu der Transportvorrichtung 4A bzw. Transportrichtung R1, R2 und/oder zur Führung 6A der Handhabungsvorrichtung 6 der Bearbeitungsseite 1A angeordnet.

Die Führung 7A ist vorzugsweise oberhalb, insbesondere (lotrecht) über, der (polierseitigen) Transportvorrichtung 4A bzw. des Transportsystems 4 angeordnet.

Vorzugsweise weist die Führung 7A die Bewegungsachse B4 auf oder bildet die Führung 7A die Bewegungsachse B4.

Zur besseren Unterscheidung wird die Führung 7A im Folgenden auch als Längsführung 7A bezeichnet.

Die Handhabungsvorrichtung 7 weist vorzugsweise eine Schiene oder Führung 7B, im Folgenden zur besseren Unterscheidung auch als Vertikalführung 7B bezeichnet, auf.

Die Vertikalführung 7B verläuft vorzugsweise vertikal bzw. in Z-Richtung.

Vorzugsweise weist die Vertikalführung 7B die Bewegungsachse B5 auf oder bildet die Vertikalführung 7B die Bewegungsachse B5.

Die Längsführung 7A und/oder Vertikalführung 7B sind vorzugsweise jeweils durch eine Führungsschiene und/oder einen Schlitten gebildet oder weisen diese auf.

Vorzugsweise weist die Handhabungsvorrichtung 7 zwei, insbesondere gleichartig bzw. identisch ausgebildete, Vertikalführungen 7B auf. Die Vertikalführungen 7B sind vorzugsweise parallel zueinander und/oder nebeneinander angeordnet.

Die Handhabungsvorrichtung 7 weist vorzugsweise einen Arm 7C auf. Der Arm 7C ist vorzugsweise bewegbar an der Vertikalführung 7B gelagert und/oder längs zur Vertikalführung 7B bewegbar bzw. verfahrbar. Vorzugsweise ragt der Arm 7C schräg zur Bewegungsachse B5 von der Vertikalführung 7B ab.

Vorzugsweise weist die Handhabungsvorrichtung 7 zwei (zumindest überwiegend) gleichartige bzw. identisch ausgebildete Arme 7C auf. Die Arme 7C sind insbesondere parallel zueinander und/oder nebeneinander angeordnet. Vorzugsweise ist jeder der Arme 7C an einer Vertikalführung 7B gelagert.

Die Handhabungsvorrichtung 7 weist vorzugsweise einen Schlitten bzw. Träger 7E für die Arme 7C und/oder Vertikalführungen 7B auf. Insbesondere sind die Arme 7C und/oder Vertikalführungen 7B an dem gemeinsamen Träger 7E angeordnet oder gelagert bzw. von diesem gehalten.

Die Arme 7C sind vorzugsweise unabhängig voneinander bewegbar bzw. verfahrbar.

Der Arm 7C weist vorzugsweise, insbesondere endseitig bzw. am unteren Ende, eine oder bevorzugt mehrere Halteeinrichtungen 7D zum Halten bzw. Greifen von Brillengläsern 2 auf.

Vorzugsweise sind die verschiedenen Halteeinrichtungen 7D eines Arms 7C überwiegend identisch ausgebildet, wobei aber vorzugsweise die Halteeinrichtungen 7D des ersten Arms 7C anders ausgebildet sind als die Halteeinrichtungen 7D des zweiten Arms 7C.

Vorzugsweise sind die Halteeinrichtungen 7D des ersten Arms 7C als Sauger ausgebildet und/oder sind die Halteeinrichtungen 7D des zweiten Arms 7C als Greifer ausgebildet, mit denen die Brillengläser 2 randseitig gehalten werden, insbesondere sodass eine Beschädigung der Brillenglasoberflächen vermieden wird. Insbesondere weisen die Greifer des zweiten Arms 7C mehrere Finger auf, die zum Halten des Brillenglases 2 an dessen Rand angelegt werden bzw. anlegbar sind.

Im Folgenden wird vorzugsweise zur besseren Unterscheidung der Arm 7C mit den als Sauger ausgebildeten Halteeinrichtungen 7D als erster Arm und der Arm 7C mit den als Greifer ausgebildeten Halteeinrichtungen 7D als zweiter Arm bezeichnet.

Insbesondere ist vorgesehen, dass in der Polierstation 3D noch zu bearbeitende bzw. zu polierende Brillengläser 2 mit den Saugern gegriffen bzw. gehalten werden und/oder fertig polierte Brillengläser 2 mit den Greifern gegriffen bzw. gehalten werden.

Vorzugsweise weist die Führung 7B die Rotationsachse bzw. Schwenkachse bzw. Bewegungsachse B6 auf bzw. weisen die beiden Führungen 7B jeweils eine Rotationsachse bzw. Schwenkachse bzw. Bewegungsachse B6 auf.

Insbesondere ist der Arm 7C um die Vertikalführung 7B bzw. Bewegungsachse B6 rotierbar bzw. schwenkbar. Durch eine Rotation bzw. ein Schwenken des Arms 7C um die Bewegungsachse B6 ist die Halteeinrichtung 7D bzw. das davon gehaltene Brillenglas 2 von einer Position über dem Transportsystem 4 bzw. Transportbehälter 5 in eine Position über der Polierstation 3D, insbesondere einer Werkstückspindel der Polierstation 3D, bewegbar.

Vorzugsweise sind die beiden Arme 7C in entgegengesetzten Richtungen um ihre jeweilige Rotationachse B6 rotierbar, insbesondere gleichzeitig.

Die Handhabung von Brillengläsern 2 mittels der Handhabungsvorrichtung 7 erfolgt vorzugsweise wie folgt:
Der erste Arm 7C wird, insbesondere durch Verfahren entlang der Längsführung 7A bzw. Bewegungsachse B4, vorzugsweise über einen Transportbehälter 5 mit einem oder zwei Brillengläsern 2 bewegt. Die in dem Transportbehälter 5 befindlichen Brillengläser 2 werden mittels der Halteeinrichtungen 7D gegriffen bzw. angesaugt, wobei hierzu der Arm 7C vertikal bzw. entlang der Bewegungsachse B5 und/oder Vertikalführung 7B bewegt wird bzw. bewegbar ist.

Der erste Arm 7C wird dann entlang der Bewegungsachse B5 nach oben verfahren und um die Bewegungsachse B6 rotiert, vorzugsweise um etwa 180°.

Gegebenenfalls wird zur Positionierung der Halteeinrichtung 7D bzw. Brillengläser 2 bzw. zum Wechseln der Brillengläser 2 in der Polierstation 3D die Handhabungsvorrichtung 7 auch entlang der Längsführung 7A bzw. entlang der Bewegungsachse B4 verfahren.

Insbesondere wird die Handhabungsvorrichtung 7 und/oder der zweite Arm 7C derart verfahren, dass sich die Greifer des zweiten Arms 7C in einer Position befinden, in der sie fertig polierte Brillengläser 2 aus der Polierstation 3D bzw. Werkstückspindel der Polierstation 3D entnehmen können.

Wenn in der Polierstation 3D die Brillengläser 2 fertig poliert wurden, wird vorzugsweise zunächst der zweite Arm 7C entlang der Bewegungsachse B5 verfahren, die in der Polierstation 3D befindlichen, fertig polierten Brillengläser 2 gegriffen und durch Zurückfahren des Arms 7C entlang der Bewegungsachse B5 bzw. der Vertikalführung 7B aus der Polierstation 3D entnommen. Dann wird vorzugsweise die Handhabungsvorrichtung 7 entlang der Bewegungsachse B4 bzw. Längsführung 7A verfahren, sodass der erste Arm 7C mit den bevorrateten bzw. zu polierenden Brillengläsern 2 über der Polierstation 3 bzw. deren Werkstückspindeln positioniert wird. Dann wird vorzugsweise der erste Arm 7C entlang der Bewegungsachse B5 bzw. Vertikalführung 7B verfahren bzw. abgesenkt und die Brillengläser 2 in die Polierstation 3D eingesetzt.

Anschließend wird vorzugsweise die Handhabungsvorrichtung 7 derart verfahren, dass die mit den Greifern gehaltenen fertig polierten Brillengläser 2 in der Reinigungsstation 3E gereinigt werden können. Nach dem Reinigen werden die fertig polierten und gereinigten Brillengläser 2 vorzugsweise wieder in den Transportbehälter 5 abgelegt, wozu die Handhabungsvorrichtung 7 entsprechend verfahren wird.

Das Polieren eines Brillenglases 2 bzw. das gleichzeitige Polieren zweier Brillengläser 2 in der Polierstation 3D dauert üblicherweise etwa 2 bis 3 Minuten. Daher ist es, ähnlich wie bei der Handhabungsvorrichtung 6 der Bearbeitungsseite 1A, für eine optimale Auslastung des Bearbeitungssystems 1 bzw. der Polierstation 3D vorteilhaft, möglichst schnell die Brillengläser 2 zu wechseln und die weitere Handhabung der Brillengläser 2, wie zum Beispiel Entnahme aus Transportbehältern 5, Transfer von der Polierstation 3D zur Reinigungsstation 3E oder dergleichen, während der Bearbeitung weiterer Brillengläser 2 in der Polierstation 3D vorzunehmen. Auf diese Weise können die Bearbeitungszeiten der Bearbeitungsstationen 3 bzw. Polierstationen 3D sinnvoll, insbesondere für weitere Handhabungsschritte von Brillengläsern 2, genutzt und der Durchsatz von Brillengläsern 2 erhöht werden bzw. Stillstandzeiten der Bearbeitungsstation(en) 3 bzw. Polierstation(en) 3D minimiert werden.

Die Handhabung von Brillengläsern 2 mit der Handhabungsvorrichtung 7 erfolgt vorzugsweise während der Bearbeitung weiterer Brillengläser 2 in den Bearbeitungsstationen 3, insbesondere den Polierstationen 3D. Insbesondere werden während der Bearbeitung eines oder mehrerer Brillengläser 2 in den Polierstationen 3D eines oder mehrere weitere Brillengläser 2 einem Transportbehälter 5 entnommen, in einen Transportbehälter 5 abgelegt, in der Reinigungsstation 3E gereinigt und/oder zwischen Transportbehältern 5, den Bearbeitungsstationen 3 und/oder der Reinigungsstation 3E transferiert.

### Handhabungsvorrichtung für Werkzeuge

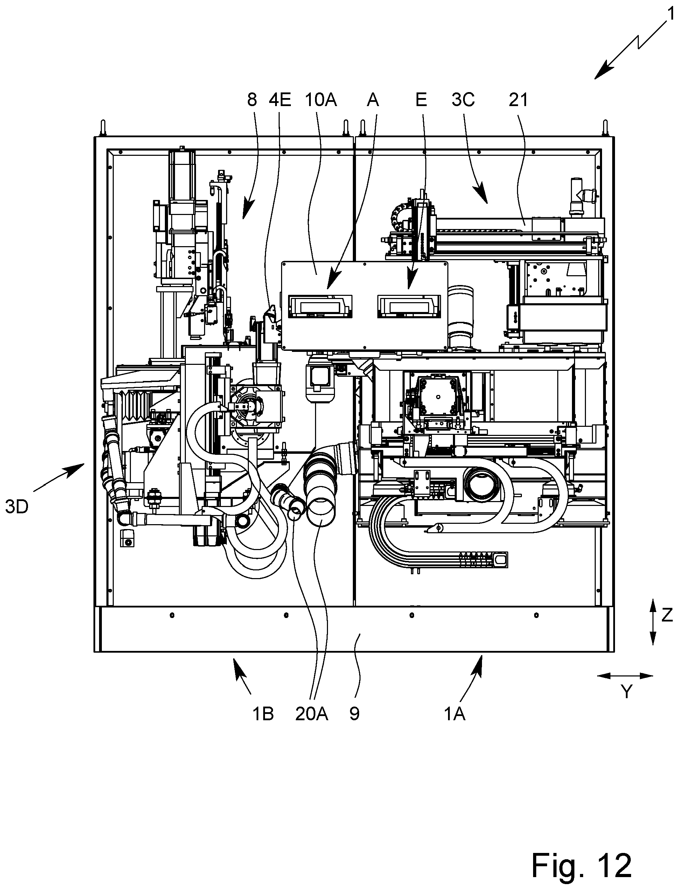

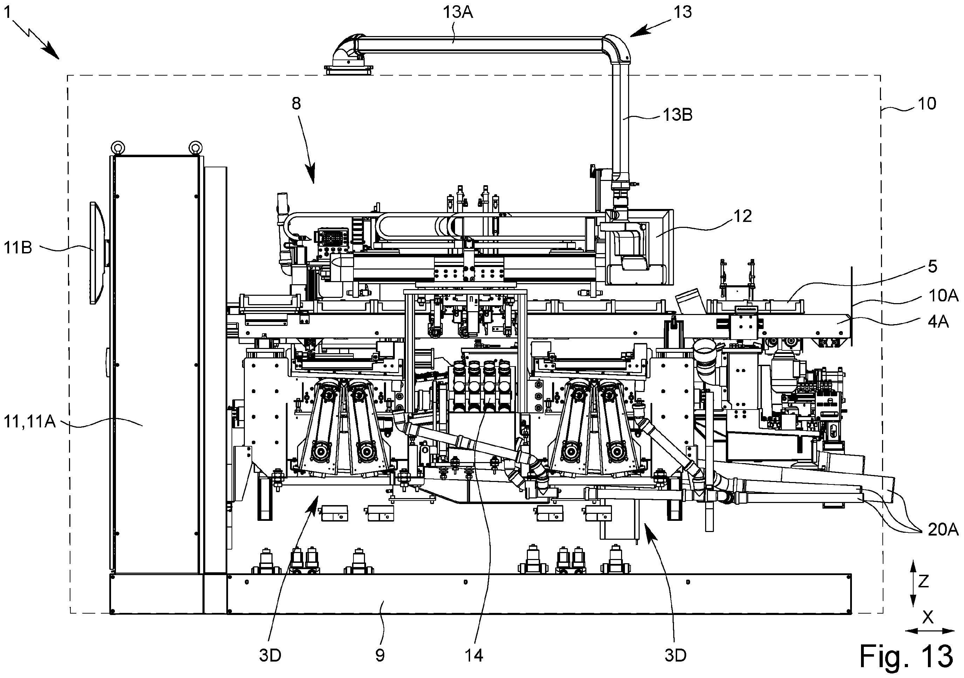

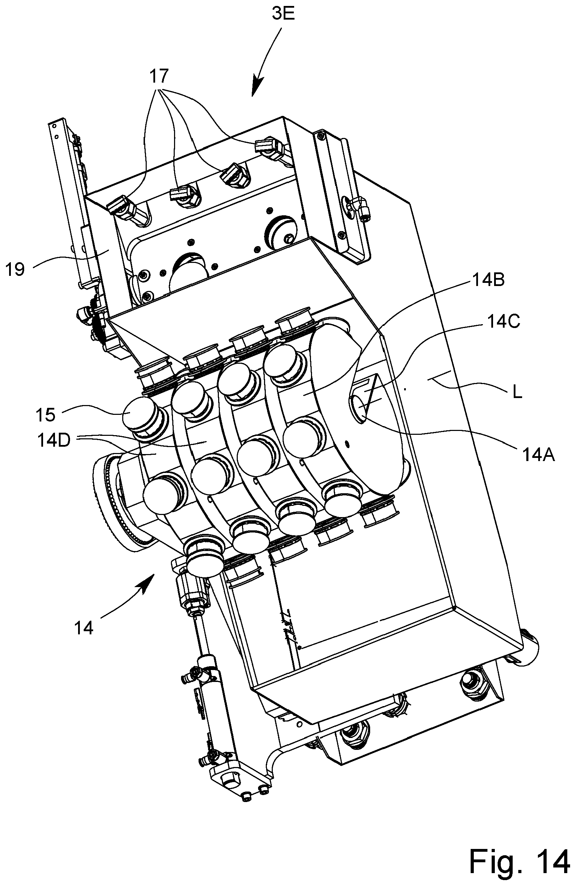

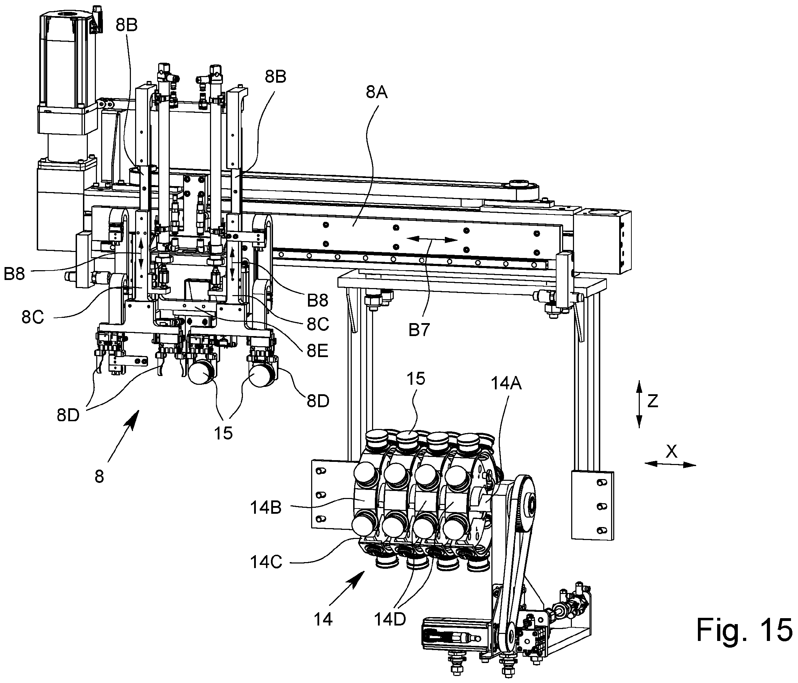

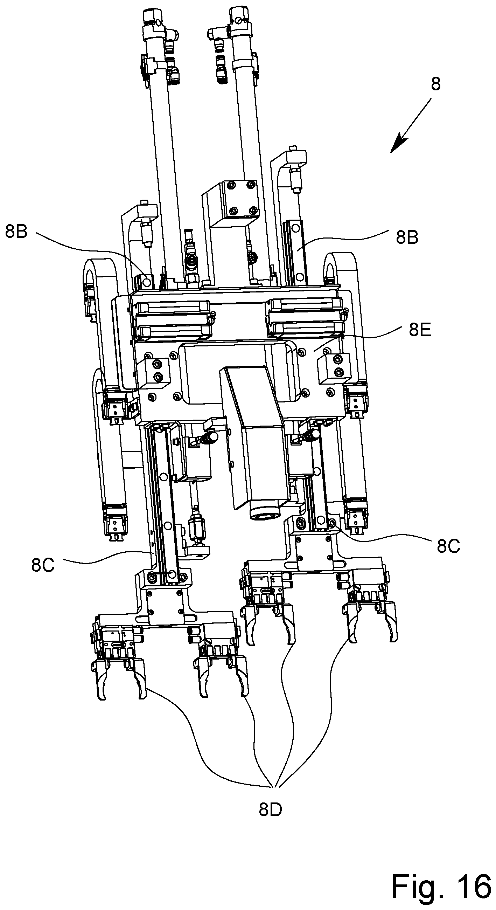

In Fig. 12 und 13 ist das Bearbeitungssystem 1 mit der Handhabungsvorrichtung 8 für Werkzeuge 15, insbesondere Polierwerkzeuge, dargestellt. Fig. 14 zeigt das Werkzeugmagazin 14 und die Reinigungsstation 3E. In Fig. 15 sind das Werkzeugmagazin 14 und die Handhabungsvorrichtung 8 für Werkzeuge 15 abgebildet. Fig. 16 zeigt eine perspektivische Darstellung der Handhabungsvorrichtung 8 für Werkzeuge 15. Im Folgenden werden Eigenschaften und Merkmale der Handhabungsvorrichtung 8 insbesondere mit Bezug auf Fig. 12-16 erläutert.

Die Handhabungsvorrichtung 8 ist vorzugsweise der Polierstation 3D bzw. den Polierstationen 3D und/oder dem Werkzeugmagazin 14 zugeordnet. Insbesondere ist die Handhabungsvorrichtung 8 auf der Polierseite 1B und/oder zwischen den Polierstationen 3D angeordnet. Die Handhabungsvorrichtung 8 ist vorzugsweise zwischen den Polierstationen 3D und dem Werkzeugmagazin 14 verfahrbar.

Die Handhabungsvorrichtung 8 ist vorzugsweise in Y-Richtung seitlich versetzt zu dem Transportsystem 4 bzw. der Transportvorrichtung 4A und/oder auf der der Transportvorrichtung 4 abgewandten Seite der Handhabungsvorrichtung 7 für Brillengläser 2 angeordnet.

Die Handhabungsvorrichtung 8 für die Werkzeuge 15 ist vorzugsweise unabhängig von der Handhabungsvorrichtung 7 für Brillengläser 2 bewegbar, insbesondere in X-Richtung.

Die Handhabungsvorrichtung 8 weist vorzugsweise mehrere Bewegungsachsen B7, B8 auf. Vorzugsweise ist die Bewegungsachse B7 und/oder die Bewegungsachse B8 eine lineare Bewegungsachse.

Die Bewegungsachse B7 verläuft vorzugsweise zumindest im Wesentlichen horizontal und/oder in X-Richtung. Bevorzugt verläuft die Bewegungsachse B7 parallel zur Transportrichtung R1, R2, zur Transportvorrichtung 4A und/oder zur Bewegungsachse B4 der Handhabungsvorrichtung 7.

Die Bewegungsachse B8 verläuft vorzugsweise vertikal bzw. lotrecht bzw. in Z-Richtung und/oder parallel zur Bewegungsachse B5 der Handhabungsvorrichtung 7. Die Bewegungsachse B8 ist vorzugsweise eine lineare Bewegungsachse.

Die Handhabungsvorrichtung 8 weist vorzugsweise zwei Bewegungsachsen B8 auf.

Die Handhabungsvorrichtung 8 weist vorzugsweise eine Führung 8A auf oder ist daran angeordnet. Die Führung 8A ist vorzugsweise oberhalb des Transportsystems 4, der Polierstation 3D, dem Werkzeugmagazin 14 und/oder der Reinigungsstation 3E angeordnet.

Insbesondere ist die Führung 8A als Linearführung ausgebildet und/oder parallel zu der Transportvorrichtung 4A bzw. Transportrichtung R1, R2 und/oder zur Führung 7A der Handhabungsvorrichtung 7 angeordnet.

Die Handhabungsvorrichtung 8 ist vorzugsweise entlang der Führung 8A bzw. parallel zur Führung 8A verfahrbar. Vorzugsweise weist die Führung 8A die Bewegungsachse B7 auf oder bildet die Führung 8A die Bewegungsachse B7.

Zur besseren Unterscheidung wird die Führung 8A im Folgenden auch als Längsführung 8A bezeichnet.

Die Handhabungsvorrichtung 8 weist vorzugsweise eine (weitere) Führung 8B, im Folgenden zur besseren Unterscheidung auch als Vertikalführung 8B bezeichnet, auf.

Die Vertikalführung 8B verläuft vorzugsweise vertikal bzw. in Z-Richtung. Vorzugsweise weist die Vertikalführung 8B die Bewegungsachse B8 auf oder bildet die Vertikalführung 8B die Bewegungsachse B8.

Vorzugsweise weist die Handhabungsvorrichtung 8 zwei, insbesondere gleichartig bzw. identisch ausgebildete, Vertikalführungen 8B auf.

Die Längsführung 8A und/oder Vertikalführung 8B sind vorzugsweise jeweils durch eine Führungsschiene und/oder einen Schlitten gebildet oder weisen diese auf.

Die Vertikalführung 8B ist vorzugsweise beweglich an der Längsführung 8A gelagert und/oder entlang der Längsführung 8A bewegbar bzw. verfahrbar.

Die Handhabungsvorrichtung 8 weist vorzugsweise einen Arm 8C auf. Der Arm 8C ist vorzugsweise an der Vertikalführung 8B angeordnet und/oder längs zur Vertikalführung 8B verfahrbar. Der Arm 8C erstreckt sich vorzugsweise in Z-Richtung bzw. parallel zur Vertikalführung 8B bzw. Bewegungsachse B8.

Vorzugsweise weist die Handhabungsvorrichtung 8 zwei insbesondere gleichartige bzw. identisch ausgebildete Arme 8C auf. Die Arme 8C sind insbesondere parallel zueinander und/oder nebeneinander angeordnet. Vorzugsweise ist jeder der Arme 8C an einer Vertikalführung 8B gelagert.

Die Handhabungsvorrichtung 8 weist vorzugsweise einen Schlitten bzw. Träger 8E für die Arme 8C und/oder Vertikalführungen 8B auf. Insbesondere sind die Arme 8C und/oder Vertikalführungen 8B an dem gemeinsamen Träger 8E angeordnet oder gelagert bzw. von diesem gehalten.

Die Arme 8C sind vorzugsweise unabhängig voneinander bewegbar bzw. verfahrbar.

Der Arm 8C weist vorzugsweise, insbesondere endseitig bzw. am unteren Ende, eine oder bevorzugt mehrere Greifer bzw. Halteeinrichtungen 8D zum Halten bzw. Greifen von Werkzeugen 15, insbesondere Polierwerkzeugen, auf. Besonders bevorzugt weist die Handhabungsvorrichtung 8 vier Halteeinrichtungen 8D und/oder jeder Arm 8C zwei Halteeinrichtungen 8D auf. Die Halteeinrichtungen 8D sind vorzugsweise an einer Querstrebe des Arms 8C und/oder nebeneinander angeordnet.

Vorzugsweise weisen die Werkzeuge 15 eine insbesondere in Umfangsrichtung verlaufende Greifrille auf, in die die Halteeinrichtungen 8D eingreifen können bzw.

Die Halteeinrichtungen 8D sind vorzugsweise in einem festen Abstand zueinander angeordnet. Insbesondere entspricht der Abstand der Halteeinrichtungen 8D dem Abstand der auf dem Werkzeugmagazin 14 angeordneten Werkzeuge 15.

Vorzugsweise sind die Halteeinrichtungen 8D quer, insbesondere senkrecht, zu dem Arm 8C bzw. der Bewegungsrichtung B8, vorzugsweise in Y-Richtung, bewegbar bzw. verfahrbar. Hierdurch wird das Entnehmen von Werkzeugen 15 aus dem Werkzeugmagazin 14 erleichtert bzw. ermöglicht.

Insbesondere ist die Handhabungsvorrichtung 8 zum paarweisen Wechseln von Werkzeugen 15 ausgebildet. Der Arm 8C bzw. die Halteeinrichtungen 8D ist/sind vorzugsweise zum gleichzeitigen bzw. paarweisen Halten oder Greifen von zwei Polierwerkzeugen ausgebildet.

Die Handhabung von Werkzeugen 15 mittels der Handhabungsvorrichtung 8 erfolgt vorzugsweise wie folgt:
Die Handhabungsvorrichtung 8 wird vorzugsweise mit einem der Arme 8C durch Verfahren entlang der Bewegungsachse B7 und/oder der Bewegungsachse B8 derart relativ zum Werkzeugmagazin 14 positioniert, dass mittels der Halteeinrichtungen 8D des Arms 8C ein oder zwei Werkzeuge 15 bzw. Polierwerkzeuge aus dem Werkzeugmagazin 14 gegriffen und/oder entnommen werden können.

Vorzugsweise werden zwei Werkzeuge 15, insbesondere gleichzeitig, mit den Halteeinrichtungen 8D des Arms 8C gegriffen und/oder aus dem Werkzeugmagazin 14 entnommen.

Vorzugsweise greifen die Halteeinrichtungen 8D zum Entnehmen der Werkzeuge 15 in eine dazu vorgesehene Rille der Werkzeuge 15 ein. Anschließend werden die Halteeinrichtungen 8D mit den gegriffenen Werkzeugen 15 vorzugsweise ein Stück von dem Werkzeugmagazin 14 wegbewegt, um die Werkzeuge 15 aus dem Werkzeugmagazin bzw. entsprechenden Halterungen zu lösen.

Anschließend wird die Handhabungsvorrichtung 8 vorzugsweise zur Polierstation 3D verfahren. Wenn ein Polieren von Brillengläsern 2 in der Polierstation 3D beendet ist, werden vorzugsweise mit dem nicht belegten Arm 8C ein oder zwei Werkzeuge 15 aus der Polierstation 3D durch entsprechendes Verfahren dieses Arms 8C und Greifen der Werkzeuge 15 entnommen.

Vorzugsweise fährt der Arm 8C nun vorzugsweise wieder aus der Polierstation 3D heraus. Dann wird bevorzugt die Handhabungsvorrichtung 8, vorzugsweise in X-Richtung bzw. entlang der Bewegungsachse B7, verfahren, sodass die mit dem anderen Arm 8C bereits bevorrateten Werkzeuge 15 in die Polierstation 3D eingesetzt werden können.

Dann werden vorzugsweise die mit dem anderen Arm 8C gehaltenen bzw. bevorrateten Werkzeuge 15 in die Polierstation 3D eingesetzt, wozu der Arm 8C entsprechend verfahren wird. Anschließend wird der Arm 8C bzw. werden die Halteeinrichtungen 8D wieder aus der Polierstation 3D herausgefahren.

Vorzugsweise wird die Handhabungsvorrichtung 8 anschließend wieder zum Werkzeugmagazin 14 bewegt und/oder werden die benutzten Werkzeuge 15 in dem Werkzeugmagazin 14 abgelegt.

Vorzugsweise erfolgt in der Polierstation 3D das Wechseln der Werkzeuge 15 mittels der Handhabungsvorrichtung 8 gleichzeitig mit dem Wechseln der Brillengläser 2 mittels der Handhabungsvorrichtung 7. Die Handhabungsvorrichtungen 7 und 8 sind vorzugsweise derart angeordnet bzw. dazu ausgebildet, dass die Arme 7C, 8C bzw. Halteeinrichtungen 7D, 8D gleichzeitig oder zumindest unmittelbar nacheinander in einen Arbeitsraum der Polierstation 3D verfahrbar bzw. bewegbar sind.

Insbesondere arbeiten die Handhabungsvorrichtung 7 für die Brillengläser 2 und die Handhabungsvorrichtung 8 für die Werkzeuge 15 unabhängig voneinander und/oder weisen die Handhabungsvorrichtungen 7, 8 keine gemeinsamen Bewegungsachsen auf.

Die Werkzeuge 15 können vor dem Ablegen im Werkzeugmagazin 14 in der Reinigungsstation 3E gereinigt werden.

### Werkzeugmagazin und Reinigungsstation

Das Werkzeugmagazin 14 ist vorzugsweise der Polierstation 3D bzw. den Polierstationen 3D zugeordnet und/oder zwischen zwei Polierstationen 3D angeordnet. Vorzugsweise ist in dem Werkzeugmagazin 14 eine Vielzahl von Werkzeugen 15, insbesondere Polierwerkzeugen, bevorratet bzw. bevorratbar.

Das Werkzeugmagazin 14 weist vorzugsweise eine (zumindest im Wesentlichen zylinderartige) Trommel 14B auf, an der die Werkzeuge 15 in Umfangsrichtung angeordnet bzw. gehalten sind oder ist hierdurch gebildet. Die von dem Werkzeugmagazin gehaltenen Werkzeuge 15 sind vorzugsweise radial an dem Werkzeugmagazin 14 ausgerichtet.

Eine Längsachse L des Werkzeugmagazins 14 bzw. der Trommel 14B verläuft vorzugsweise horizontal und/oder parallel zu dem Transportsystem 4 bzw. der Förderrichtung R1, R2 und/oder zu der Bewegungsachse B7 und/oder in X-Richtung.

Die Trommel 14B ist vorzugsweise um die Längsachse L drehbar, insbesondere sodass die Werkzeuge 15 jeweils in eine Position bewegbar sind, in der sie mit den Halteeinrichtungen 8D der Handhabungsvorrichtung 8 für die Werkzeuge 15 insbesondere von oben bzw. einer Position über dem Werkzeugmagazins 14, gegriffen werden können. Vorzugsweise werden mit der Handhabungsvorrichtung 8 bzw. deren Halteeinrichtungen 8D horizontal ausgerichtete Werkzeuge 15 gegriffen.

Vorzugsweise ist das Werkzeugmagazin 14 bzw. die Trommel 14B wechselbar bzw. aus dem Bearbeitungssystem 1 herausnehmbar. So ist ein schnelles Auswechseln einer Vielzahl von Werkzeugen 15 ermöglicht. Hierdurch werden Stillstandzeiten minimiert.

Die Trommel 14B bzw. das Werkzeugmagazin 14 ist vorzugsweise auf einer Drehachse bzw. Welle 14A angeordnet bzw. mittels der Welle 14A drehbar gelagert.

Vorzugsweise weist die Trommel 14B bzw. das Werkzeugmagazin 14 eine insbesondere radiale und/oder schlitzartige Ausnehmung 14C auf, bevorzugt so dass die Trommel 14B bzw. das Werkzeugmagazin 14 durch eine lineare Bewegung in radialer Richtung zur Längsachse L der Trommel 14B auf die Welle 14A aufschiebbar bzw. an der Welle 14A anordenbar ist. Die Ausnehmung 14C erstreckt sich vorzugsweise etwa über die Hälfte des Durchmessers der Trommel 14B bzw. vom Rand bis etwa zur Mitte bzw. Längsachse L der Trommel 14B. Des Weiteren erstreckt sich die Ausnehmung 14C vorzugsweise über die gesamte Länge der Trommel 14B parallel zur Längsachse L. Hierdurch kann das Werkzeugmagazin 14 leicht gewechselt werden.

Im Darstellungsbeispiel weist das Werkzeugmagazin 14 bzw. die Trommel 14B mehrere, hier vier, separate Segmente 14D auf oder ist hierdurch gebildet. Die Segmente 14D sind vorzugsweise ringartig und/oder kreisscheibenartig ausgebildet.

Vorzugsweise sind die Segmente 14D starr bzw. drehfest miteinander verbunden, beispielsweise mittels eines Verbindungelements wie einem Stab o. ä., und/oder bilden eine Baueinheit. Auf diese Weise kann insbesondere die Trommel 14B als Ganzes ausgewechselt oder getauscht werden bzw. können die Segmente 14D gemeinsam ausgewechselt oder getauscht werden, was insbesondere für einen schnellen und unkomplizierten Wechsel vorteilhaft ist. Es ist jedoch auch möglich, dass die Segmente 14D nicht miteinander verbunden und insbesondere einzeln wechselbar bzw. austauschbar sind.

Die Reinigungsstation 3E ist vorzugsweise zum Reinigen bzw. Waschen und/oder Trocknen von Brillengläsern 2 und/oder Werkzeugen 15 ausgebildet.

Die Reinigungsstation 3E weist vorzugsweise mehrere Düsen 17 zur Abgabe bzw. zum Versprühen eines bevorzugt flüssigen Reinigungsmittels, insbesondere Wasser, auf. Mittels der Reinigungsstation 3E bzw. der Düsen 17 sind vorzugsweise Reste eines Poliermittels von den Werkzeugen 15 und/oder Brillengläsern 2 entfernbar, insbesondere abspülbar.

Die Reinigungsstation 3E weist vorzugsweise einen Waschbehälter 19 auf, insbesondere wobei die Düsen 17 in dem Waschbehälter 19 angeordnet sind.

Vorzugsweise ist der Waschbehälter 19 dazu ausgebildet, die von den Düsen 17 versprühte Reinigungsflüssigkeit und/oder die von den Werkzeugen 15 bzw. Brillengläsern 2 abgespülten Verschmutzungen aufzufangen und/oder abzuleiten.

Vorzugsweise ist das Werkzeugmagazin 14 in die Reinigungsstation 3E bzw. in den Waschbehälter 19 integriert und/oder bilden der Waschbehälter 19 bzw. die Reinigungsstation 13E und das Werkzeugmagazin 14 eine Baueinheit.

Die Reinigungsstation 3E ist vorzugsweise alternativ oder zusätzlich zum Trocknen der (gereinigten bzw. abgespülten) Brillengläser 2 und/oder Werkzeuge 15 ausgebildet. Durch das Trocknen können Reste bzw. Rückstände des Reinigungsmittels, insbesondere Wasser, entfernt werden.

Die Reinigungsstation 3E weist zum Trocknen vorzugsweise ein Gebläse zum Wegblasen von Rückständen des Reinigungsmittels, insbesondere Flüssigkeitsresten bzw. -tropfen, oder sonstigen Ablagerungen bzw. Verschmutzungen auf.

Alternativ oder zusätzlich kann die Reinigungsstation 3E auch eine Einrichtung zum Erwärmen der Werkzeuge 15 und/oder Brillengläser 2 aufweisen, sodass ein Trocknen durch Verdunsten des Reinigungsmittels bzw. der Flüssigkeit erfolgen kann.

Das Bearbeitungssystem 1 kann alternativ oder zusätzlich auch eine oder mehrere Reinigungsstationen 3E aufweisen, beispielsweise zum Reinigen der Brillengläser 2 nach dem Fräsen und/oder dem Drehen. Hierzu sind entsprechende Reinigungsstationen 3E vorzugsweise unmittelbar der Frässtationen 3A und/oder Drehstation 3B nachgeordnet und/oder in der Nähe dieser Stationen angeordnet. Gegebenenfalls sind einige der Reinigungsstationen 3E auch nur zum Trocknen von Brillengläsern 2 bzw. Wegblasen von Ablagerungen oder Verschmutzungen ausgebildet.

Das Reinigen von Werkzeugen 15 und/oder Brillengläsern 2 erfolgt vorzugsweise während einer Bearbeitung weiterer Brillengläser 2 in der Polierstation 3D bzw. den Polierstationen 3D bzw. gleichzeitig damit.

### Signierstation

Die Markier- bzw. Signierstation 3C ist zum Markieren bzw. Signieren von Brillengläsern 2, insbesondere mit einem Laser 21 bzw. Laserstrahl, ausgebildet.

Mittels der Signierstation 3C können vorzugsweise Markierungen bzw. Signaturen für eine spätere Bearbeitung, die beispielsweise eine Lage von optischen Achsen, sonstige Angaben oder dergleichen angeben bzw. kennzeichnen, in ein Brillenglas 2 eingebracht werden. Dies ist insbesondere wichtig für eine spätere Randbearbeitung bzw. ein späteres Edgen des Brillenglases 2, bei dem das Brillenglas 2 an die Form eines zugeordneten Brillengestells angepasst wird, damit das Brillenglas 2 bzw. dessen optischen Achsen in der richtigen relativen Orientierung zum Brillengestell liegen.

Die Signierstation 3C weist vorzugsweise eine integrierte Handhabungsvorrichtung 18 zur Handhabung von Brillengläsern 2 auf.

Die Handhabungsvorrichtung 18 ist vorzugsweise dazu ausgebildet, ein Brillenglas 2 aus einem Transportbehälter 5 bzw. von dem Transportsystem 4 zu entnehmen und/oder in eine Signierposition, in der das Markieren bzw. Signieren erfolgt, zu bewegen.

Die Handhabungsvorrichtung 18 ist vorzugsweise quer, insbesondere senkrecht, zu dem Transportsystem 4, der Transportrichtung R1, R2 und/oder der X-Achse und/oder parallel zur Y-Achse verfahrbar.

Die Handhabungsvorrichtung 18 ist vorzugsweise zumindest teilweise oberhalb des Transportsystems 4 angeordnet und/oder zur Handhabung der Brillengläser 2 von oberhalb des Transportsystems 4 bzw. der Transportvorrichtung 4A ausgebildet. Dies ist einem kompakten Aufbau zuträglich. Die Handhabungsvorrichtung 18 oder zumindest Teile davon sind vorzugsweise lotrecht über dem Transportsystem 4 bzw. der entsprechenden Transportvorrichtung 4A angeordnet. Insbesondere ist dies einem kompakten Aufbau des Bearbeitungssystems 1 zuträglich.

Die Handhabungsvorrichtung 18 weist vorzugsweise mehrere Bewegungsachsen B9, B10 auf und/oder ist entlang der Bewegungsachsen B9, B10 bewegbar bzw. verfahrbar. Vorzugsweise ist die Bewegungsachse B9 und/oder die Bewegungsachse B10 eine lineare Bewegungsachse.

Die Bewegungsachse B9 verläuft vorzugsweise zumindest im Wesentlichen horizontal und/oder parallel zur Y-Achse. Besonders bevorzugt verläuft die Bewegungsachse B9 quer, insbesondere senkrecht, zu der Transportvorrichtung 4A bzw. Transportrichtung R1, R2 und/oder zur X-Achse,

Die Bewegungsachse B10 verläuft vorzugsweise quer, insbesondere orthogonal, zur Bewegungsachse B9. Vorzugsweise verläuft die Bewegungsachse B10 vertikal bzw. lotrecht bzw. in Z-Richtung. Die Bewegungsachse B10 ist vorzugsweise über dem bzw. oberhalb des Transportsystems 4 angeordnet.

Die Handhabungsvorrichtung 18 weist vorzugsweise eine Führung 18A auf oder ist daran angeordnet. Die Handhabungsvorrichtung 18 ist vorzugsweise entlang der bzw. parallel zur Führung 18A verfahrbar.

Insbesondere ist die Führung 18A als Linearführung ausgebildet und/oder quer, insbesondere senkrecht, zur Transportvorrichtung 4A bzw. Transportrichtung R1, R2 und/oder X-Achse und/oder parallel zur Y-Achse angeordnet.

Die Führung 18A ist vorzugsweise zumindest teilweise lotrecht oberhalb der Transportvorrichtung 4A bzw. des Transportsystems 4 angeordnet.

Vorzugsweise weist die Führung 18A die Bewegungsachse B9 auf oder bildet die Führung 18A die Bewegungsachse B9.

Zur besseren Unterscheidung wird die Führung 18A im Folgenden auch als Querführung 18A bezeichnet.

Die Handhabungsvorrichtung 18 weist vorzugsweise eine Führung 18B, im Folgenden zur besseren Unterscheidung auch als Vertikalführung 18B bezeichnet, auf.

Die Querführung 18A und/oder Vertikalführung 18B sind vorzugsweise durch eine Führungsschiene und/oder einen Schlitten gebildet oder weisen diese auf. Die Vertikalführung 18B ist vorzugsweise verschiebbar an der Querführung 18A gelagert und/oder entlang der Vertikalführung 18A bewegbar bzw. verfahrbar.

Die Vertikalführung 18B ist vorzugsweise quer, insbesondere orthogonal, zur Querführung 18A und/oder Bewegungsachse B9 angeordnet.

Vorzugsweise weist die Vertikalführung 18B die Bewegungsachse B10 auf oder bildet die Vertikalführung 18B die Bewegungsachse B10.

Die Handhabungsvorrichtung 18 weist vorzugsweise eine Halteeinrichtung 18C auf. Die Halteeinrichtung 18C ist vorzugsweise in Z-Richtung bzw. entlang der Bewegungsachse B10 verfahrbar.

Die Halteeinrichtung 18C ist vorzugsweise verschiebbar an der Vertikalführung 18B gelagert und/oder entlang der Vertikalführung 18B bzw. Bewegungsachse B10 bewegbar bzw. verfahrbar.

Die Halteeinrichtung 18C weist vorzugsweise einen Sauger zum Halten bzw. Greifen eines Brillenglases 2 auf oder ist hierdurch gebildet.

Die Signierstation 3C weist vorzugsweise einen Laser 21 zum Markieren bzw. Signieren der Brillengläser 2 auf.

Der Laser 21 kann zur Erzeugung verschiedener Laserstrahlen ausgebildet sein, insbesondere zur Erzeugung von Laserstrahlen zum Signieren der Brillengläser 2 und zur Erzeugung von Laserstrahlen zum Messen der Brillengläser 2. Diese Laserstrahlen können sich beispielsweise in der Wellenlänge, Intensität und/oder Leistung unterscheiden.

Der Laser 21 ist vorzugsweise quer, insbesondere senkrecht, zu dem Transportsystem 4 bzw. der Transportrichtung R1, R2 und/oder zur X-Achse angeordnet.

Vorzugsweise ist der Laser 21 horizontal und/oder oberhalb des Transportsystems 4 bzw. zumindest teilweise oder abschnittsweise über dem Transportsystem 4 angeordnet.

Vorzugsweise ist der Laser 21 parallel zu der Querführung 18 und/oder der Bewegungsachse B9 angeordnet. Der Laser 21 ist insbesondere unmittelbar benachbart zu der Querführung 18 angeordnet.

Vorzugsweise wird der mit dem Laser 21 erzeugte Laserstrahl zum Markieren bzw. Signieren der Brillengläser 2 umgelenkt, insbesondere um zumindest im Wesentlichen 90° und/oder von einer horizontalen Richtung in eine vertikale Richtung.

Vorzugsweise wird zum Markieren bzw. Signieren eines Brillenglases 2 mit der Signierstation 3C wie folgt vorgegangen.

Das Brillenglas 2 bzw. der Transportbehälter 5 mit dem Brillenglas 2 wird vorzugsweise zunächst derart positioniert, dass das Brillenglas 2 mit der Halteeinrichtung 18C greifbar ist. Insbesondere wird das Brillenglas 2 senkrecht bzw. lotrecht unterhalb der Halteeinrichtung 18C positioniert.

Vorzugsweise wird dann die Halteeinrichtung 18C entlang der Bewegungsachsen B9 und/oder B10 verfahren, sodass die Halteeinrichtung 18C vorzugsweise unmittelbar oberhalb des Brillenglases 2 positioniert ist und vorzugsweise das Brillenglas 2 greifen, insbesondere ansaugen, kann. Das Brillenglas 2 wird vorzugsweise mit der Halteeinrichtung 18C gegriffen.

Anschließend wird vorzugsweise das Brillenglas 2 durch entsprechendes Verfahren bzw. Bewegen entlang der Bewegungsachsen B9 und/oder B10 in eine Markierposition bzw. Signierposition bewegt und in der Signierposition bzw. dem Spannfutter 2D abgelegt bzw. positioniert. Die Halteeinrichtung 18C wird nach dem Ablegen bzw. Positionieren des Brillenglases 2 vorzugsweise von dem Brillenglas 2 wegbewegt, insbesondere um ein Signieren des Brillenglases 2 zu ermöglichen bzw. nicht zu behindern.

Besonders bevorzugt wird das Brillenglas 2 in der Signierposition korrekt ausgerichtet, beispielsweise rotiert und/oder verkippt, und/oder ein Laserstrahl auf die Lage bzw. Ausrichtung des Brillenglases 2 in der Signierposition eingestellt, verfahren und/oder fokussiert.

Es kann auch ein Messen bzw. Bestimmen der Ausrichtung des Brillenglases 2 in der Signierposition erfolgen, insbesondere mittels des Lasers 21. Dies ist besonders vorteilhaft, wenn mit blocklosen bzw. nicht geblockten Brillengläsern 2 gearbeitet wird.

Dann wird vorzugsweise das Brillenglas 2 mit dem Laser 21 bzw. Laserstrahl signiert bzw. markiert. Das Signieren dauert üblicherweise nur wenige Sekunden, vorzugsweise weniger als 5 Sekunden. Das Signieren kann jedoch auch mehr Zeit in Anspruch nehmen, beispielsweise wenn besondere Zeichen oder ein Logo in das Brillenglas 2 eingebracht werden.

Anschließend wird vorzugsweise die Halteeinrichtung 18C wieder zum Brillenglas 2 bewegt, das Brillenglas 2 mit der Halteeinrichtung 18C gegriffen, die Halteeinrichtung 18C mit dem Brillenglas 2 wieder zu dem Transportbehälter 5 bewegt und/oder das Brillenglas 2 wieder in dem Transportbehälter 5 abgelegt.

### Qualitätskontrolle

Vorzugsweise wird nach einer Bearbeitung in einer oder mehrerer der Bearbeitungsstationen 3 eine Qualitätskontrolle der bearbeiteten Brillengläser 2 durchgeführt, insbesondere nach dem Polieren und/oder vor einem Randbearbeiten bzw. Edgen und/oder Beschichten der Brillengläser 2. Hierzu wird die bearbeitete Oberfläche des Brillenglases 2 vermessen und/oder überprüft, ob die Form bzw. Oberfläche des bearbeiteten Brillenglases 2 einer gewünschten bzw. vorgegebenen Form bzw. Oberfläche entspricht.

Vorzugsweise erfolgt die Qualitätskontrolle kontaktlos und/oder durch eine optische Messung des bearbeiteten Brillenglases 2, insbesondere mittels phasenmessender Deflektometrie (PMD) und/oder durch Reflektionsmessungen.

Insbesondere kann die Qualitätskontrolle auch in der bzw. von der Signierstation 3C durchgeführt werden. Hierzu wird vorzugsweise das Brillenglas 2 mittels des Lasers 21 vermessen bzw. geprüft.

### Steuerung und Verfahrensablauf

Wie bereits eingangs erwähnt, weist die Steuerung vorzugsweise eine oder mehrere Steuereinrichtungen 11 auf und/oder ist die Steuerung des Bearbeitungssystems 1 in einem oder mehreren Schaltschränken 11A untergebracht.

Vorzugsweise weist das Bearbeitungssystem mehrere Steuereinrichtungen 11 auf, die zur insbesondere separaten bzw. unabhängigen Steuerung verschiedener Komponenten des Bearbeitungssystems 1, beispielsweise einer oder mehrerer Bearbeitungsstationen 3, einer oder mehrerer Handhabungsvorrichtungen 6-8 und/oder des Transportsystems 4 bzw. der Transportvorrichtungen 4A und/oder der Wechseleinrichtung 4B ausgebildet sind.

Vorzugsweise sind die Schaltschränke 1A jeweils einem der Teile 1A, 1B zugeordnet. Insbesondere ist einer der Schaltschränke 11A der Bearbeitungsseite 1A und der andere Schaltschrank 11A bzw. dessen Steuereinrichtung 11 der Polierseite 1B zugeordnet bzw. zur Steuerung der Komponenten des jeweiligen Teils 1A, 1B, insbesondere der Bearbeitungsstationen 3, der Handhabungsvorrichtungen 6-8 und/oder der Transportvorrichtung 4A, ausgebildet.

Vorzugsweise ist die Steuerung zur Verwaltung von Bearbeitungsstatus der Brillengläser 2 ausgebildet.

Die Steuerung bildet vorzugsweise in Linsenmanagementsystem.

Der Bearbeitungsstatus eines Brillenglases 2 ist insbesondere wichtig bei Störungen und/oder einem Neustart des Bearbeitungssystems 1 und/oder einzelner Bearbeitungsstationen 3. In solch einem Fall ist es vorteilhaft, wenn der Bearbeitungsstatus eines noch nicht vollständig bzw. nur teilweise oder in nur einigen Bearbeitungsstationen 3 bearbeiteten Brillenglases 2 abgerufen werden und die Bearbeitung nach Behebung der Störung bzw. nach einem Neustart unmittelbar nach Abruf des Bearbeitungsstatus fortgesetzt werden kann.

Vorzugsweise ist für jedes Brillenglas 2, das in dem Bearbeitungssystem 1 bearbeitet wird bzw. werden soll, ein Bearbeitungsstatus in der Steuerung hinterlegt bzw. hinterlegbar und/oder von der Steuerung abrufbar.

Vorzugsweise ist der Bearbeitungsstatus eines Brillenglases in dem bereits weiter vorne erwähnten Identifikator des Transportbehälters 5, in dem sich das Brillenglas 2 befindet bzw. dem das Brillenglas 2 zugeordnet ist, hinterlegt bzw. gespeichert oder mittels des Identifikators abrufbar.

Insbesondere ist der Bearbeitungsstatus extern, beispielsweise auf einem Server oder einer Datenbank, hinterlegt. Es ist jedoch auch möglich, den Bearbeitungsstatus in dem Identifikator zu hinterlegen, beispielsweise wenn der Identifikator als beschreibbarer RFID-Chip o. dgl. ausgebildet ist, oder den Bearbeitungsstatus in einer Speichereinrichtung des Bearbeitungssystems 1, beispielsweise in dem Schaltschrank 11A, zu hinterlegen.

Das Abrufen des Bearbeitungsstatus durch die Steuerung erfolgt vorzugsweise derart, dass zunächst mit der Erfassungseinrichtung 4E der Identifikator eingelesen wird und dann die Steuerung mittels des Identifikators bzw. in dem Identifikator enthaltenen Informationen den Bearbeitungsstatus abruft.

Der Bearbeitungsstatus kann Informationen darüber aufweisen oder enthalten, welche Bearbeitungen (beispielsweise Fräsen, Drehen, Polieren und/oder Signieren) an dem Brillenglas 2 durchgeführt werden müssen und/oder bereits durchgeführt wurden. Des Weiteren kann der Bearbeitungsstatus Informationen über eine (voraussichtliche) Bearbeitungsdauer in einer oder mehrerer der Bearbeitungsstationen 3 aufweisen.

Vorzugsweise wird der Bearbeitungsstatus eines Brillenglases 2 geändert bzw. aktualisiert, wenn bzw. nachdem das Brillenglas 2 in einer der Bearbeitungsstationen 3 fertig bearbeitet wurde. Insbesondere sind die Bearbeitungsstationen 3 zur Änderung des Bearbeitungsstatus bzw. zur Übermittlung einer Information, dass das Brillenglas 2 in der jeweiligen Bearbeitungsstation 3 fertig bearbeitet wurde, ausgebildet. Die Information, dass das Brillenglas 2 bearbeitet wurde, kann z. B. an eine Steuerung bzw. Systemsteuerung, eine Recheneinheit, eine Datenbank, einen Server, die Steuereinrichtung 11 oder eine sonstige Einrichtung übermittelt werden, wobei nach Erhalt der Information der hinterlegte Bearbeitungsstatus geändert bzw. aktualisiert wird.

Vorzugsweise werden die Brillengläser 2 in dem Bearbeitungssystem 1 in der Reihenfolge bearbeitet, in der sie bzw. die entsprechenden Transportbehälter 5 in das Bearbeitungssystem 1 eintreten bzw. das Bearbeitungssystem 1 durchlaufen. Vorzugsweise bleibt die Reihenfolge der Transportbehälter 5 im Transportsystem 4 während des Durchlaufens des Bearbeitungssystems 1 erhalten.

Es ist jedoch auch möglich, dass - insbesondere abhängig von einem Bearbeitungsstatus - mittels der Handhabungsvorrichtung 6, 7 die Brillengläser 2 nicht in der Reihenfolge der den Brillengläsern 2 zugeordneten Transportbehältern 5 an die Bearbeitungsstationen 3 übergeben werden bzw. ein Überholen von Brillengläsern 2 ermöglicht ist bzw. erfolgt. Beispielsweise können von einem ersten und zweiten Transportbehälter 5, die nacheinander in dem Transportsystem 4 angeordnet sind, zunächst die Brillengläser 2 des zweiten Transportbehälters 5 an eine oder mehrerer Bearbeitungsstationen 3 übergeben werden und erst nach der Bearbeitung der Brillengläser 2 des zweiten Transportbehälters 5 die Brillengläser 2 des ersten Transportbehälters 5 an eine oder mehrere Bearbeitungsstationen 3 übergeben werden. Dies kann zweckmäßig sein, um eine möglichst hohe Auslastung bzw. möglichst geringe Totzeiten oder Stillstandzeiten einzelner Bearbeitungsstationen 3 zu erreichen, beispielsweise wenn die Bearbeitung der Brillengläser 2 des zweiten Transportbehälters 5 weniger Zeit in Anspruch nimmt als die Bearbeitung der Brillengläser 2 des ersten Transportbehälters 5.

Wie bereits zuvor ausgeführt, können zum Überholen von Brillengläsern 2 bzw. Transportbehältern 5 auch eine oder mehrere weitere Transportvorrichtungen 4A und/oder ein Abstell- und/oder Wartebereich vorgesehen sein.

Die tatsächliche Bearbeitungsreihenfolge der Brillengläser 2 in den Bearbeitungsstationen 3 kann insbesondere von dem Bearbeitungsstatus der Brillengläser 2 abhängen bzw. unter Berücksichtigung der Bearbeitungsstatus der Brillengläser 2 geändert werden. Es ist auch möglich, dass die Bearbeitungsreihenfolge von einer Auslastung der Bearbeitungsstationen 3 abhängt bzw. unter Berücksichtigung der Auslastung der Bearbeitungsstationen 3 geändert wird.

Ein "Überholen" der Brillengläser 2 bzw. eine Bearbeitung der Brillengläser 2 in einer anderen Reihenfolge als der Reihenfolge der den Brillengläsern 2 zugeordneten Transportbehältern 5 kann insbesondere zweckmäßig sein, wenn mehrere gleichartige Bearbeitungsstationen 3 bzw. Bearbeitungsstationen 3 für dieselbe Bearbeitung vorgesehen sind, im Darstellungsbeispiel insbesondere bei den zwei Polierstationen 3D. Auch ein Ausfall einer Bearbeitungsstation 3 oder eine fehlerhafte Bearbeitung eines oder mehrerer Brillengläser 2 in einer Bearbeitungsstation 3 kann zu einer Änderung der Bearbeitungsreihenfolge führen.

Ebenso ist es denkbar, dass eine Bearbeitung eines Brillenglases 2 in einer Bearbeitungsstation 3 wiederholt werden muss bzw. ein Brillenglas 2 in einer Bearbeitungsstation 3 erneut bearbeitet werden muss.

In einem anderen Beispiel kann es vorkommen, dass Brillengläser 2 bzw. Transportbehälter 5 mit Brillengläsern 2 zwischenzeitlich aus dem Bearbeitungssystem 1 bzw. Transportsystem 4 entnommen werden und diesem später wieder zugeführt werden, sodass nur noch ausgewählte Bearbeitungen erfolgen müssen.

### Bedienvorrichtung

Die Bedienvorrichtung 12 ist vorzugsweise zum Bedienen bzw. Steuern des Bearbeitungssystems 1 und/oder einzelner Komponenten des Bearbeitungssystems 1 wie der Bearbeitungsstationen 3, des Transportsystems 4 und/oder der Handhabungsvorrichtungen 6-8, ausgebildet.

Das Bearbeitungssystem 1 ist vorzugsweise über die Eingabeeinrichtung 12B der Bedienvorrichtung 12 bedienbar.

Die Eingabeeinrichtung 12B kann eine Tastatur, einen oder mehrere Hebel, Tasten, Knöpfe, Schalter und/oder sonstige Bedienelemente und/oder einen Touchscreen bzw. ein berührungsempfindliches Display aufweisen oder hierdurch gebildet sein.

Die Anzeigeeinrichtung 12A ist vorzugsweise durch einen elektronischen Bildschirm, insbesondere einen Touchscreen bzw. ein berührungsempfindliches Display, gebildet.

Vorzugsweise ist die Bedienvorrichtung 12 bzw. Anzeigeeinrichtung 12A dazu ausgebildet, ein Steuermenü für eine oder mehrere Bearbeitungsstationen 3, insbesondere verschiedene Steuermenüs für verschiedene Bearbeitungsstationen 3, anzuzeigen.

Vorzugsweise sind mittels der Bedienvorrichtung 12 verschiedene Bearbeitungsstationen 3 des Bearbeitungssystems 1 individuell bzw. unabhängig voneinander steuerbar bzw. bedienbar.

Gemäß einem Aspekt ist die Bedienvorrichtung 12 an dem Arm 13 angeordnet, insbesondere an dessen Ende. Der Arm 13 ist vorzugsweise um eine Schwenkachse S schwenkbar. Vorzugsweise ist der Arm 13 ein Schwenkarm.

Der Arm 13 ist vorzugsweise außerhalb des Gehäuses bzw. der Verkleidung 10 angeordnet.

Insbesondere weist der Arm 13 mehrere Abschnitte 13A, 13B auf, insbesondere einen ersten Abschnitt 13A und einen zweiten Abschnitt 13B. Die Abschnitte 13A, 13B sind vorzugsweise gelenkig miteinander verbunden.

Der erste Abschnitt 13A ist vorzugsweise oberhalb der Verkleidung 10 angeordnet. Vorzugsweise verläuft der erste Abschnitt 13A zumindest im Wesentlichen horizontal.

Der zweite Abschnitt 13B verläuft vorzugsweise zumindest im Wesentlichen vertikal bzw. in Z-Richtung und/oder ist seitlich bzw. außerhalb der Verkleidung 10 angeordnet.

Der zweite Abschnitt 13B ist vorzugsweise rechtwinklig zu dem ersten Abschnitt 13A angeordnet.

Die Bedienvorrichtung 12 ist vorzugsweise an dem zweiten Abschnitt 13B bzw. dessen Ende angeordnet.

Vorzugsweise ist der zweite Abschnitt 13B relativ zu dem ersten Abschnitt 13A rotierbar und/oder ist die Bedienvorrichtung 12 relativ zu dem zweiten Abschnitt 13B schwenkbar bzw. rotierbar, insbesondere um die Z-Achse bzw. Vertikale.

Insbesondere ist über die Position bzw. Schwenkposition bzw. den Schwenkwinkel des Arms 13 und/oder die relative Orientierung des ersten Abschnitts 13A, des zweiten Abschnitts 13B und/oder der Bedienvorrichtung 12A zueinander feststellbar, vor welcher Bearbeitungsstation 3 sich die Bedienvorrichtung 12 befindet und/oder in welcher Richtung bzw. auf welche Bearbeitungsstation 3D die Bedienvorrichtung 12 ausgerichtet ist. Insbesondere kann aufgrund dieser Information ein entsprechendes Steuermenü für die nächstliegende Bearbeitungsstation 3 bzw. die Bearbeitungsstation 3, in dessen Richtung die Bedienvorrichtung 12 ausgerichtet ist, angezeigt werden.

Vorzugsweise weisen der Arm 13 und/oder die Bedienvorrichtung 12 einen oder mehrere Sensoren zur Detektion bzw. Bestimmung der Schwenkposition bzw. des Schwenkwinkels auf.

Der Arm 13, insbesondere der zweite Abschnitt 13B, bzw. die Bedienvorrichtung 12 ist vorzugsweise auf unterschiedliche Seiten des Bearbeitungssystems 1 bewegbar bzw. schwenkbar. Insbesondere ist der Arm 13, insbesondere der zweite Abschnitt 13B, bzw. die Bedienvorrichtung 12 vor jede der Bearbeitungsstationen 3 und/oder vor den Schaltschrank 11A bewegbar bzw. positionierbar. Hierdurch kann die Bedienvorrichtung bedarfsgerecht und komfortabel zur Bedienung des Bearbeitungssystems 1 bzw. der Bearbeitungsstationen 3 positioniert und bedient werden.

Es ist jedoch auch möglich, dass die Bedienvorrichtung 12 frei beweglich und/oder nicht an einem Arm 13 angeordnet ist. Beispielsweise kann die Bedienvorrichtung 12 durch ein Smartphone, ein Tablet, einen Laptop oder dergleichen gebildet sein. Auch in diesem Fall können vorzugsweise die relative Position und/oder Ausrichtungen der Bedienvorrichtung bezüglich der Bearbeitungsstationen 3 festgestellt werden und ein entsprechendes Steuermenü angezeigt werden.

Die Bedienvorrichtung 12 weist vorzugsweise einen Notausschalter 12C auf. Vorzugsweise können mittels des Notausschalters 12C eine oder mehrere Bearbeitungsstationen 3 und/oder das Transportsystem 4 bzw. das Bearbeitungssystem 1 insgesamt angehalten bzw. gestoppt werden. Dies erhöht die Bediensicherheit des Bearbeitungssystems 1.

Vorzugsweise kann durch die Bedienvorrichtung 12 bzw. das Steuermenü eine Benutzerführung erfolgen. Insbesondere werden mit der Bedienvorrichtung 12 bzw. Anzeigeeinrichtung 12A Anweisungen an einen Bediener ausgegeben bzw. angezeigt, beispielsweise wenn ein Austausch eines Werkzeugs 15 erforderlich ist, wenn eine Wartung, Inspektion, Reparatur und/oder Instandhaltungsmaßnahme für der jeweiligen Bearbeitungsstation 3 und/oder des Transportsystems 4 durchgeführt werden muss, wenn ein Teil oder Werkzeug ausgetauscht werden muss, wenn ein Fehler aufgetreten ist, wenn ein Betriebsmittel, wie Kühlmittel, Poliermittel oder Reinigungsmittel, nachgefüllt werden muss oder dergleichen.

Die Bedienvorrichtung 12 kann alternativ oder zusätzlich dazu ausgebildet sein, die Bearbeitungsstatus eines oder mehrerer Brillengläser 2 anzuzeigen, eine Auslastung einer oder mehrere Bearbeitungsstationen 3 anzuzeigen, Betriebsparameter des Bearbeitungssystems 1 bzw. der Bearbeitungsstationen 3 anzuzeigen oder dergleichen.

Das Bearbeitungssystem 1 kann eine zusätzliche Bedienvorrichtung 11B aufweisen, wie beispielsweise in den Fig. 4, 8 und 13 erkennbar ist.

Die Bedienvorrichtung 11B ist vorzugsweise fest installiert bzw. - im Gegensatz zur Bedienvorrichtung 12 - nicht bewegbar. Vorzugsweise ist die Bedienvorrichtung 11B an dem Schaltschrank 11A, an einer Querseite bzw. Stirnseite des Bearbeitungssystems 1 und/oder dem Eingang E und/oder Ausgang A gegenüberliegend angeordnet.

Die Bedienvorrichtung 11B weist vorzugsweise eine Anzeigeeinrichtung und/oder eine Eingabeeinrichtung auf. Vorzugsweise gelten die Ausführungen zu der Anzeigeeinrichtung 12A und/oder Eingabeeinrichtung 12B der Bedienvorrichtung 12 entsprechend auch für die Bedienvorrichtung 11.

Die Bedienvorrichtung 11B ist vorzugsweise zur Bedienung bzw. Steuerung des (gesamten) Bearbeitungssystems 1 ausgebildet.

Die Bedienvorrichtung 11B kann innerhalb oder außerhalb der Verkleidung 10 angeordnet sein (vgl. Fig. 4 und 8).

Einzelne Aspekte und Merkmale des vorschlagsgemäßen Bearbeitungssystems 1 und der beschriebenen Abläufe und verschiedenen Ausführungsbeispiele können auch unabhängig voneinander, aber auch in beliebiger Kombination realisiert werden.

Ein übergeordneter Aspekt bzw. eine grundlegende Idee der vorliegenden Erfindung, die auch die Grundlage eines unabhängigen Anspruchs bilden kann, besteht insbesondere darin, ein Bearbeitungssystem bzw. ein Verfahren zum Bearbeiten von Brillengläsern anzugeben, wobei das Bearbeitungssystem mehrere Bearbeitungsstationen und ein Transportsystem für die Brillengläser aufweist und mehrere Brillengläser gleichzeitig in verschiedenen bzw. verschiedenartigen Bearbeitungsstationen bearbeitbar sind bzw. bearbeitet werden. Insbesondere sind alle weiteren voranstehend beschriebenen Merkmale jeweils nicht zwingend, sondern stellen lediglich bevorzugte Ausführungsbeispiele dar und können in beliebiger Kombination in einem unabhängigen Anspruch kombiniert werden.

Weitere Aspekte der vorliegenden Erfindung, die in Kombination mit den voranstehend erläuterten Aspekten und Merkmalen aber separat realisierbar sind, sind insbesondere:
1. Bearbeitungssystem 1 zur Bearbeitung von Brillengläsern 2,
   mit mehreren Bearbeitungsstationen 3, insbesondere einer Frässtation 3A, einer Drehstation 3B, einer Polierstation 3D, einer Reinigungsstation 3E und/oder einer Signierstation 3C,
   mit einem Transportsystem 4 zum Transport der Brillengläser 2 bzw. von Transportbehältern 5 für die Brillengläser 2 innerhalb des Bearbeitungssystems 1, und
   mit einem gemeinsamen Grundgestell 9 und/oder einer gemeinsamen Verkleidung 10 für die Bearbeitungsstationen 3,
   **dadurch gekennzeichnet,**
   dass das Bearbeitungssystem 1 dazu ausgebildet ist, verschiedene Brillengläser 2 gleichzeitig in verschiedenen Bearbeitungsstationen 3, ausgewählt aus der Gruppe bestehend aus der Frässtation 3A, der Drehstation 3B und der Polierstation 3D, zu bearbeiten, und/oder
   dass das Transportsystem 4 parallel zueinander verlaufende und vorzugsweise unmittelbar benachbarte Transportabschnitte bzw. Transportvorrichtungen 4A aufweist, und/oder
   dass das Bearbeitungssystem 1 mindestens eine Handhabungsvorrichtung 6-8 für die Brillengläser 2 und/oder für Werkzeuge 15 zur Bearbeitung der Brillengläser 2 aufweist, die parallel zu dem Transportsystem 4 verfahrbar und mehreren Bearbeitungsstationen 3 zugeordnet ist, und/oder
   dass das Grundgestell 9 mehrere vor Ort miteinander verbindbare Teilgestelle 9A aufweist, die jeweils ein Grundgestell 9 für eine oder mehrere Bearbeitungsstationen 3 bilden.
2. Bearbeitungssystem nach Aspekt 1, dadurch gekennzeichnet, dass die Transportabschnitte bzw. Transportvorrichtungen 4A des Transportsystems 4 entgegengesetzte Transportrichtungen R1, R2 aufweisen.
3. Bearbeitungssystem nach Aspekt 1 oder 2, dadurch gekennzeichnet, dass ein Eingang E und ein Ausgang A des Transportsystems 4 unmittelbar zueinander benachbart und/oder auf der gleichen Seite des Bearbeitungssystems 1 angeordnet sind.
4. Bearbeitungssystem nach einem der voranstehenden Aspekte, dadurch gekennzeichnet, dass die Bearbeitungsstationen 3 zumindest teilweise seitlich, insbesondere auf voneinander abgewandten Seiten, des Transportsystems 4 angeordnet sind.
5. Bearbeitungssystem nach einem der voranstehenden Aspekte, dadurch gekennzeichnet, dass das Bearbeitungssystem 1 eine Handhabungsvorrichtung 6 aufweist, die dem Halten von Brillengläsern 2 dient und eine zumindest teilweise oberhalb des Transportsystems 4 und/oder schräg zur Vertikalen verlaufende lineare Bewegungsachse B2 aufweist.
6. Bearbeitungssystem nach einem der voranstehenden Aspekte, dadurch gekennzeichnet, dass das Bearbeitungssystem 1 mehrere unabhängige Handhabungsvorrichtungen 6-8 aufweist, die insbesondere oberhalb des Transportsystems 4 angeordnet sind.
7. Bearbeitungssystem nach einem der voranstehenden Aspekte, dadurch gekennzeichnet, dass das Bearbeitungssystem 1 eine Handhabungsvorrichtung 6 mit zwei Halteeinrichtungen 6E an einem Schwenkkopf 6D zum Austausch eines Brillenglases 2 an einer Bearbeitungsstation 3 aufweist.
8. Bearbeitungssystem nach einem der voranstehenden Aspekte, dadurch gekennzeichnet, dass das Bearbeitungssystem 1 eine Handhabungsvorrichtung 6, 7 aufweist, die zur Übergabe von Brillengläsern 2 zwischen dem Transportsystem 4 und zwei Bearbeitungsstationen 3 ausgebildet ist.
9. Bearbeitungssystem nach einem der voranstehenden Aspekte, dadurch gekennzeichnet, dass das Bearbeitungssystem 1 eine Handhabungsvorrichtung 6, 7 aufweist, die zum gleichzeitigen Austausch von Brillengläsern 2 an zwei Brillenglashalterungen bzw. Spannfuttern 2D einer Bearbeitungsstation 3, insbesondere Polierstation 3D, ausgebildet ist.
10. Bearbeitungssystem nach einem der voranstehenden Aspekte, dadurch gekennzeichnet, dass das Bearbeitungssystem 1 eine Handhabungsvorrichtung 7 mit mehreren Halteeinrichtungen 7D zum Halten von Brillengläsern 2 aufweist, wobei die Halteeinrichtungen 7D an verschiedenen Armen 7C angeordnet und/oder unabhängig voneinander bewegbar sind.
11. Bearbeitungssystem nach einem der voranstehenden Aspekte, dadurch gekennzeichnet, dass das Bearbeitungssystem 1 eine Handhabungsvorrichtung 7 mit zwei Saugern und zwei Greifern zum Halten von Brillengläsern 2 aufweist.
12. Bearbeitungssystem nach einem der voranstehenden Aspekte, dadurch gekennzeichnet, dass das Bearbeitungssystem 1 eine Handhabungsvorrichtung 8 aufweist, die zum gleichzeitigen Austausch von Werkzeugen 15, insbesondere Polierwerkzeugen, an zwei Werkzeughalterungen einer Bearbeitungsstation 3, insbesondere Polierstation 3D, ausgebildet ist.
13. Bearbeitungssystem nach einem der voranstehenden Aspekte, dadurch gekennzeichnet, dass das Bearbeitungssystem 1 eine Handhabungsvorrichtung 8 mit mehreren Halteeinrichtungen 8D zum Halten von Werkzeugen 15 aufweist, wobei die Halteeinrichtungen 8D an verschiedenen Armen 8C angeordnet und/oder unabhängig voneinander bewegbar sind.
14. Bearbeitungssystem nach einem der voranstehenden Aspekte, dadurch gekennzeichnet, dass das Bearbeitungssystem 1 eine Handhabungsvorrichtung 8 zum Austausch von Werkzeugen 15 aufweist, die zwei Polierstationen 3D zugeordnet und/oder zwischen zwei Polierstationen 3D angeordnet und/oder verfahrbar ist.
15. Bearbeitungssystem nach einem der voranstehenden Aspekte, dadurch gekennzeichnet, dass das Bearbeitungssystem 1 zwei Polierstationen 3D aufweist, denen ein gemeinsames Werkzeugmagazin 14 für Polierwerkzeuge zugeordnet ist.
16. Bearbeitungssystem nach einem der voranstehenden Aspekte, dadurch gekennzeichnet, dass das Bearbeitungssystem 1 einen Sensor 4F, insbesondere Taster, aufweist, der dazu ausgebildet ist, festzustellen, ob sich in einem mit dem Transportsystem 4 transportierten Transportbehälter 5 ein oder mehrere Brillengläser 2 befinden.
17. Bearbeitungssystem 1 zur Bearbeitung von Brillengläsern 2, vorzugsweise nach einem der voranstehenden Aspekte,
   mit mehreren Bearbeitungsstationen 3, insbesondere einer Frässtation 3A, einer Drehstation 3B, einer Polierstation 3D, einer Reinigungsstation 3E und/oder einer Signierstation 3C, und
   mit einer Bedienvorrichtung 12 mit einer Anzeigeeinrichtung 12A und einer Eingabeeinrichtung 12B,
   **dadurch gekennzeichnet**,
   dass die Bedienvorrichtung 12 an einem Arm 13 angeordnet und auf entgegengesetzte Seiten des Bearbeitungssystems 1 und/oder vor verschiedene Bearbeitungsstationen 3 bewegbar ist, und/oder
   dass mittels der Anzeigeeinrichtung 12A ein Steuermenü anzeigbar ist und die Anzeigeeinrichtung 12A dazu ausgebildet ist, abhängig von einer relativen Position und/oder Ausrichtung der Bedienvorrichtung 12 bezüglich der Bearbeitungsstationen 3 unterschiedliche Steuermenüs anzuzeigen.
18. Bearbeitungssystem nach Aspekt 17, dadurch gekennzeichnet, dass der Arm 13 und die Bedienvorrichtung 12 außerhalb einer Verkleidung 10 des Bearbeitungssystems 1 angeordnet sind.
19. Bearbeitungssystem nach Aspekt 17 oder 18, dadurch gekennzeichnet, dass der Arm 13 um eine vertikale Achse A schwenkbar ist.
20. Bearbeitungssystem nach einem der Aspekte 17 bis 19, dadurch gekennzeichnet, dass der Arm 13 mehrere gelenkig miteinander verbundene Abschnitte 13A, 13B aufweist.
21. Bearbeitungssystem nach einem der Aspekte 17 bis 20, dadurch gekennzeichnet, dass die Bedienvorrichtung 12 zur individuellen Steuerung der jeweils nächstliegenden Bearbeitungsstation/en 3 ausgebildet ist bzw. automatisch umschaltet.
22. Verfahren zum Bearbeiten von Brillengläsern 2 in einem Bearbeitungssystem 1 mit mehreren Bearbeitungsstationen 3 und einem gemeinsamen Grundgestell 9 und/oder einer gemeinsamen Verkleidung 10 für die Bearbeitungsstationen 3,
   wobei ein Brillenglas 2 nacheinander in verschiedenen Bearbeitungsstationen 3 des Bearbeitungssystems 1 bearbeitet wird,
   **dadurch gekennzeichnet**,
   dass verschiedene Brillengläser 2 gleichzeitig in verschiedenen Bearbeitungsstationen 3 bearbeitet werden, während mindestens ein weiteres Brillenglas 2 weiter transportiert und/oder zu einer Bearbeitungsstation 3 bewegt wird, und/oder
   dass verschiedene Brillengläser 2 gleichzeitig in verschiedenen Bearbeitungsstationen 3 gefräst und drehend bearbeitet werden, und/oder
   dass verschiedene Brillengläser 2 gleichzeitig in verschiedenen Bearbeitungsstationen 3 flachseitig formgebend bearbeitet und poliert werden, und/oder
   dass eine Handhabungsvorrichtung 6 das Brillenglas 2 nach einem Fräsen in einer Frässtation 3A von der Frässtation 3A unmittelbar an eine nachgeordnete Drehstation 3B zur drehenden Bearbeitung übergibt, und/oder
   dass das Brillenglas 2 zur Bearbeitung aus einem Transportbehälter 5 entnommen wird, in verschiedenen Bearbeitungsstationen 3 bearbeitet wird und anschließend wieder in den Transportbehälter 5 abgelegt wird, wobei der Transportbehälter 5 zwischen der Entnahme und dem Ablegen des Brillenglases 2 entlang der Bearbeitungsstationen 3 weiter transportiert wird.
23. Verfahren nach Aspekt 22, dadurch gekennzeichnet, dass unmittelbar nach der Entnahme des Brillenglases 2 aus einer Bearbeitungsstation 3 mit einer Handhabungsvorrichtung 6, 7 ein von der Handhabungsvorrichtung 6, 7 bereits bevorratetes weiteres Brillenglas 2 an dieselbe Bearbeitungsstation 3 übergeben wird.
24. Verfahren nach Aspekt 22 oder 23, dadurch gekennzeichnet, dass das Brillenglas 2 mit derselben Handhabungsvorrichtung 6, 7 aus dem Transportbehälter 5 entnommen, an eine der Bearbeitungsstationen 3 und zwischen den Bearbeitungsstationen 3 übergeben, aus einer der Bearbeitungsstationen 3 entnommen und wieder in den Transportbehälter 5 abgelegt wird.
25. Verfahren nach einem der Aspekte 22 bis 24, dadurch gekennzeichnet, dass das Bearbeitungssystem 1 gemäß einem der Aspekte 1 bis 21 ausgebildet ist.

### Bezugszeichenliste:

- 1: Bearbeitungssystem
- 1A: Teil/Bearbeitungsseite
- 1B: Teil/Polierseite
- 2: Brillenglas
- 2A: Blockstück
- 2B: Blockmaterial
- 2C: Schutzschicht
- 2D: Spannfutter
- 3: Bearbeitungsstation
- 3A: Frässtation
- 3B: Drehstation
- 3C: Signierstation
- 3D: Polierstation
- 3E: Reinigungsstation
- 4: Transportsystem
- 4A: Transportvorrichtung
- 4B: Wechseleinrichtung
- 4C: Stopper
- 4D: Speichereinrichtung
- 4E: Erfassungseinrichtung
- 4F: Sensor
- 5: Transportbehälter
- 6: Handhabungsvorrichtung für Brillengläser (Bearbeitungsseite)
- 6A: Führung/Längsführung
- 6B: Führung/Querführung
- 6C: Stelleinrichtung
- 6D: Schwenkkopf
- 6E: Halteeinrichtung
- 7: Handhabungsvorrichtung für Brillengläser (Polierseite)
- 7A: Führung/Längsführung
- 7B: Führung/Vertikalführung
- 7C: Arm
- 7D: Halteeinrichtung
- 7E: Träger
- 8: Handhabungsvorrichtung für Werkzeuge
- 8A: Führung/Längsführung
- 8B: Führung/Vertikalführung
- 8C: Arm
- 8D: Halteeinrichtung
- 8E: Träger
- 9: Grundgestell
- 9A: Teilgestell
- 10: Verkleidung
- 10A: Platte
- 11: Steuereinrichtung
- 11A: Schaltschrank
- 11B: Bedienvorrichtung
- 12: Bedienvorrichtung
- 12A: Anzeigeeinrichtung
- 12B: Eingabeeinrichtung
- 12C: Notausschalter
- 13: Arm (Bedienvorrichtung)
- 13A: erster Abschnitt
- 13B: zweiter Abschnitt
- 14: Werkzeugmagazin
- 14A: Welle
- 14B: Trommel
- 14C: Ausnehmung
- 14D: Segment
- 15: Werkzeug
- 16: Transfersystem
- 17: Düse
- 18: Handhabungsvorrichtung (Signierstation)
- 18A: Führung/Querführung
- 18B: Führung/Vertikalführung
- 18C: Halteeinrichtung
- 19: Waschbehälter
- 20: Versorgungssystem
- 20A: Leitung
- 21: Laser

- E: Eingang
- A: Ausgang
- B1: Bewegungsachse
- B2: Bewegungsachse
- B3: Bewegungsachse
- B4: Bewegungsachse
- B5: Bewegungsachse
- B6: Bewegungsachse
- B7: Bewegungsachse
- B8: Bewegungsachse
- B9: Bewegungsachse
- B10: Bewegungsachse
- H: Hauptförderrichtung
- L: Längsachse
- R1: Transportrichtung
- R2: Transportrichtung
- S: Schwenkachse
- X: Achse
- Y: Achse
- Z: Achse

## Patentansprüche

1. Bearbeitungssystem (1) zur Bearbeitung von Brillengläsern (2),
mit mehreren Bearbeitungsstationen (3), insbesondere einer Frässtation (3A), einer Drehstation (3B), einer Polierstation (3D), einer Reinigungsstation (3E) und/oder einer Signierstation (3C),
mit einem Transportsystem (4) zum Transport der Brillengläser (2) bzw. von Transportbehältern (5) für die Brillengläser (2) innerhalb des Bearbeitungssystems (1), und
mit einem gemeinsamen Grundgestell (9) und/oder einer gemeinsamen Verkleidung (10) für die Bearbeitungsstationen (3),
**dadurch gekennzeichnet,**
**dass** das Bearbeitungssystem (1) dazu ausgebildet ist, verschiedene Brillengläser (2) gleichzeitig in verschiedenen Bearbeitungsstationen (3), ausgewählt aus der Gruppe bestehend aus der Frässtation (3A), der Drehstation (3B) und der Polierstation (3D), zu bearbeiten, und/oder
**dass** das Transportsystem (4) parallel zueinander verlaufende und vorzugsweise unmittelbar benachbarte Transportabschnitte bzw. Transportvorrichtungen (4A) aufweist, und/oder
**dass** das Grundgestell (9) mehrere vor Ort miteinander verbindbare Teilgestelle (9A) aufweist, die jeweils ein Grundgestell (9) für eine oder mehrere Bearbeitungsstationen (3) bilden.

2. Bearbeitungssystem nach Anspruch 1, **dadurch gekennzeichnet, dass** die Transportabschnitte bzw. Transportvorrichtungen (4A) des Transportsystems (4) entgegengesetzte Transportrichtungen (R1, R2) aufweisen und/oder dass ein Eingang (E) und ein Ausgang (A) des Transportsystems (4) unmittelbar zueinander benachbart und/oder auf der gleichen Seite des Bearbeitungssystems (1) angeordnet sind.

3. Bearbeitungssystem nach Anspruch 1 oder 2, **dadurch gekennzeichnet, dass** die Bearbeitungsstationen (3) zumindest teilweise seitlich, insbesondere auf voneinander abgewandten Seiten, des Transportsystems (4) angeordnet sind.

4. Bearbeitungssystem nach einem der voranstehenden Ansprüche, **dadurch gekennzeichnet, dass** das Bearbeitungssystem (1) eine Handhabungsvorrichtung (6) aufweist, die dem Halten von Brillengläsern (2) dient und eine zumindest teilweise oberhalb des Transportsystems (4) und/oder schräg zur Vertikalen verlaufende lineare Bewegungsachse (B2) aufweist.

5. Bearbeitungssystem nach einem der voranstehenden Ansprüche, **dadurch gekennzeichnet, dass** das Bearbeitungssystem (1) mehrere unabhängige Handhabungsvorrichtungen (6-8) aufweist, die insbesondere oberhalb des Transportsystems (4) angeordnet sind.

6. Bearbeitungssystem nach einem der voranstehenden Ansprüche, **dadurch gekennzeichnet, dass** das Bearbeitungssystem (1) eine Handhabungsvorrichtung (6) mit zwei Halteeinrichtungen (6E) an einem Schwenkkopf (6D) zum Austausch eines Brillenglases (2) an einer Bearbeitungsstation (3) aufweist.

7. Bearbeitungssystem nach einem der voranstehenden Ansprüche, **dadurch gekennzeichnet, dass** das Bearbeitungssystem (1) eine Handhabungsvorrichtung (6, 7) aufweist, die zur Übergabe von Brillengläsern (2) zwischen dem Transportsystem (4) und zwei Bearbeitungsstationen (3) ausgebildet ist.

8. Bearbeitungssystem nach einem der voranstehenden Ansprüche, **dadurch gekennzeichnet, dass** das Bearbeitungssystem (1) eine Handhabungsvorrichtung (6, 7) aufweist, die zum gleichzeitigen Austausch von Brillengläsern (2) an zwei Brillenglashalterungen bzw. Spannfuttern (2D) einer Bearbeitungsstation (3), insbesondere Polierstation (3D), ausgebildet ist.

9. Bearbeitungssystem nach einem der voranstehenden Ansprüche, **dadurch gekennzeichnet, dass** das Bearbeitungssystem (1) eine Handhabungsvorrichtung (7) mit mehreren Halteeinrichtungen (7D) zum Halten von Brillengläsern (2) aufweist, wobei die Halteeinrichtungen (7D) an verschiedenen Armen (7C) angeordnet und/oder unabhängig voneinander bewegbar sind, und/oder dass das Bearbeitungssystem (1) eine Handhabungsvorrichtung (7) mit zwei Saugern und zwei Greifern zum Halten von Brillengläsern (2) aufweist.

10. Bearbeitungssystem nach einem der voranstehenden Ansprüche, **dadurch gekennzeichnet, dass** das Bearbeitungssystem (1) eine Handhabungsvorrichtung (8) aufweist, die zum gleichzeitigen Austausch von Werkzeugen (15), insbesondere Polierwerkzeugen, an zwei Werkzeughalterungen einer Bearbeitungsstation (3), insbesondere Polierstation (3D), ausgebildet ist.

11. Bearbeitungssystem nach einem der voranstehenden Ansprüche, **dadurch gekennzeichnet, dass** das Bearbeitungssystem (1) eine Handhabungsvorrichtung (8) mit mehreren Halteeinrichtungen (8D) zum Halten von Werkzeugen (15) aufweist, wobei die Halteeinrichtungen (8D) an verschiedenen Armen (8C) angeordnet und/oder unabhängig voneinander bewegbar sind.

12. Bearbeitungssystem nach einem der voranstehenden Ansprüche, **dadurch gekennzeichnet, dass** das Bearbeitungssystem (1) eine Handhabungsvorrichtung (8) zum Austausch von Werkzeugen (15) aufweist, die zwei Polierstationen (3D) zugeordnet und/oder zwischen zwei Polierstationen (3D) angeordnet und/oder verfahrbar ist.

13. Verfahren zum Bearbeiten von Brillengläsern (2) in einem vorzugsweise nach einem der voranstehenden Ansprüche ausgebildeten Bearbeitungssystem (1) mit mehreren Bearbeitungsstationen (3) und einem gemeinsamen Grundgestell (9) und/oder einer gemeinsamen Verkleidung (10) für die Bearbeitungsstationen (3),
wobei ein Brillenglas (2) nacheinander in verschiedenen Bearbeitungsstationen (3) des Bearbeitungssystems (1) bearbeitet wird,
**dadurch gekennzeichnet,**
**dass** verschiedene Brillengläser (2) gleichzeitig in verschiedenen Bearbeitungsstationen (3) bearbeitet werden, während mindestens ein weiteres Brillenglas (2) weiter transportiert und/oder zu einer Bearbeitungsstation (3) bewegt wird, und/oder
**dass** verschiedene Brillengläser (2) gleichzeitig in verschiedenen Bearbeitungsstationen (3) gefräst und drehend bearbeitet werden, und/oder
**dass** verschiedene Brillengläser (2) gleichzeitig in verschiedenen Bearbeitungsstationen (3) flachseitig formgebend bearbeitet und poliert werden, und/oder
**dass** das Brillenglas (2) zur Bearbeitung aus einem Transportbehälter (5) entnommen wird, in verschiedenen Bearbeitungsstationen (3) bearbeitet wird und anschließend wieder in den Transportbehälter (5) abgelegt wird, wobei der Transportbehälter (5) zwischen der Entnahme und dem Ablegen des Brillenglases (2) entlang der Bearbeitungsstationen (3) weiter transportiert wird.

14. Verfahren nach Anspruch 13, **dadurch gekennzeichnet, dass** unmittelbar nach der Entnahme des Brillenglases (2) aus einer Bearbeitungsstation (3) mit einer Handhabungsvorrichtung (6, 7) ein von der Handhabungsvorrichtung (6, 7) bereits bevorratetes weiteres Brillenglas (2) an dieselbe Bearbeitungsstation (3) übergeben wird.

15. Verfahren nach Anspruch 13 oder 14, **dadurch gekennzeichnet, dass** das Brillenglas (2) mit derselben Handhabungsvorrichtung (6, 7) aus dem Transportbehälter (5) entnommen, an eine der Bearbeitungsstationen (3) und zwischen den Bearbeitungsstationen (3) übergeben, aus einer der Bearbeitungsstationen (3) entnommen und wieder in den Transportbehälter (5) abgelegt wird.
